# EUROPEAN PATENT SPECIFICATION

(11) **EP 1 727 048 B1**
(45) Date of publication and mention of the grant of the patent: **01.09.2010**
(21) Application number: 05720794.6
(22) Date of filing: 15.03.2005
(51) Int. Cl.: G06F 11/00

(54) **TERMINAL DEVICE FOR UPDATING COMPUTER PROGRAM AND UPDATE METHOD**
ENDGERÄT ZUM AKTUALISIEREN EINES COMPUTERPROGRAMMS UND AKTUALISIERUNGSVERFAHRENS
TERMINAL POUR LA MISE A JOUR DU PROGRAMME INFORMATIQUE ET METHODE DE MISE A JOUR

(30) Priority: 16.03.2004 JP 2004074740
(43) Date of publication of application: 29.11.2006
(73) Proprietor: Panasonic Corporation, Kadoma-shi Osaka 571-8501 (JP)
(72) Inventor: NAKANO, Toshihisa, c/o Matsushita El. Ind. Co.,Ltd, Chuo-ku, Osaka-shi, Osaka 540-6319 (JP); OHMORI, Motoji, c/o Matsushita El. Ind. Co., Ltd., Chuo-ku, Osaka-shi, Osaka 540-6319 (JP)
(74) Representative: Grünecker, Kinkeldey, Stockmair & Schwanhäusser Anwaltssozietät
(86) International application number: PCT/JP2005/004537
(87) International publication number: WO 2005/088452

(56) References cited:
- WO-A-00/63916
- WO-A-98/53619
- JP-A- 2002 244 877
- JP-A- 2003 058 338
- JP-A- 2004 062 581
- US-A1- 2001 020 295
- US-A1- 2004 031 029

## Description

### Technical Field

The present invention relates to an updating technology for updating a computer program.

### Background Art

Developing companies put continuous effort in improving computer programs used in personal computers and DVD players. When a defect is found or a new function is added in a computer program, developing companies distribute a program for update (hereinafter "update program") to users using a CD-ROM or the Internet.
However in principle, actual update of a computer program is left up to each user having an apparatus. Therefore there are cases where, even when a crucial defect is found in the computer program, a user does not update the computer program stored in the apparatus even though an update program has been distributed to the user.

When a content of a computer program is of a high protection value, it is particularly necessary to update the computer program without fail, and to protect the content from invalid use that is attributable to fraudulent use of the computer program that includes defects.
To counter such a problem, patent reference 1 has already proposed a technology of performing automatic update of a computer program in a terminal apparatus with use of a version-up management server connected to the terminal apparatus via a network. According to the disclosed technology, the version-up management server stores therein a file for update (hereinafter "update file") of the computer program, and its latest version information. The terminal apparatus, upon every activation, transmits version information of a computer program stored in the terminal apparatus to the version-up management server. In response, the version-up management server compares the received version information with the latest version information stored in the version-up management server, and transmits an update file to the terminal apparatus as necessary. The terminal apparatus then updates the computer program based on the received update file.
WO 98/53619 describes a method for transmitting software data over a digital transmission link to designated devices in a base station. Data is written onto a backup memory included in each device in the background while the associated device may be working. The newly loaded data is copied from the backup memory to run-time memory when the device is idle.
US 2001/020295 A1 describes an optical recording medium that can prevent illegal use of software and also simplify an updating process of the software. The optical recording medium stores a transmission program and a software update program.
US 2004/0031029 A1 relates to a computer-implemented method for updating a plurality of software components disposed on a plurality of networked devices. The method includes ascertaining from a database first update parameters associated with a first networked device of the plurality of network devices.
WO 00/63916 describes a system for updating content stored on a portable storage medium. Upon input of a portable storage medium into a machine by a user, the content stored on the portable storage medium is read. Subsequently, a separate storage medium is accessed and content is received therefrom. The content from the separate storage medium is an update of the content of the portable storage medium.
Patent reference 1:
Japanese Patent Application Publication No. 2002-259128
Non-patent reference 1:
" Secure Electronic Commerce: Building the Infrastructure for Digital Signatures and Encryption" written by Warwick Ford and Michael Baum, Pearson Education, December 24, 1997.

### Disclosure of the Invention

### Problem to be solved by the Invention

However, according to the mentioned update method, when update processing begins at the time when a user is about to play back a content with use of a computer program, the user has to wait till the update processing ends, which is inconvenient for the user.
So as to counter this problem, the object of the present invention is to provide a terminal apparatus, an update method, and an update program, which are able to update a computer program without fail while balancing between the protection of a valuable content and usability for users.

### Means to Solve the Problem

The object of the present invention is solved by the subject matter of the independent claims. Preferred embodiments are subject matter of the dependent claims.

### Advantageous Effect of the Invention

With the stated structure, when the suitability judgment unit judges in the negative but the value judgment unit judges in the affirmative, the update unit updates the computer program prior to the content usage. As a result, when the value of the content to be used is high, the content usage apparatus is able to securely use the content after resolving the defects of the computer program.

Here, the value of a content includes a commercial value and a technical value of the content. In addition, the suitability judgment unit judges in the affirmative when the computer program is of the latest version. Alternatively, the suitability judgment unit judges in the affirmative when the computer program indicates a generation that is the same as or newer than the generation indicated by the version designated by the content.

A structure is possible in which, when the suitability judgment unit judges in the negative and the value judgment unit judges in the negative, the update unit updates the computer program stored in the storage unit to a suitable computer program after the content usage or at a idle time.
With the stated structure, when the computer program is not suitable and the value of the content does not satisfy a certain standard, the update control unit prioritizes usage of the content over the update processing. Therefore, the user does not have to wait till the finish of the update, and so convenience of the user improves.

Furthermore, since the update unit updates the computer program after the content usage or at a idle time, the content usage apparatus is able to assuredly update the computer program while improving convenience of a user.
A structure is also possible in which the value judgment unit obtains a created time at which the content was created as information representing the value, and judges in the affirmative when the created time is within a predetermined period from a current time, and in the negative when the created time is more than a predetermined period from the current time.

Since it should not be long after sales of a new content, and so its sales has a potential of increasing towards the future. Therefore, a new content is considered as having a high commercial value, and whose protection value is high. With the stated structure, the value judgment unit judges in the affirmative when the created time is within a predetermined period from a current time, and performs update prior to the content usage. As a result, it becomes possible to protect a content having a high protection value.

A structure is also possible in which the value judgment unit obtains a sales amount of the content in a market of the content, as information representing the value, and judges in the affirmative when the obtained sales amount is a predetermined value or above, and in the negative when the obtained sales amount is less than the predetermined value.
For example, in a case where a content is sold on different days according to regions or according to countries, if the sales amount is large in a region where the content has started to be sold earlier, it is expected to have a certain amount of sales in another region where the sales starts later on. Therefore, taking such a case in consideration, the content whose sales amount is high is considered as having a high protection value.

With the stated structure, the value judgment unit judges the value of the content according to the sales amount of the content in the market of the content. Therefore it becomes possible to protect a content whose sales amount is large.
A structure is also possible in which the value judgment unit obtains a quality of the content, as information representing the value, and judges in the affirmative when the obtained quality indicates a predetermined value or above, and in the negative when the obtained quality indicates less than the predetermined value.

For example, a content having a high image quality has a high protection value since various fraudulent usages are prevented by protection the content. For example, when a content having a high image quality (e.g. HD image) is tapped due to defect of the computer program, there are various possibilities of fraudulent usages such as converting the HD image content into low image quality content and use the content after conversion on an apparatus dedicated for playback of a low image quality content.

With the stated structure, the value judgment unit judges the value of the content according to the quality of the content. When the value of the content satisfies a certain standard, the update unit updates the computer program prior to the usage of the content. Accordingly it becomes possible to prioritize the protection of a content having a high quality.
A structure is also possible in which the update unit obtains an update program in which specifics of update of the computer program is defined, and updates the computer program using the obtained update program.

With the stated structure, the update unit is able to accurately update the computer program in accordance with the specifics defined by the update program.
A structure is also possible in which a server apparatus connected to the content usage apparatus via a network pre-stores therein the update program, and the update unit obtains the update program from the server apparatus via the network.

With the stated structure, the update program stored in the server apparatus is subjected to change and addition every time a new version of the update program is developed by a developing company of the computer program. In such situations, with use of the stated structures, the terminal apparatus is able to always obtain the latest version of the update program.
A structure is also possible in which a content recording medium storing therein the content pre-stores the update program, and the update unit obtains the update program by reading the update program from the content recording medium.

With the stated structure, the update unit is able to promptly obtain the update program from the recording medium. Moreover, even when the content usage apparatus is not able to connect to the network, it is still possible to obtain the update program from the recording medium.
A structure is also possible in which a detection unit operable to detect insertion of a content recording medium storing therein the content, wherein the value judgment unit and the suitability judgment unit respectively perform judgment when the detection unit has detected the insertion.

With the stated structure, when the recording medium is inserted, the value judgment unit and the suitability judgment unit respectively perform judgment. Accordingly, when the computer program is not suitable and the value of the content satisfies a certain standard, the content will never be used according to the computer program before updated. This assuredly enables protection of a content having a high value.

A structure is also possible in which the update unit updates the computer program by undergoing a program introduction that at least includes an obtaining process of the update program and an update process of the computer program, and the update unit includes: a disturbance judgment subunit operable to, when the suitability judgment unit judges in the negative and the value judgment unit judges in the negative, judge whether execution of each process constituting the program introduction disturbs an operation of the content usage according to the computer program; a first execution subunit operable to put on hold the process when the disturbance judgment subunit judges in the affirmative, and to execute the process when the disturbance judgment subunit judges in the negative; an ending judgment subunit operable to judge whether the operation of the content usage according to the computer program has ended; and a second execution subunit operable to execute, when the ending judgment subunit judges in the affirmative, processes put on hold if any.

With the stated structure, the first execution subunit puts on hold the process when it is judged that disturbance is to be caused, and the second execution subunit executes the process put on hold when the ending judgment subunit judges that the operation of the content usage has ended. Accordingly, the update unit is able to assuredly update the computer program without causing disturbance to the operation of the computer program.

A structure is also possible in which the program introduction includes either both or one of a verification process of verifying the update program and a decompressing process of decompressing the update program.
The content usage apparatus is able to obtain an authorized update program by the verification process of the validity. Moreover, by compressing the update program in advance, it becomes possible to obtain the update program efficiently.

A structure is also possible in which the disturbance judgment subunit compares a predicted time predicted to be required for the process execution and a predetermined time, and judges in the affirmative when the predicted time is longer than the predetermined time.
Accordingly, a user will not have to postpone execution of the computer program more than the predetermined time for the process execution.

A structure is also possible in which the disturbance judgment subunit compares the predetermined time and the predicted time predicted to be required for execution of the obtaining process.
With the stated structure, a user will not have to postpone execution of the computer program more than the predetermined time for the obtaining process execution.
A structure is also possible in which the disturbance judgment subunit compares the predetermined time and the predicted time predicted to be required for execution of the update process.

With the stated structure, a user will not have to postpone execution of the computer program more than the predetermined time for the update process execution.
A structure is also possible in which the content usage apparatus is equipped with a microprocessor according to which each of the units operates, and calculating an operating ratio of the microprocessor, where the disturbance judgment subunit judges in the affirmative when the operating ratio is a predetermined value or above.

With the stated structure, the computer usage apparatus is able to execute the computer program without being influenced by the program introduction.
A structure is alsopossible inwhich the ending judgment subunit detects ending of processing according to the computer program, and judges in the affirmative when having detected the ending.

With the stated structure, the content usage apparatus is able to execute the computer program without being influenced by the program introduction. Moreover, it is also possible to assuredly update the computer program by executing the program introduction after completion of the processing according to the computer program.
A structure is also possible in which the ending judgment subunit detects an operation for turning off power supply to the content usage apparatus performed by a user, and judges in the affirmative when having detected the operation.

Accordingly, the content usage apparatus is free from the influence of the program introduction during execution of the computer program. In addition, the computer program is assuredly updated after the power supply is turned OFF.
Moreover, the present invention is a server apparatus that provides a value of a content, the server apparatus including: a storage unit operable to store therein the value of the content; a reception unit operable to receive an identifier of the content from a party requesting a judgment result regarding the value of the content; a value judgment unit operable to read the value of the content identified by the received identifier, and judges whether the read value satisfies a certain standard; and a transmission unit operable to transmit a judgment result of the value judgment unit to the requesting party.

With the stated structure, the server apparatus stores the value of the content, judges whether a content identified by the identifier received from a party requesting a judgment result regarding the value of the content satisfies a certain standard, and transmits the judgment result to the requesting party. Accordingly, the requesting party is able to receive the judgment result from the server apparatus, and to thereby control the update of the computer program based on the received judgment result.

In addition, with the stated structure, the server apparatus stores therein the value of the content. Accordingly, in case where the value of the content has changed after sales or distribution of the content, flexible treatment becomes possible.

### Brief Description of the Drawings

FIG. 1 is a structural diagram showing a structure of an update system 10.
FIG.2 is a structural diagram showing a structure of a program and data stored in DVD500a, DVD500b, and DVD500c.
FIG.3 is a diagram showing a structure of a server apparatus 400.
FIG.4 shows one example of data stored in a program storage unit 415.
FIG.5 shows details of a program update table 420.
FIG.6 is a diagram showing a structure of an authentication unit 402.
FIG.7 is a diagram showing a structure of a terminal apparatus 100.
FIG.8 shows one example of a program and data stored in a main storage unit 110.
FIG. 9 shows one example of a program and data stored in a hard disk unit 111.
FIG.10 is a diagram showing a structure of an authentication unit 102.
FIG.11 shows one example of a screen displayed on a monitor 120 at the time of activation of the terminal apparatus 100.
FIG.12 is a diagram showing a structure of a time management unit 112.
FIG.13 is a flowchart showing an operation of the terminal apparatus 100.
FIG.14 is a flowchart showing an operation of the terminal apparatus 100, which continues from FIG.13.
FIG.15 is a flowchart showing an operation of the terminal apparatus 100, which continues from FIG.13.
FIG.16 is a flowchart showing an operation of the terminal apparatus 100, which continues from FIG.13.
FIG.17 is a flowchart showing an operation of the terminal apparatus 100, which continues from FIG.13.
FIG.18 is a flowchart showing an operation of the terminal apparatus 100, which continues from FIG.13.
FIG.19 is a flowchart showing an operation of the terminal apparatus 100, which continues from FIG.13.
FIG.20 is a flowchart showing an operation of the terminal apparatus 100, which continues from FIG.13.
FIG.21 is a flowchart showing an operation of the terminal apparatus 100, which continues from FIG.13.
FIG.22 is a flowchart showing an operation of the terminal apparatus 100, which continues from FIG.13.
FIG.23 is a flowchart showing an operation of the terminal apparatus 100, which continues from FIG.13.

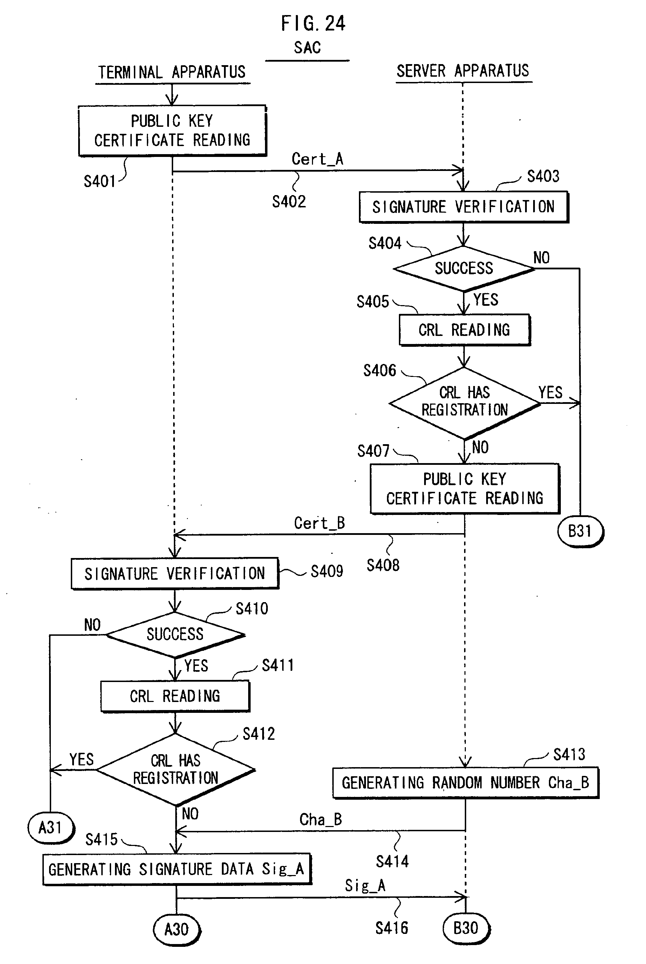

FIG. 24 is a flowchart showing an operation for SAC establishment between the terminal apparatus 100 and the server apparatus 400.
FIG. 25 is a flowchart showing an operation for SAC establishment between the terminal apparatus 100 and the server apparatus 400, which continues from FIG.24.
FIG.26 is a structural diagram showing a structure of an update system 11.
FIG. 27 is a structural diagram showing a structure of a program and data stored in DVD1500a, DVD1500b, and DVD1500c.
FIG.28 is a block diagram showing a structure of a server apparatus 1400.
FIG.29 shows details of a program update table 1420.
FIG.30 is a block diagram showing a structure of a terminal apparatus 1100.
FIG.31 is a flowchart showing an operation of the terminal apparatus 1100.
FIG.32 is a flowchart showing an operation of the terminal apparatus 1100, which continues from FIG.31.
FIG.33 is a flowchart showing an operation of the terminal apparatus 1100, which continues from FIG.31.
FIG.34 is a flowchart showing an operation of the terminal apparatus 1100, which continues from FIG.31.
FIG.35 shows details of a content table 1470.

### Explanation of Reference Signs

- 10: update system
- 20: Internet
- 100: terminal apparatus
- 101: communication encryption/decryption unit
- 102: authentication unit
- 103: communication unit
- 104: input/output unit
- 105: external operation reception unit
- 106: update control unit
- 107: main control unit
- 110: main storage unit
- 111: hard disk unit
- 112: time management unit
- 113: video generating unit
- 115: power source control unit
- 116: power supply unit
- 120: monitor
- 400: server apparatus
- 401: communication encryption/decryption unit
- 402: authentication unit
- 403: communication unit
- 405: input unit
- 407: control unit
- 410: information storage unit
- 412: content storage unit
- 413: display unit
- 415: program storage unit
- 500a: DVD
- 500b: DVD
- 500c: DVD
- 600: certificate management apparatus
- 1100: terminal apparatus
- 1400: server apparatus

### Best Mode for Carrying Out the Invention

### 1. First Embodiment

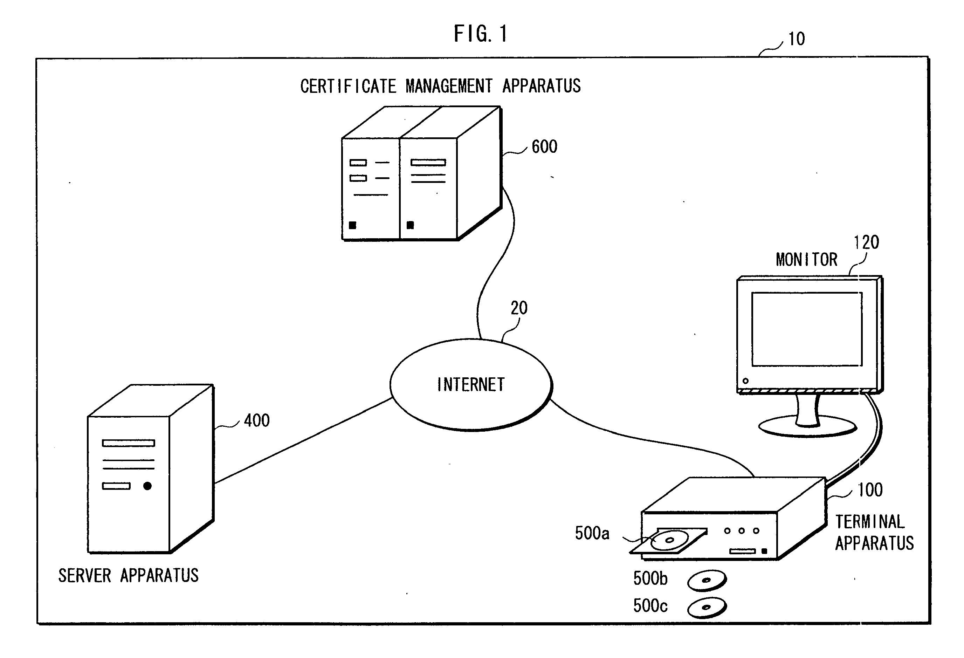

The following describes an update system 10 as one embodiment relating to the present invention.
1.1 Structure of update system 10
As FIG.1 shows, the update system 10 is composed of a terminal apparatus 100, a server apparatus 400, and a certificate management apparatus 600, which are connected to each other via the Internet.

The terminal apparatus 100 stores therein a content playback program including a procedure for playing back a content composed of videos and sounds, and version information indicating a generation of the program.
The content playback program undergoes repeated attempts for improvement by a developing company. Every time any improvement is made, the developing company distributes an update program for updating the content playback program from an old generation to a new generation. In this way, during a time period since a content playback program was developed up to date when the latest version of the content playback program was developed, there should be several generations of the same content playback program. Version information is used to identify the content playback program of each generation.

When a DVD (digital versatile disc) storing the content is inserted, the terminal apparatus 100 plays back the content according to the content playback program. The terminal apparatus 100 is connected to the server apparatus 400 via the Internet 20. The server apparatus 400 stores therein an update program used for updating the content playback program to a new generation. Upon request by the terminal apparatus 100, the server apparatus 400 transmits an update program to the terminal apparatus 100.

The terminal apparatus 100 updates the content playback program stored therein by undergoing a series of downloading of an update program, verification of the validity of the update program, and installment of the update program.
The described series of downloading, verification, and installment of an update program is referred to as "update" in the present invention. However depending on a party from which the update program is obtained, an update may additionally contain a decryption process of the already obtained update program, and a decompression process of a compressed update program. Moreover, in some cases, the update does not include a downloading process.

The terminal apparatus 100 judges whether to perform update by means of the update program.
When judging affirmatively, the terminal apparatus 100 calculates a time required for the downloading (download time).
The terminal apparatus 100 stores therein a download allowed time, a verification allowed time, and an installment allowed time, which have been set by a user or a manufacturing company of the terminal apparatus 100. The terminal apparatus 100 compares the calculated download time with the download allowed time, and executes the downloading of the update program when the calculated download time is judged to be no greater than the download allowed time, and puts on hold the processing from the downloading of the update program when the calculated download time is judged to be greater than the download allowed time.

The validity verification processing is also performed by first comparing a calculated time required for verification and the verification allowed time, so as to decide whether to perform the verification. Likewise, the installment processing is performed by first comparing a calculated time required for installment and the installment allowed time, so as to decide whether to perform the installment.
Once any processing is put on hold, the processing is executed for example after a user has finished playing back the corresponding content.
1.2 DVD500a, DVD500b, and DVD500c
There are three types of DVD inserted to the terminal apparatus 100, namely, DVD500a, DVD500b, and DVD500c, which are respectively a portable optical disc medium able to record a large amount of data.

According to the type of DVD inserted to the terminal apparatus 100, an obtaining method of an update program regarding a content playback program stored in the terminal apparatus 100 changes.
When DVD500a is inserted, the terminal apparatus 100 transmits version information of the content playback program stored in the terminal apparatus 100. In response, the server apparatus 400 compares the received version information with the latest version information that the server apparatus 400 stores therein. When the latest version information stored in the server apparatus 400 is judged to be newer, the server apparatus 400 transmits the update program, and the terminal apparatus 100 receives the update program.

When DVD500b is inserted, the terminal apparatus 100 compares version information of the content playback program stored in the terminal apparatus 100, with version information 505b of the content playback program, where the version information 505b having been stored in DVD 500b. When the version information 505b is newer, the terminal apparatus 100 obtains the update program from the server apparatus 400.

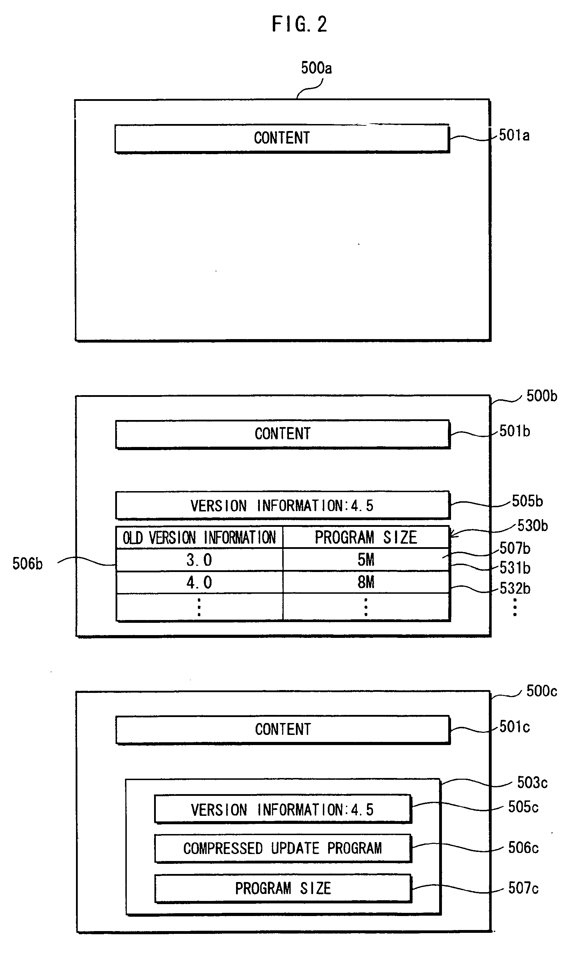

When DVU500c is inserted, the terminal apparatus 100 compares, with the version information 505c stored in DVD500c, version information 144 of the content playback program that the terminal apparatus 100 stores therein. When the version information 505c is newer, the terminal apparatus 100 obtains the update program from DVD500c.
As follows, the structure of programs and data respectively stored in DVD500a, DVD500b, and DVD500c are detailed with reference to FIG.2.

DVD500a for example stores a content 501a such as a movie.
DVD500b stores a content 501b, version information 505b, and a program size table 530b.
The version information 505b indicates a generation of the content playback program suitable for playing back the content 501b. Here, the version information 505b is assumed to be the same as the latest version information stored in the server apparatus 400.

The program size table 530b is constituted by a plurality of pieces of program size information 531b, 532b, .... Each piece of program size information is made of old version information and a program size. The program size indicates a size of an update program having been encrypted and compressed ("encrypted compressed update program"). The encrypted compressed update program is generated by compressing and encrypting an update program including a procedure of updating a content playback program from a generation indicated by the old version information to a generation indicated by the version information 505b.

DVD500c stores therein a content 501c and a program file 503c. The program file 503c includes version information 505c, a compressed update program 506c, and a program size 507c. The version information 505c indicates a generation of the content playback program suitable for playback of the content 501c. Here, the version information 505c is assumed to be identical to the latest version information stored in the server apparatus 400.

The compressed update program 506c is generated by compressing an update program. The update program is suitable for updating the content playback program stored in the terminal apparatus 100 to the generation indicated by the version information 505c. The program size 507c indicates a size of the compressed update program.
Although not shown in the drawings, DVD500a, DVD500b, and DVD500c respectively store therein a program identifier identifying a content playback program for playing back a content that it (DVD500a, DVD500b, and DVD500c) stores therein.

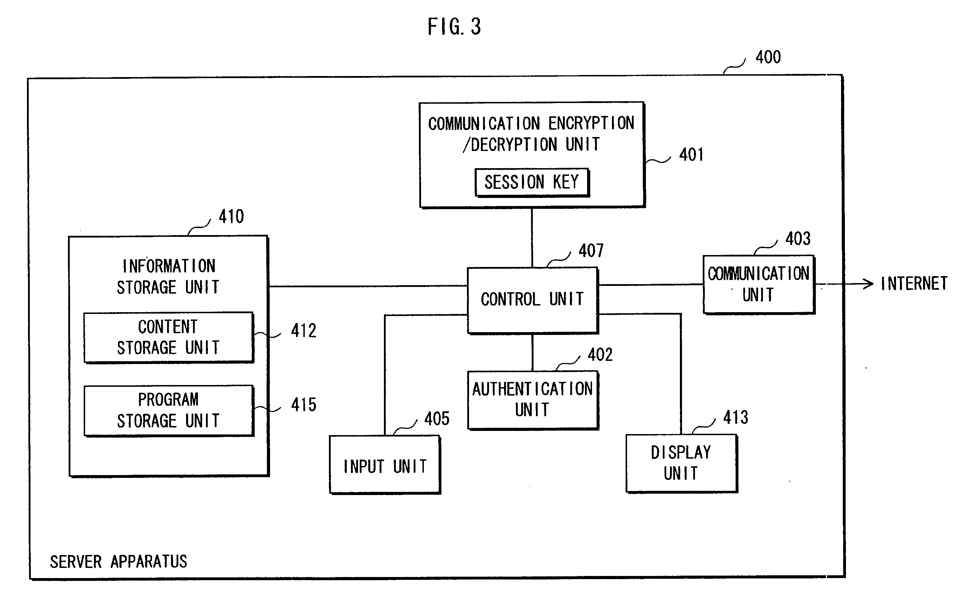

1.3 Server apparatus 400
As FIG.3 shows, the server apparatus 400 is made up of a communication encryption/decryption unit 401, an authentication unit 402, a communication unit 403, an input unit 405, a control unit 407, an information storage unit 410, and a display unit 413.
(1) Information storage unit 410
The information storage unit 410 is structured by a hard disk unit, and includes a content storage unit 412 and a program storage unit 415.

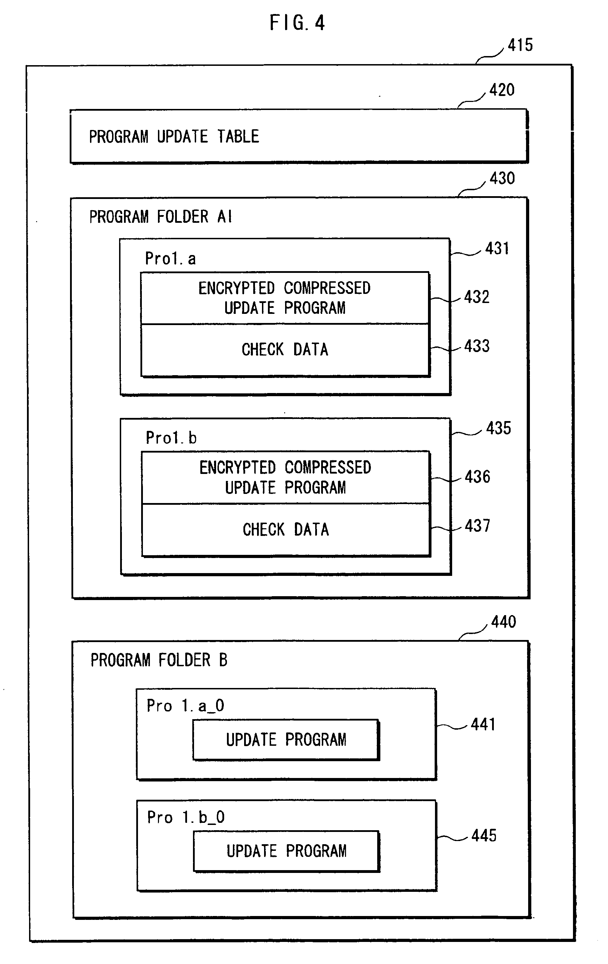

The content storage unit 412 stores a video content such as a movie.
The program storage unit 415 for example stores a program update table 420, a program folder AI430, and a program folder B440, as FIG.4 shows.
The program folder for example stores update programs 441 and 445, which have been created by a developing company of computer programs.

The program folder AI430 for example stores program files 431 and 435. The program file 431 is structured by an encrypted compressed update program 432 and check data 433.
The encrypted compressed update program 432 is generated by performing an encryption algorithm E1 to a compressed update program using a program key, where the compressed update program has been generated by performing a compression algorithm P on the update program 441. The encryption algorithm E1 is for example in accordance with a DES (data encryption standard). The DES is a publicly known technology, and so the explanation thereof is omitted.

The check data 433 is composed of a hash value of 160 bytes, which is generated by substituting the encrypted compressed update program 432 into a hash function. The hash function is for example a SHA-1. The hash function SHA-1 is a publicly known technology, and so the explanation thereof is omitted. Note that the signature generation method described above is a mere example, and other methods may be adopted.
The program file 435 is structured by an encrypted compressed update program 436 and check data 437 generated using the update program 445.

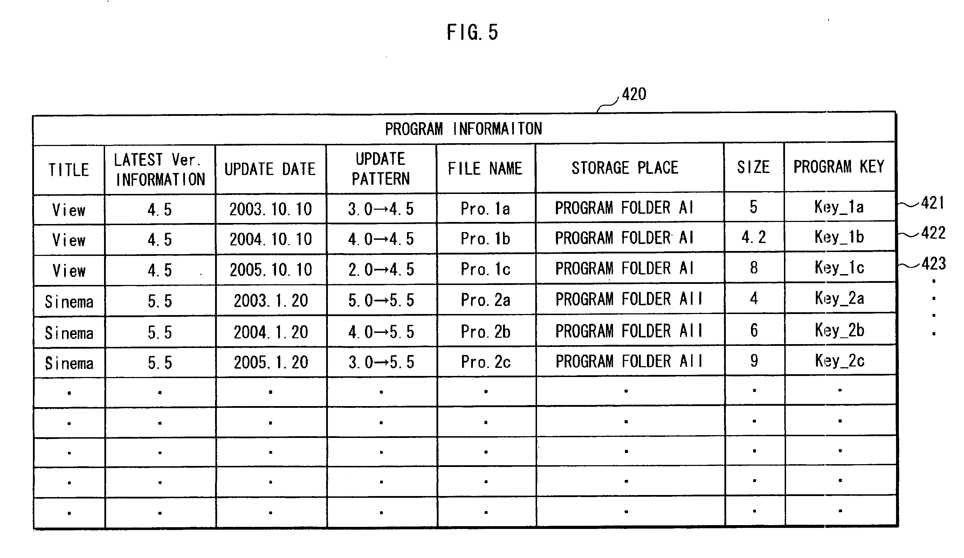

As shown in FIG.5, the program update file 420 is composed of a plurality of pieces of program information 421, 422, 423, .... Each piece of program information is made of a title of a computer program, latest version information of the program, an updated date, an update pattern, a file name of a program file used in updating, corresponding to an update pattern of a corresponding program, a storage place of the program file, a program size of an encrypted compressed update program included in the program file, and a program key used for generating the encrypted compressed update program. The unit of the program size is megabyte.

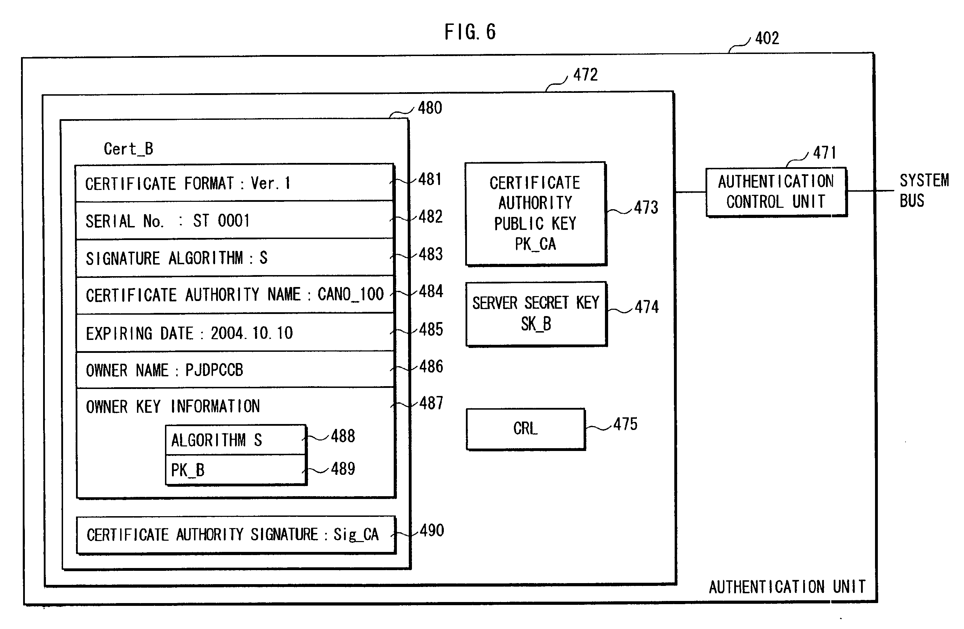

(2) Communication unit 403
The communication unit 403 is connected to the Internet 20, and performs transmission/reception of information between an external apparatus connected to the Internet 20 and either the control unit 407 or the authentication unit 402.
Here, the external apparatus is specifically the terminal apparatus 100.
(3) Authentication unit 402
As FIG.6 shows, the authentication unit 402 is structured by an authentication control unit 471 and an internal memory 472.

The internal memory 472 is structured by a ROM and a hard disk. The internal memory 472 stores therein a certificate authority public key PK_CA_473, a server secret key SK_B_474 paired with a public key certified by a public key certificate Cert_B_480, CRL (certificate revocation list) 475, and the public key certificate Cert_B_480 that certifies a public key PK_B_489 of the server apparatus 400 which has been issued from the certificate authority.

The public key certificate Cert_B_480 is issued by a certificate management apparatus 600 of the certificate authority, and is for example created according to the format of X.509 version 1 recommended by the ITU (International Telecommunication Union). The public key certificate Cert_B_480 is structured by certificate format 481 indicating a generation of X.509 signature format, a serial No. 482 uniquely assigned to the certificate, a signature algorithm identifier 483 identifying the signature algorithmused in generating certificate authority signature data 490, a certificate authority name 484 being an identifier of the certificate authority having issued the public key certificate Cert_B_480, an expiring date 485 of the public key certificate Cert_B_480, an owner name 486 being an identifier of the owner of the secret key paired with the public key certified by the public key certificate Cert_B_480, owner key information 487 including a public key PK_B_489 certified by the public key certificate Cert_B_480 and a signature algorithm identifier 488 used in signature generating with use of the public key PK_B_489, and certificate authority signature data 490. The X. 509 version 1 format is disclosed in Non-patent reference 1, and so is publicly known. The detailed explanation thereof is therefore omitted.

The authentication control unit 471 obtains a CRL, on a fixed time every day, via the communication unit 403 either from a URL or a directory service designated by the certificate authority, to rewrite the CRL 475 within the internal memory 472 to the new CRL. The authentication control unit 471, prior to commencement of communication between the control unit 407 and the terminal apparatus 100, establishes SAC (secure authentication channel) sharing a session key with an external apparatus in the following manner.

The following SAC establishment method is only one example, and other methods are possible.
Gen() is set as a key generating function, and Y is set as a parameter unique to the system. The key generating function Gen ( ) is assumed to satisfy the relation of:
"Gen(x,Gen(z,Y))=Gen(z,Gen(x,Y))
The key generating function is executable by any publicly known technology, and so detailed explanation is omitted. One example of the key generating function is disclosed in Non-patent reference 1 and Non-patent reference 2, as a public key distribution system.

The authentication control unit 471 receives the public key certificate Cert_A from the terminal apparatus 100 via the communication unit 403, and receives an instruction for SAC establishment from the control unit 407. First, the authentication control unit 471 reads the certificate authority public key PK_CA_473, and performs signature verification by performing a signature verification algorithm V to the certificate authority signature data Sig_CA included in the received public key certificate Cert_A. When the verification result indicates a failure, the authentication control unit 471 finishes the processing for SAC establishment.

When the verification result indicates a success, the authentication control unit 471 reads the CRL 475 from the internal memory 472, and judges whether the serial No. included in the received public key certificate Cert_A has been registered in the read CRL or not.
When the judgment results in the affirmative (i.e. when the serial No. has been registered in the CRL), the authentication unit 471 finishes the processing for SAC establishment.
When on the contrary the judgment results in the negative (i. e. when the serial No. has not been registered in the CRL), the authentication control unit 471 reads the public key certificate Cert_B_480 from the internal memory 472, and transmits the public key certificate Cert_B_480 to the terminal apparatus 100 via the communication unit 403.

Next, the authentication control unit 471 generates a random number Cha_B, and transmits the random number Cha_B to the terminal apparatus 100 via the communication unit 403.
Next, the authentication control unit 471 receives the signature data Sig_A from the terminal apparatus 100 via the communication unit 403, and performs signature verification by performing the signature verification algorithm V to the received signature data Sig_A with use of the public key PK_A included in the received public key certificate Cert_A. When the verification result indicates a failure, the processing for SAC establishment is finished.

Next, the authentication control unit 471 receives the random number Cha_A from the terminal apparatus 100 via the communication unit 403, reads a server secret key SK_B_474 from the internal memory 472, generates signature data Sig_B by performing the signature generating algorithm S to the received random number Cha_A with use of the server secret key SK_B_474, and transmits the generated signature data Sig_B to the terminal apparatus 100 via the communication unit 403.

Next, the authentication control unit 471 receives a Key_A generated using the key generating function G() and a parameter Y unique to the system.
The authentication control unit 471 generates a random number "b", and generates Key_B=Gen (b, Y) with use of the generated random number "b". Next, the authentication control unit 471 transmits the generated key_B to the terminal apparatus 100 via the communication unit 403.

Next, the authentication control unit 471 generates a session key Key_AB=Gen (b, Key_A) using the received Key_A and the random number "b". Next, the authentication control unit 471 outputs the generated session key to the communication encryption/decryption unit 401, and outputs a control signal reporting a SAC establishment success to the control unit 407.
(4) Control unit 407
The control unit 407 is structured by a microprocessor, a RAM, a ROM, and the like, which are not specifically illustrated in the drawings. The RAM and the ROM respectively store a computer program therein. The control unit 407 achieves its function by the microprocessor operating according to the computer program.

When having received a public key certificate Cert_A from the terminal apparatus 100 via the communication unit 403, the control unit 407 outputs the received Cert_A to the authentication unit 402, to instruct SAC establishment. The control unit 407 also receives a control signal reporting a SAC establishment success from the authentication unit 402.
In addition, the control unit 407 receives an encrypted title and encrypted version information from the terminal apparatus 100 via the communication unit 403. When having received these pieces of information, the control unit 407 outputs the encrypted title and encrypted version information to the communication encryption/decryption unit 401, and instructs the communication encryption/decryption unit 401 to perform decryption. The control unit 407 receives a title and version information from the communication encryption/decryption unit 401, reads latest version information from the program information including the received title, and compares the read latest version information and the received version information. When the received version information and the latest version information indicate the same generation, the comparison result of "0" is obtained.

When the received version information indicates an older generation than the read latest version information, the control unit 407 obtains a comparison result of "1". Next, the control unit 407 selects program information 421 that includes the received title and that the received version information matches the version information before update in the update pattern. The control unit 407 then reads a program size included in the selected program information 421, and transmits the program size and the obtained comparison result to the terminal apparatus 100.

When having received an encrypted title, encrypted version information, and a download request from the terminal apparatus 100, the control unit 407 outputs the encrypted title and the encrypted version information to the communication encryption/decryption unit 401, and instructs the communication encryption/decryption unit 401 to perform decryption. When having received a title and version information from the communication encryption/decryption unit 401, the control unit 407 selects program information 421 from the program update table 420 based on the received title and version information, reads a program key included in the selected program information, outputs the program key to the communication encryption/decryption unit 401, and instructs the communication encryption/decryption unit 401 to perform encryption. When having received an encrypted program key from the communication encryption/decryption unit 401, the control unit 407 reads a program file 431 for update based on the file name and the storage place included in the selected program information. Next, the control unit 407 transmits the program file 431 and the encrypted program key to the terminal apparatus 100 via the communication unit 403.

(5) Communication encryption/decryption unit 401
The communication encryption/decryption unit 401 receives a session key from the authentication unit 402, and stores the received session key. When having received a new session key, the communication encryption/decryption unit 401 deletes the session key in storage, and stores the new session key instead.
The communication encryption/decryption unit 401, when having received an encrypted title, encrypted version information, and an instruction for decryption from the control unit 407, generates a title and version information by performing a decryption algorithm D2 on the encrypted title and the encrypted version information using the session key, and outputs the title and the version information to the control unit 407.

When having received from the control unit 407 a program key and an instruction for encryption, the communication encryption/decryption unit 401 generates an encrypted program key by performing an encryption algorithm E3 on the received program key using the session key, and outputs the generated encrypted program key to the control unit 407.
Here, the decryption algorithm D2 is for decrypting encrypted data having been encrypted using the encryption algorithm E2. The encryption algorithms E2 and E3 are for example in accordance with a DES (data encryption standard). The DES is a publicly known technology, and so the explanation thereof is omitted.

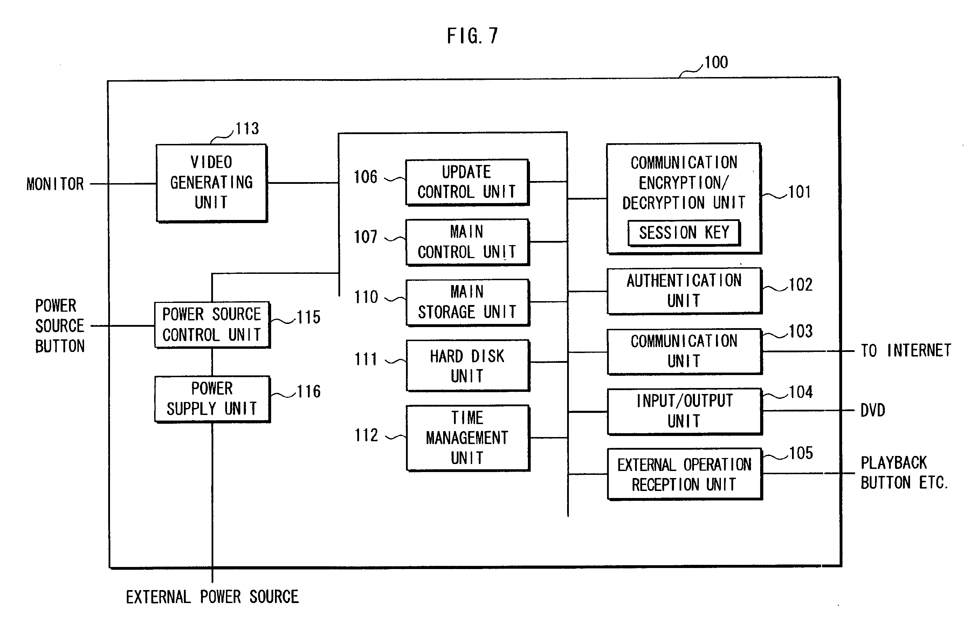

(6) Input unit 405 and display unit 413
The input unit 405 receives an input of data or an instruction from an operator of the server apparatus 400, and outputs the received data or instruction to the control unit 407.
The display unit 413 displays various types of information according to the control of the control unit 407.
1.4 Terminal apparatus 100
As FIG.7 shows, the terminal apparatus 100 includes a communication encryption/decryption unit 101, an authentication unit 102, a communication unit 103, an input/output unit 104, an external operation reception unit 105, an update control unit 106, a main control unit 107, a main storage unit 110, a hard disk unit 111, a time management unit 112, a video generating unit 113, a power source control unit 115, and a power supply unit 116.

The terminal apparatus 100 is structured by a microprocessor, a RAM, a ROM, and the like, which are not specifically illustrated in the drawings. The RAM, the ROM, the main storage unit 110, and the hard disk unit 111 respectively store a computer program therein. The terminal apparatus 100 achieves its function by the microprocessor operating according to the computer program.

As shown in FIG.1, the terminal apparatus 100 is connected to a monitor 120. In addition, DVD500a, DVD500b, and DVD500c are inserted to the terminal apparatus 100.
According to whether any DVD has been inserted and according to the type of DVD inserted to the terminal apparatus 100, an update method of a content playback program stored in the terminal apparatus 100 changes.
(i) Case of no insertion of DVD or when DVD500a is inserted The terminal apparatus 100 obtains from the server apparatus 400 a comparison result of comparing the latest version information stored in the server apparatus 400 and the version information of the content playback program stored in the terminal apparatus 100.
   - If the comparison result is "1", indicating that the version information stored in the terminal apparatus 100 is of an older generation than the generation of the latest version information stored in the server apparatus 400, the terminal apparatus 100 obtains an update program from the server apparatus 400.
   - It the comparison result is "0", indicating that the version information stored in the terminal apparatus 100 is of the same generation as the generation of the latest version information stored in the server apparatus 400, the terminal apparatus 100 does not perform update.

Note that the latest version information stored in the server apparatus 400 is managed by the developing company of the content playback program and is updated as needed. Therefore, in principle, a case does not exist where the version information stored in the terminal apparatus 100 indicates a newer generation than the latest version information stored in the server apparatus 400.
In this case, if a content playback program is "suitable", it means that the content playback program is of the latest generation.

(ii) Case when DVD500b is inserted
The terminal apparatus 100 compares the version information 505b stored in DVD500b and the version information of the content playback program stored in the terminal apparatus 100.
- When the comparison result indicates that the version information stored in the terminal apparatus 100 is of an older generation than the generation of the version information 505b stored in DVD500b, the terminal apparatus 100 obtains the update program from the server apparatus 400.
- When the comparison result indicates that the version information stored in the terminal apparatus 100 is of the same generation as the generation of the version information 505b stored in the DVD500b, the terminal apparatus 100 does not perform update.

In this case, if a content playback program is "suitable", it means that the content playback program is of the same generation as or newer than the generation indicated by the version information stored in the DVD. This further means that the content playback program is of the generation suited for the content playback.
Here, it is assumed that the version information 505b stored in the DVD500b is identical to the latest version information stored in the server apparatus 400, and that the version information stored in the terminal apparatus 100 can never be newer than the latest version information stored in the version information 505b stored in the DVD500b.

(iii) Case when DVD500c is inserted
The terminal apparatus 100 compares the version information 505c stored in the DVD500c with the version information of the content playback program stored in the terminal apparatus 100.
- When the comparison result indicates that the version information stored in the terminal apparatus 100 is of an older generation than that of the version information 505c stored in the DVD500c, the terminal apparatus 100 obtains an update program from the DVD500c.
- When the comparison result indicates that the version information stored in the terminal apparatus 100 is of the same generation as that of the version information 505c stored in the DVD500c, the terminal apparatus 100 does not perform update.

In this case, if a content playback program is "suitable", it means that the content playback program is of the same generation as or newer than the generation indicated by the version information stored in the DVD.
However, a necessary update program is different depending on the version information of the content playback program stored in the terminal apparatus 100. Therefore various update programs must be prepared in the DVD500c assuming various cases. Examples of such update programs are: an update program from Ver.1.0 to Ver. 4.0, an update program from Ver.2.0 to Ver.4.0, and an update program from Ver. 3. 0 to Ver. 4.0. Since the capacity of the DVD has a certain limitation, this method is not realistic. In the present embodiment, the DVD500c is designed to store therein an update program suited for update of the content playback program stored in the terminal apparatus 100, and the version information stored in the terminal apparatus 100 can never be of a newer generation than that of the latest version information stored in the version information 505c stored in the DVD500c. The details of (i)-(iii) are stated later.

(1) Power supply unit 116
The power supply unit 116 is connected to an external power source (e.g. power outlet), and starts power supply to each unit of the terminal apparatus 100 upon reception of an instruction for power supply start from the power source control unit 115, and stops the power supply directed to each unit of the terminal apparatus 100 upon reception of an instruction for power supply stop.
(2) Input/output unit 104
The input/output unit 104, by being controlled by the main control unit 107, reads contents 501a, 501b, and 501c, respectively from DVD500a, DVD500b, and DVD500c, and outputs the contents 501a, 501b, or 501c to the main control unit 107.

In addition, the input/output unit 104, by being controlled by the update control unit 106, reads the version information 505b from the DVD500b, and outputs the version information 505b to the update control unit 106.
In addition, the input/output unit 104, by being controlled by the update control unit 106, reads the program file 503c from the DVD500c, and outputs the program file 503c to the update control unit 106.

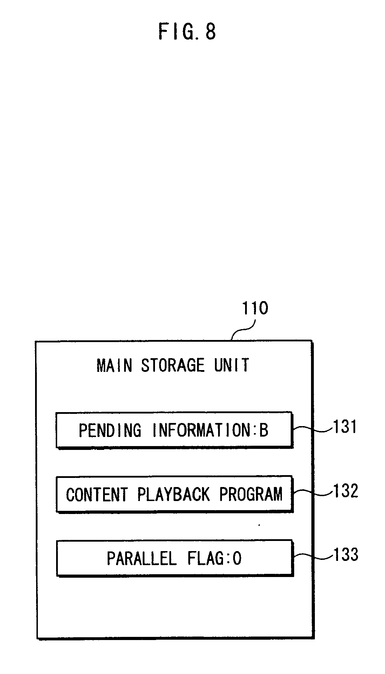

(3) External operation reception unit 105
The external operation reception unit 105 detects a user's press directed to a playback button and the like. Upon detection of such a press directed to a button, the external operation reception unit 105 outputs operation instruction information, which corresponds to the button detected to have been pressed, to the main control unit 107.
(4) Main storage unit 110 and hard disk unit 111
The main storage unit 110 is structured by a RAM, and for example stores therein pending information 131, a content playback program 132, and a parallel flag 133 (see FIG.8).

The pending information 131 indicates one of the states of: a state where downloading, verification, and installment are all put on hold; a state in which from verification to installment are put on hold; a state where decryption and installment are put on hold; a state where only installment is put on hold; and a state where none of the processes is put on hold. "A" corresponds to the state where downloading, verification, and installment are all put on hold, "B" corresponds to the state in which from verification to installment are put on hold; "C" corresponds to the state where decryption and installment are put on hold; and "D" corresponds to a state where only installment is put on hold, and "E" corresponds to the state where none of the processes is put on hold.

The content playback program 132 is structured by a plurality of computer instructions indicating a playback procedure of a content.
The parallel flag 133 indicates whether a microprocessor is able to execute the update in parallel with other processing (content playback etc.). "1" indicates that the parallel processing is possible, and "0" indicates that the parallel processing is not possible.

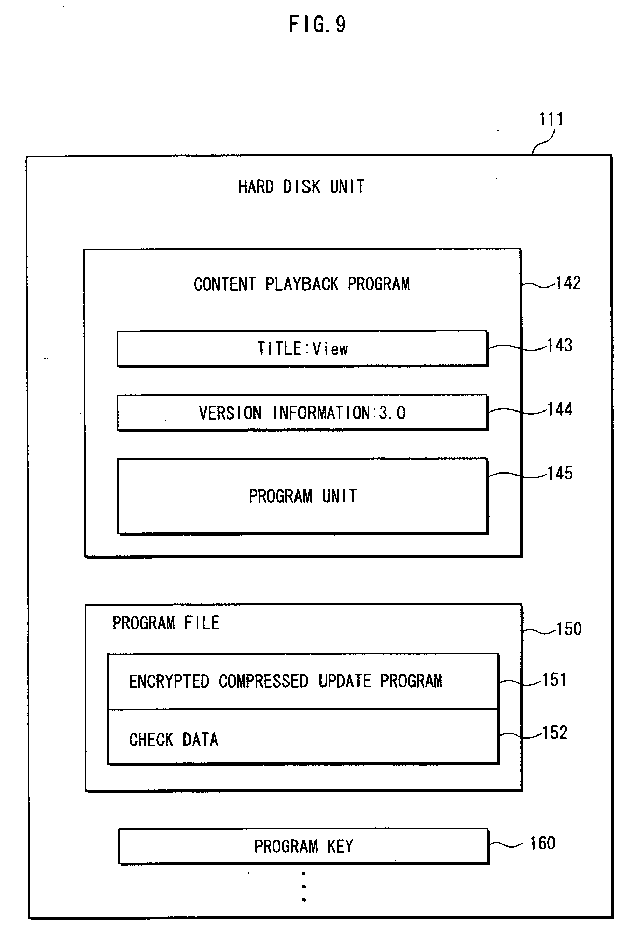

The hard disk unit 111 is structured by a nonvolatile memory. The hard disk unit 111 for example stores therein a content playback program 142, a program file 150, and a program key 160, as shown in FIG.9.
The content playback program 142 includes a title 143, version information 144, and a program unit 145. The title 143 is a title for identifying a content playback program 142, and the version information 144 indicates a generation of a content playback program 142. The program unit 145 is structured by a plurality of computer instructions indicating a playback procedure of a content.

The program file 150 is received from the server apparatus 400 via the Internet 20, and includes an encrypted compressed program 151 and check data 152. The encrypted compressed program 151 is generated by compressing and encrypting an update program including a procedure of changing part or all of the content playback program 142. The check data 152 is generated based on the encrypted compressed program 151 and using a hash function.

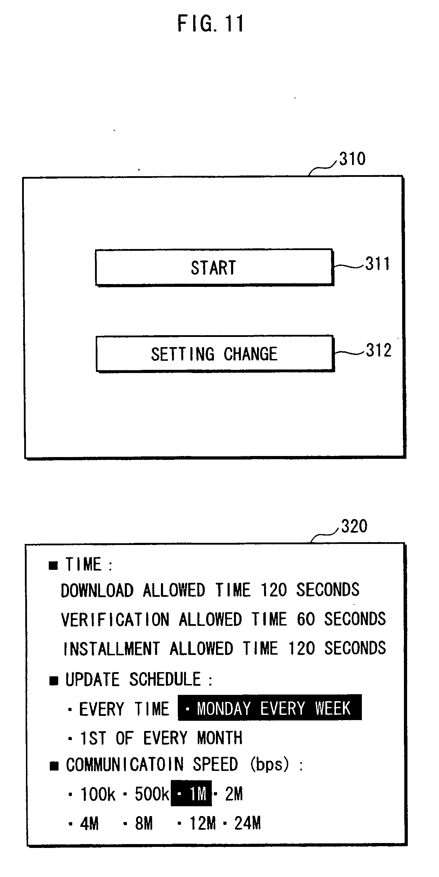

The program key 160 is a key value for decrypting an encrypted compressed program included in the program file 150.
The hard disk unit 111 stores various types of screen data. The screen data is used for obtaining a start screen 310 and a setting changing screen 320 shown in FIG.11.

(5) Communication unit 103
The communication unit 103 is connected to the Internet 20, and performs transmission/reception of information between the main control unit 107, the update control unit 106, and the authentication unit 102, and an external apparatus connected to the Internet 20.
Here, the external apparatus is specifically the server apparatus 400.

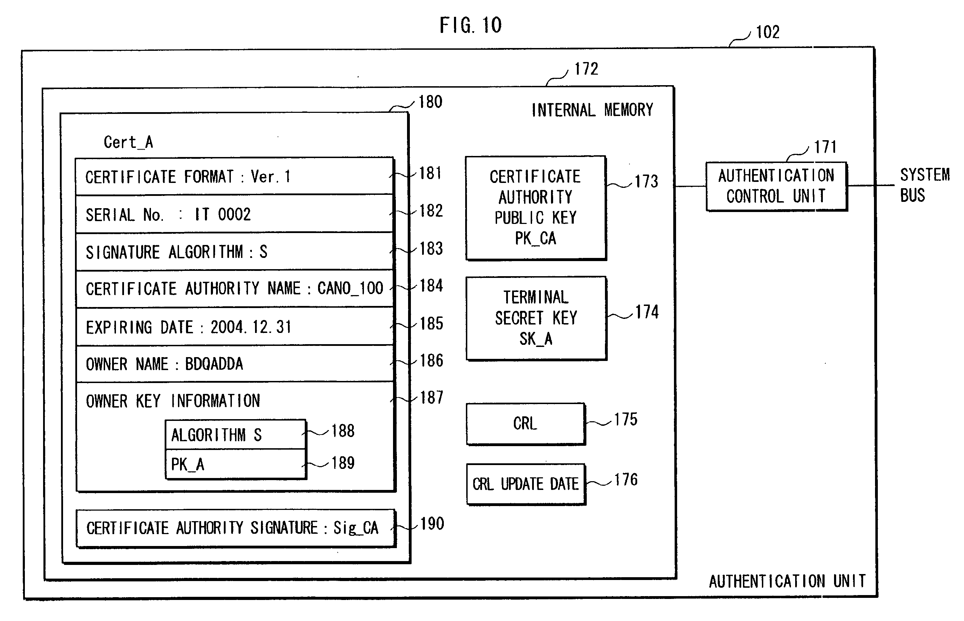

(6) Authentication unit 102
As FIG.10 shows, the authentication unit 102 is structured by the authentication control unit 171 and the internal memory 172.
The internal memory 172 is structured by a ROM and a hard disk. The internal memory 172 stores therein a certificate authority public key PK_CA_173 generated by a certificate authority, a public key certificate Cert_A_180 for certifying a public key PK_A_189 of the terminal apparatus 100 issued by a certificate authority, a terminal secret key SK_A_174 to be paired with a public key PK A 189 included in the public key certificate Cert_A_180, and a CRL (certificate revocation list) 175 including serial numbers of invalidated public key certificates, and a CRL update date 176.

The certificate authority public key PK_CA_173, the terminal secret key SK_A_174, and the public key certificate Cert_A_180 are recorded by a manufacturing company of the terminal apparatus 100 at the time of shipment.
The public key certificate Cert_A_180 is issued by the certificate management apparatus 600 of the certificate authority, and is for example created according to the format of X.509 version 1 recommended by the ITU (International Telecommunication Union). The public key certificate Cert_A_180 is structured by a certificate format 181 indicating a generation of X. 509 signature format, a serial No. 182 uniquely assigned to the certificate, a signature algorithm identifier 183 identifying the signature algorithm used in generating certificate authority signature data 190, a certificate authority name 184 being an identifier of the certificate authority having issued the public key certificate Cert_A_180, an expiring date 185 of the public key certificate Cert_A_180, an owner name 186 being an identifier of the owner of the secret key paired with the public key certified by the public key certificate Cert_A_180, owner key information 187 including a public key PK_A_189 certified by the public key certificate Cert_A_180 and a signature algorithm identifier 188 used in signature generating with use of the public key PK A 189, and certificate authority signature data 190. The X.509 version 1 format is disclosed in Non-patent reference 1, and so is publicly known. The detailed explanation thereof is therefore omitted.

When the power supply has started after activation of the terminal apparatus 100, the authentication control unit 171 compares the CRL update data 176 with date information. When the CRL update date 176 is different from the date information, the authentication control unit 171 obtains a new CRL, via the communication unit 103 either from a URL or a directory service designated by the certificate authority, to rewrite the CRL 175 within the internal memory 172 to the new CRL. After rewriting of the CRL 175, the authentication control unit 171 rewrites the CRL update date 17 6 with the date indicated by the date information.

Prior to commencement of transmission/reception of information either by the update control unit 106 or the main control unit 107 with an external apparatus, the authentication unit 102 establishes SAC (secure authentication channel) sharing a session key with an external apparatus, upon reception of an instruction for SAC establishment either from the update control unit 106 or from the main control unit 107. The SAC establishment is performed in the following manner. Note that the following SAC establishment method is only one example, and other methods may be adopted.

Here, Gen() is set as a key generating function, and Y is set as a parameter unique to the system. The key generating function Gen() is assumed to satisfy the relation of:
"Gen(x,Gen(z,Y))=Gen(z,Gen(x,Y))
The key generating function is executable by any publicly known technology, and so detailed explanation is omitted. One example of the key generating function is a Diffie Hellman (DH) public key distribution method disclosed in Non-patent reference 2 "Gendai Ango Ron (Modern encryption theory)" by Ikeno Shinichi and Koyama Kenji, Denki-Tsushin-Gakkai (Institute of Electric Communication).

When having received an instruction for SAC establishment from the update control unit 106, the authentication control unit 171 reads the Cert_A_180 from the internal memory 172, and transmits the Cert_A_180 to the server apparatus 400 via the communication unit 103 and the Internet 20. Next, when having received the public key certificate Cert_B of the server apparatus 400 from the server apparatus 400 via the communication unit 103, the authentication control unit 171 reads the certificate authority public key PK_CA_173 from the internal memory 172, and performs signature verification by performing a signature verification algorithm V to the certificate authority signature data Sig_CA included in the received public key certificate Cert_B. When the verification result indicates a failure, the authentication control unit 171 finishes the processing for SAC establishment.

When the verification result indicates a success, the authentication control unit 171 reads the CRL 175 from the internal memory 172, and judges whether the serial No. included in the received public key certificate Cert_B has been registered in the read CRL 175 or not.
When the judgment results in the affirmative (i.e. when the serial No. has been registered in the CRL 175), the authentication control unit 171 finishes the processing for SAC establishment.
When on the contrary the judgment results in the negative (i. e. when the serial No. has not been registered in the CRL 175), the authentication control unit 171 receives the random number Cha_B from the server apparatus 400 via the communication unit 103, reads the terminal secret key SK_A_174 from the internal memory 172, generates signature data Sig_A by performing a signature generating algorithm S to the received random number Cha_B using the terminal secret key SK_A_174, and transmits the generated signature data Sig_A to the server apparatus 400 via the communication unit 103.

Next, the authentication control unit 171 generates a random number Cha_A, and transmits the generated random number Cha_A to the server apparatus 400 via the communication unit 103.
Next, the authentication control unit 171 receives the signature data Sig_B from the server apparatus 400 via the communication unit 103, and performs signature verification by performing a signature verification algorithm V to the received signature data Sig_B using the public key PK_B included in the received public key certificate Cert_B. When the verification result indicates a failure, the authentication control unit 171 finishes the processing for SAC establishment.

When the verification result indicates a success, the authentication control unit 171 generates a random number "a", and generates Key_A=Gen(a,Y) with use of the generated random number "a". Next, the authentication control unit 171 transmits the generated Key_A to the server apparatus 400 via the communication unit 103.
The authentication control unit 171 receives the Key_B from the server apparatus 400, which has been generated with use of the key generating function G and the parameter Y unique to the system. Next, the authentication control unit 171 generates a session key Key_AB=Gen (a, Key_B) using the received Key_B and the random number "a".

The authentication control unit 171 outputs the generated session key to the communication encryption/decryption unit 101, and outputs a control signal indicating a SAC establishment success to the update control unit 106.
Note that the authentication unit 102 is controlled by the update control unit 106 during communication regarding update. During other communication (e.g. during content downloading), the authentication unit 102 is subjected to control by the main control unit 107. However, the processing performed by the authentication unit 102 is the same in both cases, and so the explanation so far (under the title of (6) Authenticaton unit 102) is confined to the processing performed during communication regarding update, for simplification purpose.

(7) Monitor 120
The monitor 120 receives a video signal that includes a vertical retrace period and a horizontal retrace period, and displays a video based on the received video signal.
FIG.11 illustrates one example of a screen displayed by the monitor 120. The start screen 310 includes two alternatives, namely a start 311 and a setting change 312. A setting change screen 320 is a screen for receiving a setting change regarding a download allowed time, a verification allowed time, and an installment allowed time, which is detailed later. Moreover, the setting change screen 320 is for receiving an update frequency setting change, where the update frequency indicates a schedule for performing communication with the server apparatus 400 for update, and a communication speed setting change, which are also detailed later.

(8) Main control unit 107
The main control unit 107, having received operation instruction information indicating "power button ON", generates the start screen 310, outputs the generated start screen 310 to the video generating unit 113, and instructs display of the start screen 310. When having received selection operation instruction information for selecting the start 311 within the start screen 310 as a result of a button operation of a user, the main control unit 107 instructs the update control unit 106 to start update processing.

When having received operation instruction information for selecting the setting change 312 within the start screen 310 from the external operation reception unit 105, the main control unit 107 obtains a setting change screen 320, outputs the obtained setting change screen 320 to the video generating unit 113, and instructs display of the setting change screen 320. When having received the update frequency indicating "Monday every week" is received from the external operation reception unit 105 through a button operation of a user, the main control unit 107 outputs the update frequency indicating "Monday every week" to the update control unit 106. When having received the setting change regarding any of the download allowed time, the verification allowed time, and the installment allowed time, or the communication speed setting change, the main control unit 107 outputs the received setting change to the time management unit 112.

When the processing for setting change is finished, the main control unit 107 instructs the update control unit 106 to start update.
When having received a control signal indicating that parallel processing is possible, a control signal indicating ending for update processing, or a control signal indicating that update is put on hold, the main control unit 107 receives a button operation of a user via the external operation reception unit 105. When having received operation instruction information indicating a press of the playback button, the main control unit 107 reads a content playback program 142 from the hard disk unit 111, writes the content playback program 142 to the main storage unit 110, obtains the content from DVD500a, DVD500b, and DVD500c in accordance with the computer instruction included in the content playback program having written to the main storage unit 110, and plays back the obtained content. Here, it is also possible to play back a content stored in the hard disk unit 111.

When having received operation instruction information indicating a press of any of the other buttons, corresponding processing is performed. When having received operation instruction information indicating "power button OFF" from the power source control unit 115, the main control unit 107 finishes the processing for the content playback program, and reads the pending information 131 from the main storage unit 110. When the pending information 131 indicates "E" meaning that there is no processing on hold, the main control unit 107 indicates the power OFF to the power source control unit 115.

If the pending information having read is other than "E", the main control unit 107 outputs the pending information to the update control unit 106, and instructs update re-start. When having received a control signal indicating ending for update processing, the main control unit 107 instructs "power OFF" to the power source control unit 115.
(9) Update control unit 106
The update control unit 106 stores therein the update frequency indicating "Monday every week", regarding the update performed via the Internet. The update frequency of "Monday every week" specifically indicates that when the power button is pressed ON while the DVD is not inserted or while DVD500a is inserted, it is required to ask the server apparatus 400 via the Internet 20 whether the content playback program 142 is of the latest generation.

In addition, when having received setting change information for the update frequency from the main control unit 107, the update control unit 106 changes the update frequency currently stored. Note that the update frequency may be set by a manufacturing company at the time of manufacturing the terminal apparatus 100.
(Update start)
When having received from the main control unit 107 an instruction to start update, the update control unit 106 writes "E" indicating there is no process put on hold, as the pending information of the main storage unit 110.

Next, the update control unit 106 reads a clock frequency of a microprocessor installed in the terminal apparatus 100, the clock frequency having been stored in the update control unit 106, and judges whether the read clock frequency is 400MHz or above. When the clock frequency is 400MHz or above, it is understood that the terminal apparatus 100 is able to execute the update in parallel with other processing (e.g. content playback), and so the update control unit 106 sets the parallel flag of "1". When on contrary the clock frequency is below 400MHz, it is understood that the terminal apparatus 100 cannot execute the parallel processing, and so the update control unit 106 sets the parallel flag of "0". Then the flag having set is written to the main storage unit 110.

Next, the update control unit 106 judges the parallel flag. When the parallel flag is "1", the update control unit 106 outputs, to the main control unit 107, a control signal indicating that the parallel processing is executable.
Next, the update control unit 106 judges, via the input/output unit 104, whether a DVD has been inserted. When it is judged that a DVD has been inserted, the content of the DVD is checked. Specifically the update control unit 106 judges which one of DVD500a, DVD500b, and DVD500c has been inserted, and performs the above-mentioned processing of (i),(ii), and (iii).

As follows, the above-mentioned processing of (i)-(iii) is described in detail.
(i) When there is no insertion of DVD or when DVD500a has been inserted
The update control unit 106 performs update processing or puts the update processing on hold, according to the following procedures of (i-a) to (i-g).
(i-a) Judgment as to the necessity of update
The update control unit 106 obtains date information indicating the current date and day, and compares the day included in the obtained date information with the update frequency indicating "Monday every week" having been stored therein. When the day included in the date information is other than "Monday", then the update control unit 106 outputs a control signal indicating ending for update processing, and ends the update processing.

The day included in the date information is "Monday", the update control unit 106 instructs the authentication unit 102 to perform SAC establishment. When having received a control signal indicating a SAC establishment success from the authentication unit 102, the update control unit 106 reads, from the hard disk unit 111, the title 143 and the version information 144 of the content playback program 142, and outputs the title 143 and the version information 144 to the communication encryption/decryption unit 101, and instructs the communication encryption/decryption unit 101 to perform encryption. When having received the encrypted title and the encrypted version information from the communication encryption/decryption unit 101, the update control unit 106 transmits the encrypted title and the encrypted version information to the server apparatus 400 via the communication unit 103.

Next, the update control unit 106 receives, from the server apparatus 400, a comparison result between the version information in the terminal apparatus 100 and the latest version information stored in the server apparatus 400, and a program size. When the comparison result is "0", it is understood that there is no need for update, and so the update control unit 106 outputs, to the main control unit 107, a control signal indicating ending for update processing, and ends the update processing. When the comparison result is "1", it is understood that it is necessary to perform update.

The update control unit 106 then judges the parallel flag. When the parallel flag is "0", the update control unit 106 commences the processing of (i-b). When the parallel flag is "1", the update control unit 106 then commences the processing of (i-c).
(i-b) Prediction of download time
The update control unit 106 outputs, to the time management unit 112, the program size received from the server apparatus 400, and instructs the time management unit 112 to predict a download time. Then the update control unit 106 receives, from the time management unit 112, a comparison result between the download time predicted by the time management unit 112 and the download allowed time. When the comparison result indicates that the predicted download time is within the download allowed time, the update control unit 106 commences the processing of (i-c).

When the comparison result indicates that the predicted download time exceeds the download allowed time, the update control unit 106 writes "A" indicating to put on hold the processes from downloading, as the pending information of the main storage unit 110, and outputs, to the main control unit 107, a control signal indicating to put on hold the update.
(i-c) Downloading

Next, the update control unit 106 instructs the authentication unit 102 to perform SAC establishment. When having received a control signal indicating a SAC establishment success from the authentication unit 102, the update control unit 106 reads, from the hard disk unit 111, the title 143 and the version information 144 of the content playback program 142, and outputs the title 143 and the version information 144 to the communication encryption/decryption unit 101, and instructs the communication encryption/decryption unit 101 to perform encryption. When having received the encrypted title and the encrypted version information from the communication encryption/decryption unit 101, the update control unit 106 transmits the encrypted title and the encrypted version information to the server apparatus 400 via the communication unit 103, and requests downloading.

Then the update control unit 106 receives, from the server apparatus 400 and via the communication unit 103, a program file and an encrypted program key. Here, the program file transmitted from the server apparatus 400 includes an encrypted compressed update program and check data generated using the encrypted compressed update program.
The update control unit 106 outputs the encrypted program key to the communication encryption/decryption unit 101, and instructs the communication encryption/decryption unit 101 to perform decryption. When having received a program key, the update control unit 106 writes the program key and the program file, having been received, to the main storage unit 110.

Next, the update control unit 106 judges the parallel flag. When the parallel flag is "1", the update control unit 106 commences the processing of (i-e). When the parallel flag is "0", the update control unit 106 commences the processing of (i-d).
(i-d) Prediction of verification time
The update control unit 106 instructs the time management unit 112 to predict a verification time being a time required for verifying the check data included in the received program file. Then the update control unit 106 receives, from the time management unit 112, a comparison result between the predicted verification time and the verification allowed time. When the received comparison result indicates that the predicted verification time is within the verification allowed time, the update control unit 106 commences the processing of (i-e).

When the comparison result indicates that the predicted verification time exceeds the verification allowed time, the update control unit 106 writes "B" indicating to put on hold the process from verification, as the pending information of the main storage unit 110. Then the update control unit 106 reads, from the main storage unit 110, the program key and the program file, and writes the program key and the program file to the hard disk unit 111.
(i-e) Verification
Next, the update control unit 106 verifies the check data included in the received program file, in the following manner.

First, the update control unit 106 reads the encrypted compressed update program from the main storage unit 110, substitutes the encrypted compressed update program into a hash function, thereby generating a hash value of 160 bytes. The hash function is for example a SHA-1. The hash function used here is identical to the hash function used by the server apparatus 400.
Next, the update control unit 106 reads, from the main storage unit 110, the check data included in the received program file, and compares the calculated hash value and the check data. When the calculated hash value and the check data do not match, the verification of the check data is judged to be a failure. When the calculated hash value and the check data match, the verification of the check data is judged to be a success.

When the verification of the check data is judged to be a failure, the update control unit 106 deletes the program key and the program file from the main storage unit 110, and judges the parallel flag. When the parallel flag is judged to be "1", the update control unit 106 performs the processing from (i-c) again. When the parallel flag is judged to be "0", the update control unit 106 writes "A" indicating to put on hold the processes from downloading, as the pending information of the main storage unit 110, and outputs, to the main control unit 107, a control signal indicating to put on hold the update.

When the verification of the check data is judged to be a success, the update control unit 106 judges the parallel flag. When the parallel flag is judged to be "0", the update control unit 106 commences the processing of (i-f). When the parallel flag is "1", the update control unit 106 judges whether the content is being played back by being controlled by the main control unit 107. When the judgment results in the negative, the control is passed to the processing (i-f). When the judgment results in the affirmative, the update control unit 106 writes "C" indicating to put on hold the processes of decryption and installment, as the pending information of the main storage unit 110, and outputs, to the main control unit 107, a control signal indicating to put on hold the update. Next, the update control unit 106 reads the encrypted compressed update program and the program key from the main storage unit 110, and writes the encrypted compressed update program and the program key to the hard disk unit 111.

(i-f) Prediction of installment time
Next, the update control unit 106 instructs the time management unit 112 to predict an installment time. Next, the update control unit 106 receives, from the time management unit 112, a comparison result between the predicted installment time and the installment allowed time. When the comparison result indicates that the predicted installment time is within the installment allowed time, the update control unit 106 commences the processing of (i-g). When the comparison result indicates that the predicted installment time exceeds the installment allowed time, the update control unit 106 writes "C" indicating to put on hold the processes of decryption and installment, as the pending information of the main storage unit 110, and outputs, to the main control unit 107, a control signal indicating to put on hold the update. Next, the update control unit 106 reads the encrypted compressed update program and the program key from the main storage unit 110, and writes the encrypted compressed update program and the program key to the hard disk unit 111.

(i-g) Installment
The update control unit 106 reads the program key and the encrypted compressed update program from the main storage unit 110, and generates a compressed update program by performing a decryption algorithm D1 to the encrypted compressed update program using the program key. Here, the decryption algorithm D1 is an algorithm for decrypting ciphertext generated using an encryption algorithm E1 detailed later. The encryption algorithm E1 is for example in accordance with a DES (data encryption standard).

Next, the update control unit 106 generates an update program by performing a decompression algorithm Z to the compressed update program. The decompression algorithm Z is an algorithm for decompressing data having been compressed by using the compression algorithm P detailed later. Here, the compression algorithm P is for example Huffman coding and run length coding. The Huffman coding and the run length coding are both a publicly known technology, and so the explanation thereof is omitted.

The update control unit 106 rewrites part or all of the content playback program 142 stored in the hard disk unit 111, according to the generated update program. As a result, the installment completes.
When the installment completes, the update control unit 106 outputs a control signal indicating ending for update processing, and ends the update processing.

(ii) In case of DVD500b
When DVD500b is judged to have been inserted, update is performed according to the procedure shown below.
(ii-a) Judgment as to the necessity of update
The update control unit 106 reads the version information 505b from DVD500b, and reads version information 144 included in the content playback program 142 stored in the hard disk unit 111. Then the update control unit 106 compares the version information 505b and the version information 144. When the version information 144 and the version information 505b indicate the same generation, the update control unit 106 judges that there is no need for update. Accordingly, the update control unit 106 outputs a control signal indicating ending for update processing, and ends the update processing.

When the version information 144 is of an older generation than the generation of the version information 505b, the update control unit 106 judges that it is necessary to perform update. Then the update control unit 106 judges the parallel flag. When the parallel flag is "1", the control is passed to the processing (ii-c). When the parallel flag is "0", the control is passed to the processing (ii-b).
(ii-b) Prediction of download time
The update control unit 106 reads a program size table 530b from DVD500b via the input/output unit 104, selects program size information 531b that includes former version information that matches the version information 144, outputs a program size 507b included in the selected program size information 531b to the time management unit 112, and instructs the time management unit 112 to predict the download time. Next, the update control unit 106 receives, from the time management unit 112, a comparison result between the predicted download time and the download allowed time. When the comparison result indicates that the predicted download time is within the download allowed time, the update control unit 106 commences the processing of (ii-c).

When the comparison result indicates that the predicted download time exceeds the download allowed time, the update control unit 106 writes "A" indicating to put on hold the processes from downloading, as the pending information of the main storage unit 110, and outputs, to the main control unit 107, a control signal indicating to put on hold the update.
Then the processing from (ii-c) downloading to (ii-g) installment is performed. However the processing is the same as the processing from (i-c) to (i-g) already described, and so the explanation thereof is omitted.

(iii) In case of DVD500c
When DVD500c is judged to have been inserted, update is performed according to the procedure from (iii-a) to (iii-c) shown below.
Note that the following procedure is performed every time DVD500c is inserted. However the following procedure may also be performed on a regular basis (e.g. Monday every week, or 10^{th} of every month).

(iii-a) Judgment as to the necessity of update
The update control unit 106 reads the program file 503c from DVD500c, reads the version information 144 included in the content playback program 142 from the hard disk unit 111, and compares the version information 144 and the version information 505c included in the program file 503c.

When the version information 144 and the version information 505c indicate the same generation, the update control unit 106 judges that there is no need for update. Accordingly, the update control unit 106 outputs a control signal indicating ending for update processing, and ends the update processing.
When the version information 144 is of an older generation than the generation of the version information 505c, the update control unit 106 then judges the parallel flag. When the parallel flag is judged to be "0", the control is passed to the processing (iii-b).

When the parallel flag is judged to be "1", the update control unit 106 judges whether the content is being played back by being controlled by the main control unit 107. When the judgment results in the affirmative, the update control unit 106 writes "D" indicating to put on hold the process of installment, as the pending information of the main storage unit 110, and writes the program file 503c read from DVD500c, to the hard disk unit 111.

When the judgment as to whether the content is being played back results in the negative, the control is passed to the processing (iii-b).
(iii-b) Prediction of installment time
Next, the update control unit 106 outputs the program size 507c included in the program file 503c to the time management unit 112, and instructs the time management unit 112 to predict an installment time. Next, the update control unit 106 receives, from the time management unit 112, a comparison result between the predicted installment time and the installment allowed time. When the comparison result indicates that the predicted installment time is within the installment allowed time, the update control unit 106 commences the processing of (iii-c). When the comparison result indicates that the predicted installment time exceeds the installment allowed time, the update control unit 106 writes "D" indicating to put on hold the process of update, as the pending information of the main storage unit 110, and outputs, to the main control unit 107, a control signal indicating to put on hold the update. Next, the update control unit 106 writes the program file 503c read from DVD500c to the hard disk unit 111.

(iii-c) Installment
The update control unit 106 generates an update program by performing a decompression algorithm Z to a compressed update program 506c. The decompression algorithm Z is an algorithm for decompressing data having been compressed by using the compression algorithm P. Here, the compression algorithm P is for example run length coding and Huffman coding.

Next, the update control unit 106 rewrites part of all of the content playback program 142 stored in the hard disk unit 111, according to the generated update program. As a result, the installment completes.
Next, the update control unit 106 outputs a control signal indicating ending for update processing, and ends the update processing.
(Re-start of update)
The update control unit 106 receives the pending information from the main control unit 107, and is instructed to re-start the update. The update control unit 106 completes the update in the procedures of (A) (B) (C) (D) detailed below, depending on which one of the pending information <A><B><C><D> has been received.

(A) Pending information <A>
When the received pending information is <A> indicating to put on hold the processes from downloading, the update control unit 106 completes the update processing in the procedures from (A-a) to (A-c) detailed below.
(A-a) Downloading
The update control unit 106 instructs the authentication unit 102 to perform SAC establishment. When having received a control signal indicating a SAC establishment success from the authentication unit 102, the update control unit 106 reads the title 143 and the version information 144 of the content playback program 142 from the hard disk unit 111, outputs the title 143 and the version information 144 to the communication encryption/decryption unit 101, and instructs the communication encryption/decryption unit 101 to perform encryption. When having received the encrypted title and the encrypted version information from the communication encryption/decryption unit 101, the update control unit 106 transmits the encrypted title and the encrypted version information to the server apparatus 400 via the communication unit 103, and requests downloading.

Next, the update control unit 106 receives a program file and an encrypted program key from the server apparatus 400. The program file includes an encrypted compressed update program and check data generated using the encrypted compressed update program.
The update control unit 106 outputs the received encrypted program key to the communication encryption/decryption unit 101, and instructs the communication encryption/decryption unit 101 to perform decryption. When having received the program key from the communication encryption/decryption unit 101, the update control unit 106 writes the program key and the program file to the main storage unit 110.

(A-b) Verification
Next, the update control unit 106 verifies the check data included in the program file received from the server apparatus 400. The check data is for example composed of a hash value of 160 bytes generated by using a hash function and an encrypted compressed update program. The generating method and the verification method of check data are only one example, and other methods are adoptable.

First, the update control unit 106 reads the encrypted compressed update program, and generates a hash value having 160 bytes, by substituting the encrypted compressed update program into a hash function. The hash function is for example a SHA-1. The hash function used here is identical to the hash function used by the server apparatus 400.
Next, the update control unit 106 reads the check data included in the received program file, and compares the hash value and the check data. When the hash value and the check data do not match, the verification of the check data is interpreted as a failure. When the hash value and the check data match, the verification of the check data is interpreted as a success.

When the verification of the check data is a failure, the update control unit 106 deletes the program key and the program file from the main storage unit 110, and redoes the processing from (A-a) . When the verification of the check data is a success, the control is passed to the processing of (A-c).
(A-c) Installment
The update control unit 106 reads the program key and the encrypted compressed update program from the main storage unit 110, and generates a compressed update program by performing a decryption algorithm D1 to the encrypted compressed update program using the program key having read. Here, the decryption algorithm D1 is an algorithm for decrypting ciphertext generated using the encryption algorithm E1. The encryption algorithm E1 is for example in accordance with a DES (data encryption standard).

Next, the update control unit 106 generates an update program by performing a decompression algorithm Z to the compressed update program. The decompression algorithm Z is an algorithm for decompressing data having been compressed by using the compression algorithm P. Here, the compression algorithm P is for example run length coding and Huffman coding. The run length coding and the Huffman coding are both a publicly known technology, and so the explanation thereof is omitted.

Next, the update control unit 106 rewrites part or all of the content playback program 142 stored in the hard disk unit 111, according to the generated update program. As a result, the installment completes.
When the installment completes, the update control unit 106 outputs a control signal indicating ending for update processing, and ends the update processing.

(B) Pending information <B>
When the received pending information is <B> indicating to put on hold the processes from verification, the update control unit 106 reads the program file 150 and the program key 160 from the hard disk unit 111, and writes the program file 150 and the program key 160 to the main storage unit 110.

Next, verification and installment of the check data are performed, thereby ending the update processing, in the same procedure as described from (A-b) to (A-c) (the explanation thereof is omitted).
(C) Pending information <C>
When the received pending information is <C> indicating to put on hold the decryption and installment, the update control unit 106 reads the encrypted compressed update program and the program key from the hard disk unit 111, and writes the encrypted compressed update program and the program key to the main storage unit 110.

Next, the update control unit 106 generates an update program using the encrypted compressed update program, and installs the generated update program, in the same procedure as described in (A-c) (explanation thereof is omitted).
(D) Pending information <D>
When the received pending information is <D>, the update control unit 106 reads the program file from the hard disk unit 111. The update control unit 106 then generates an update program by decompressing the compression update program included in the read program file by performing the decompression algorithm Z on the compression update program. Here, the read program file is obtained from DVD500c, and includes latest version information, a compressed update program, and a program size.

Next, the update control unit 106 rewrites part or all of the content playback program 142 stored in the hard disk unit 111, according to the generated update program. As a result, the installment completes.
When the installment completes, the update control unit 106 outputs a control signal indicating ending for update processing, and ends the update processing.

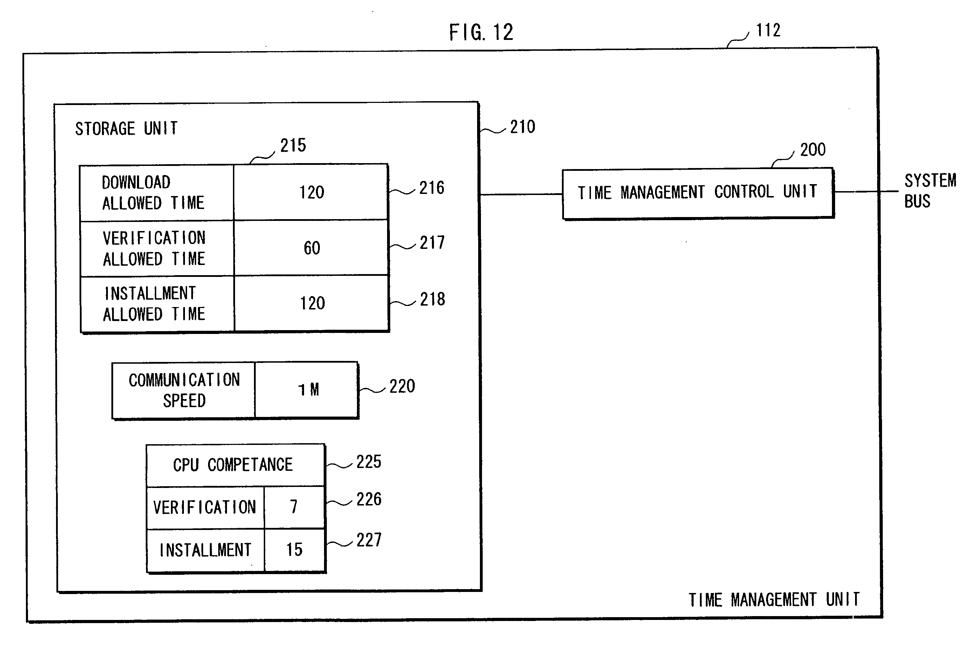

(10) Time management unit 112
As shown in FIG.12, the time management unit 112 is structured by a time management control unit 200 and a storage unit 210.
(i) Storage unit 210
As shown in FIG.12, the storage unit 210 stores therein an allowed time setting table 215, a communication speed 220, and a CPU competence 225.

The allowed time setting table 215 includes a download allowed time 216, a verification allowed time 217, and an installment allowed time 218, which have been set either by a manufacturing company or a user of the terminal apparatus 100 and are all represented in the unit of "second".
The communication speed 220 is a transmittance speed of the communication line set by a user, and is represented in the unit of "bps".

The CPU competence 225 includes a verification reference time 226 and an installment reference time 227, which have been set by a manufacturing company. The verification reference time 226 indicates that the time required for processing data of 1024 bytes pertaining to the hash value calculation by the update control unit 106 is 7 seconds. The installment reference time 227 indicates that the time required for installing data of 1024 bytes is 15 seconds

(ii) Time management control unit 200
The time management control unit 200 receives information for setting change of each allowed time and of a communication speed, from the main control unit 107, and rewrites the allowed time setting table 215 or the communication speed 220 of the storage unit 210, according to the received setting change information.
The time management control unit 200 stores therein a RAM. When having received a program size from the update control unit 106 and is instructed to predict a download time, the time management control unit 200 stores the program size in the RAM. Next, the time management control unit 200 predicts the download time by reading the communication speed 220 from the storage unit 210 and obtaining a quotient being a result of dividing the program size by the communication speed 220. Next, the time management control unit 200 reads the download allowed time 216 from the storage unit 210, compares the download allowed time 216 and the predicted download time, and outputs the comparison result to the update control unit 106.

In addition, when instructed by the update control unit 106 to predict a verification time, the time management control unit 200 predicts the verification time using the program size and the verification reference time assuming that the verification time is in proportion to the program size. Then the time management control unit 200 reads the verification allowed time 217 from the storage unit 210, compares the verification allowed time 217 and the predicted verification time, and outputs the comparison result to the update control unit 106.
In addition, when instructed by the update control unit 106 to examine the installment time, the time management control unit 200 predicts the installment time using the program size and the installment reference time 227 assuming that the installment time is in proportion to the program size. Next, the time management control unit 200 reads the installment allowed time 218, compares the installment allowed time 218 and the predicted installment time, and outputs the comparison result to the update control unit 106.

It should be noted here that the download time, the verification time, and the installment time are respectively a predicted time estimated by the time management unit 112, and so are not always equal to the actual time required by the terminal apparatus 100 for downloading, verification, and installment.
Furthermore, the prediction methods of the download time, the verification time, and the installment time described above are respectively one example, and other methods may be adopted.

Still further, the download time, the verification time, and the installment time may be obtained from the server apparatus 400 or from DVD500c. In such a case, the time management control unit 200 compares the download time obtained from the server apparatus 400 or from DVD500c with the download allowed time stored in the storage unit 210. With respect to the verification time and the installment time, too, the time management control unit 200 compares a corresponding value obtained from the server apparatus 400 or from DVD500c with a corresponding allowed time stored in the storage unit 210.

(11) Communication encryption/decryption unit 101
The communication encryption/decryption unit 101 receives a session key from the authentication unit 102, and stores the received session key. Every time the communication encryption/decryption unit 101 receives a new session key, the communication encryption/decryption unit 101 deletes the session key in storage and stores the new session key instead.
The communication encryption/decryption unit 101, when having received a title 143, version information 144 and an instruction for encryption regarding the content playback program from the update control unit 106, generates an encrypted title and encrypted version information by performing an encryption algorithm E2 on the received title 143 and the version information 144, and outputs the generated encrypted title and the encrypted version information to the update control unit 106. The encryption algorithm E2 used here corresponds to the decryption algorithm D2 used by the server apparatus 400.

In addition, when having received an encrypted program key and an instruction for decryption from the update control unit 106, the communication encryption/decryption unit 101 generates a program key by perf orming a decryption algorithm D3 onto the received encrypted program key using the session key. The decryption algorithm D3 used here is an algorithm for decrypting ciphertext generated using the encryption algorithm E3.
Here the encryption algorithms E2 and E3 are for example according to a DES (data encryption standard). The DES is a publicly known technology, and so the explanation thereof is omitted.

(12) Video generating unit 113
When having received a screen and an instruction for display from the main control unit 107, the video generating unit 113 generates an image signal using the received screen, and outputs the image signal to the monitor 120, in accordance with the vertical synchronization signal and the horizontal synchronization signal.
(13) Power source control unit 115

The power source control unit 115 detects a press of the power button (i.e. ON or OFF). When having detected ON of the power button, the power source control unit 115 controls the power supply unit 116 to start power supply, and outputs operation instruction information for controlling power supply start which indicates "power ON" to the main control unit 107.

When having detected OFF of the power button, the power source control unit 115 outputs operation instruction information indicating "power OFF" to the main control unit 107.
When having received a control signal indicating "power OFF" from the main control unit 107, the power source control unit 115 instructs the power supply unit 116 to stop the power supply.
1.5 Certificate management apparatus 600
The certificate management apparatus 600, under management of the certificate authority, generates and issues the public key certificates Cert_A and Cert_B certifying public keys respectively of the terminal apparatus 100 and the server apparatus 400, by authentication according to the X.509 version 1 format.

In addition, the certificate management apparatus 600 discloses the certificate authority public key PK_CA for verifying the certificate authority signature data 190 and 490 included in the public key certificates Cert_A and Cert_B, using the known URL or directory service on the Internet.
In addition, the certificate management apparatus 600 creates a certificate revocation list (CRL) including serial numbers of invalidated public key certificates, and distributes the created CRL using the known URL or directory service on the Internet.

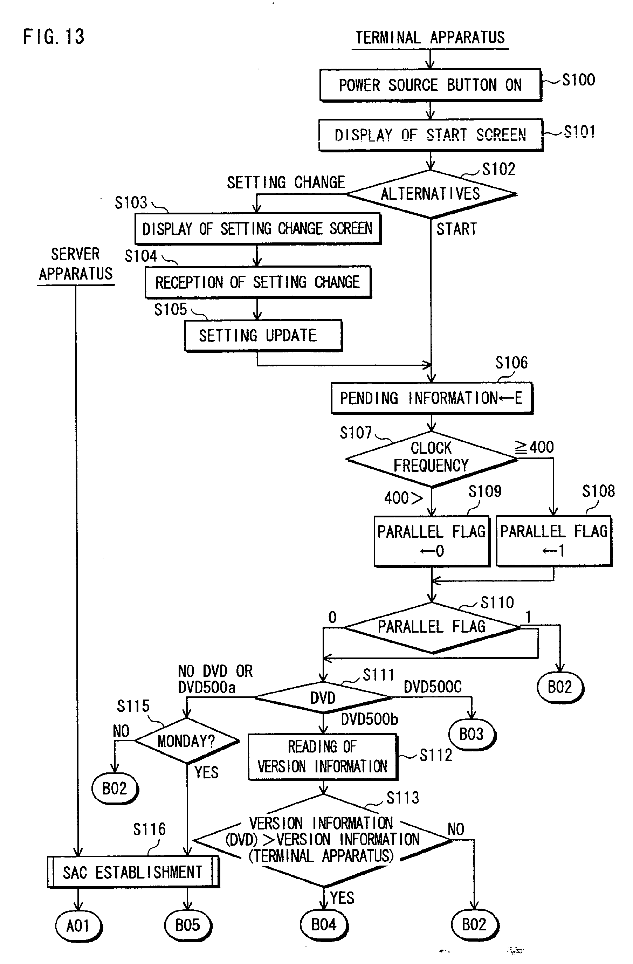

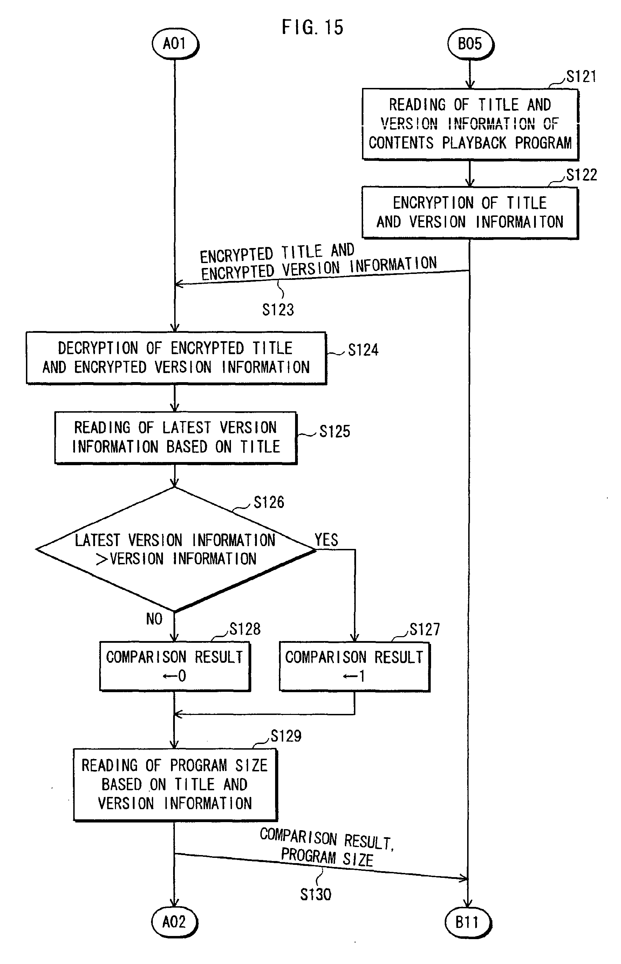

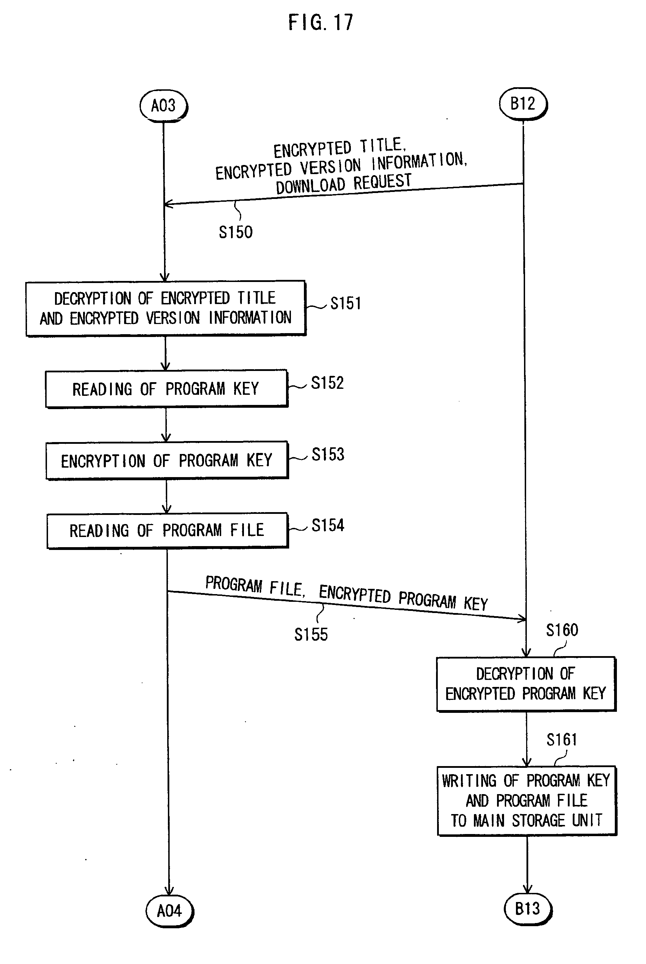

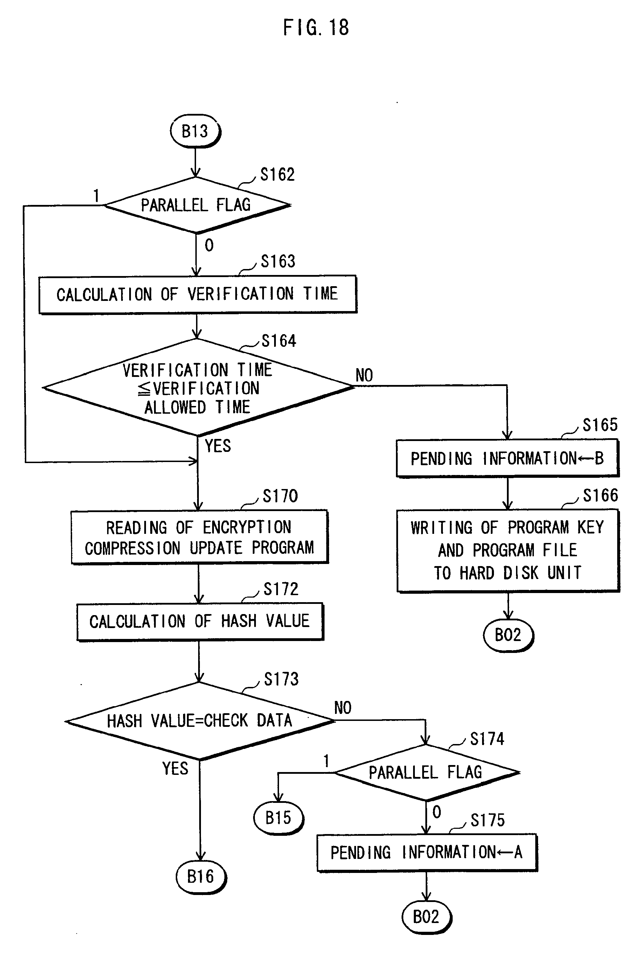

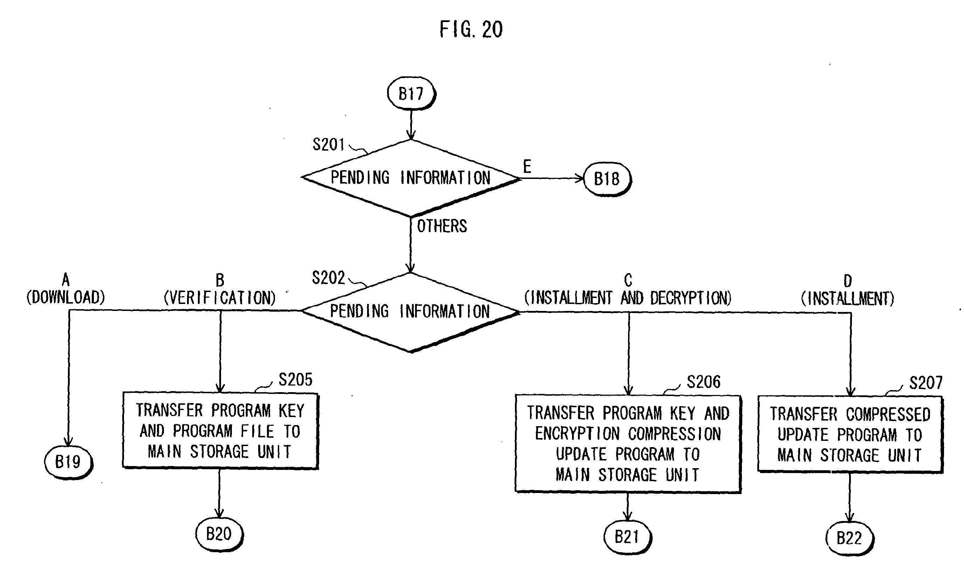

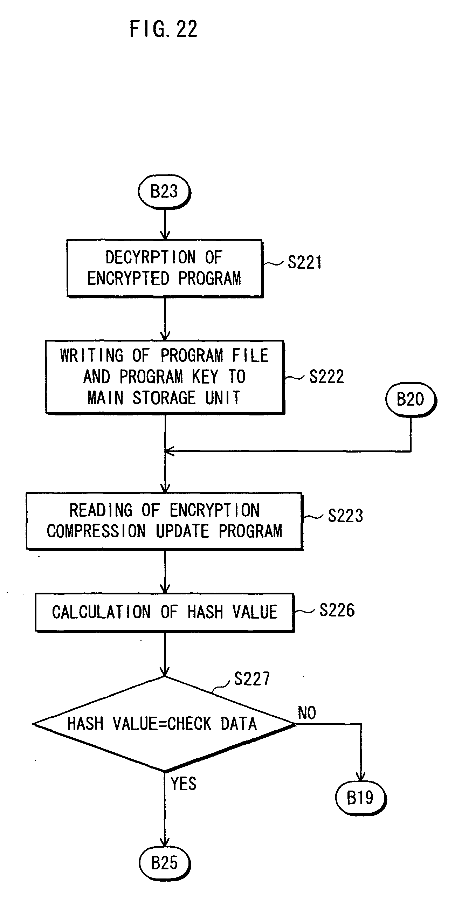

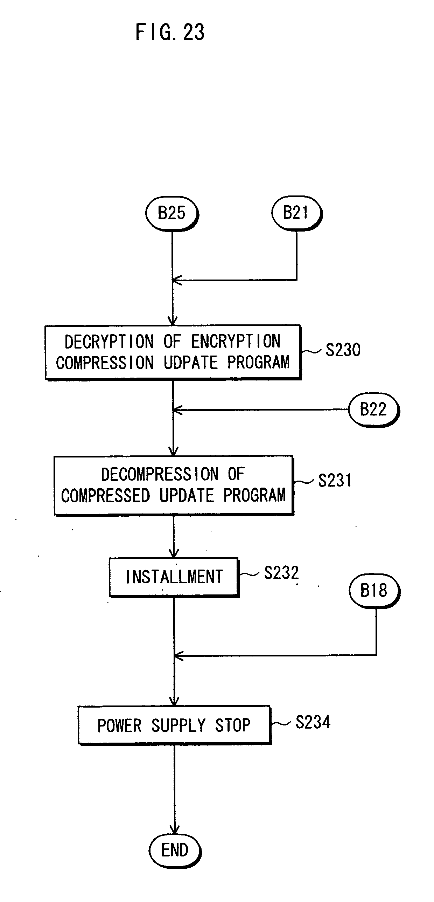

1.6 Operation of the terminal apparatus 100
The operation of the terminal apparatus 100 is described as follows.
(1) Operation of the terminal apparatus 100
The operation of the terminal apparatus 100 is described as follows using the flowcharts shown in FIGs.13-23.

When operation instruction information by a user indicating a press of the power button (i.e. power ON) is received (Step S100), a start screen 310 is displayed on the monitor 120 according to the instruction by the main control unit 107 (Step S101). When a start 311 is selected from among the alternatives displayed on the start screen 310 according to a user's button operation (Step S102), the main control unit 107 passes control to Step S106. When setting change 312 is selected (Step S102), the main control unit 107 displays a setting change screen 320 to the monitor 120 (Step S103), and receives input for setting change such as the update frequency, the communication speed, and each of the allowed times (Step S104). The main control unit 107 outputs the received setting change to the update control unit 106 or to the time management unit 112. The update control unit 106 rewrites the update frequency in storage using the received setting change, and the time management unit 112 rewrites the communication speed 220 and the allowed time setting table 215 in storage using the received setting change (Step S105).

Next, the main control unit 107 instructs to start update. When having received an instruction for update start, the update control unit 106 writes "E" indicating that there is no process on hold, as the pending information of the main storage unit 110 (Step S106). Next, the update control unit 106 judges whether the clock frequency of the microprocessor installed in the terminal apparatus 100 is 400MHz or above (Step S107). When the clock frequency is 400MHz or above, the parallel flag "1" is set (Step S108). When the clock frequency is below 400MHz, the parallel flag of "0" is set (Step S109).

Next, the update control unit 106 judges the set parallel flag (Step S110). When the parallel flag is "0", the control is passed to Step S111. When the parallel flag is "1", the update control unit 106 understands that the update and other processing are able to be executed in parallel, and so outputs, to the main control unit 107, a control signal indicating that the parallel processing is executable, and passes control to Step S111. When having received the control signal regarding the parallel processing, the main control unit 107 passes control to Step S195, and the terminal apparatus 100 performs in parallel the processing from Step S111 and the processing from Step S195.

Next, the update control unit 106 judges whether DVD has been inserted to the terminal apparatus 100. When the judgment results in the affirmative, the update control unit 106 further judges the type of DVD (Step S111).
When DVD500c is judged to have been inserted (Step S111), the update control unit 106 reads a program file 503c from DVD500c (Step S241), and compares the version information 505c included in the program file 503c and the version information 144 stored in the hard disk unit 111 (Step S242). When the version information 144 indicates the same generation as the generation of the version information 505c (Step S242:NO), it is interpreted that there is no need for update, and the control is passed to Step S195.

When the version information 144 indicates an older generation than the generation of the version information 505c (Step S242: YES), then the update control unit 106 judges that update is necessary.
Next, when the parallel flag is "1", the update control unit 106 further judges whether content is being played back (Step S245). When the judgment results in the negative, the control is passed to Step S251. When the judgment results in the affirmative (Step S245), the update control unit 106 writes "D" indicating to put on hold the installment, as the pending information of the main storage unit 110 (Step S246), writes the program file 503c to the hard disk unit 111 (Step S247), and passes control to Step S195.

When the parallel flag is "0" (Step S243), the update control unit 106 reads the program size 507c included in the program file 503c, and outputs the program size 507c to the time management unit 112 and instructs the time management unit 112 to predict the installment time (Step S251) . The time management unit 112 predicts the installment time using the program size 507c, compares the predicted installment time and the installment allowed time set either by a user or a manufacturing company of the terminal apparatus 100, and outputs the comparison result to the update control unit 106 (Step S252).

The update control unit 106 receives the comparison result. When the comparison result indicates that the predicted installment time exceeds the installment allowed time (Step S253:NO), the update control unit 106 passes control to Step S246.
When the comparison result indicates that the predicted installment time is within the installment allowed time (Step S253:YES), the update control unit 106 generates an update program by performing a decompression algorithm Z on the compressed update program 506c included in the program file 503c (Step S255).

Next, the update control unit 106 installs the generated update program (Step S256), and completes the update. Next, the control is passed to Step S195.
When it is judged that DVD500b has been inserted (Step S111), the update control unit 106 reads the version information 505b from DVD500b (Step S112), and compares the version information 144 stored in the hard disk unit 111 and the version information 505b (Step S113).

When the version information 144 indicates the same generation as the generation of the version information 505b (Step S113:NO), it is interpreted that there is no need for update, and the control is passed to Step S195. When the version information 144 indicates an older generation than the generation of the version information 505b (Step S113:YES), the update control unit 106 interprets that update is necessary, and then judges the parallel flag (Step S135).

When the parallel flag is "0" (Step S135), the update control unit 106 selects the program size information 531b from the program size table 530b stored in DVD500b, by referring to the version information 144. Then the update control unit 106 reads the program size 507b from the selected program size information 531b, outputs the read program size 5 07b to the time management unit 112, and instructs the time management unit 112 to predict the download time (Step S136). Then the control is passed to Step S141.

When the parallel flag is "1" (Step S135), the update control unit 106 passes control to Step S145.
When it is judged that there is no insertion of DVD or when DVD500a has been inserted (Step S111), the update control unit 106 judges whether the day included in the data information matches the update frequency indicating "Monday every week" which is set by the user (Step S115). When the judgment results in the negative, it is interpreted that there is no need for update, and the control is passed to Step S195. When on contrary the judgment results in the affirmative (Step S115), the update control unit 106 instructs the authentication unit 102 to perform SAC establishment.

The authentication unit 102 establishes SAC with the server apparatus 400 sharing a session key with the server apparatus 400, and informs the update control unit 106 of the SAC establishment success (Step S116).
Next, the update control unit 106 reads, from the hard disk unit 111, the title 143 and the version information 144 of the content playback program 142 (Step S121), outputs the title 143 and the version information 144 to the communication encryption/decryption unit 101, and instructs the communication encryption/decryption unit 101 to perform encryption. The communication encryption/decryption unit 101 receives the title 143 and the version information 144, and generates an encrypted title and encrypted version information by performing an encryption algorithm E2 on the title 143 and the version information 144 using the session key. Then the communication encryption/decryption unit 101 outputs the encrypted title and the encrypted version information to the update control unit 106 (Step S122).

Next, the update control unit 106 transmits the encrypted title and the encrypted version information to the server apparatus 400 (Step S123).
The control unit 407 being a component of the server apparatus 400, upon reception of the encrypted title and the encrypted version information from the terminal apparatus 100, instructs the communication encryption/decryption unit 401 to generate a title and version information by performing a decryption algorithm D2 on the encrypted title and the encrypted version information using the session key (Step S124). The control unit 407 then selects program information from the program update table 420 based on the generated title, reads the latest version information included in the selected program information (Step S125), and compares the latest version information and the version information generated by the communication encryption/decryption unit 401 (Step S126).

When both of the version information and the latest version information indicate the same generation (Step S126:NO), a comparison result of "0" is obtained (Step S128). When the version information indicates an older generation than the generation of the latest version information (Step S126:YES), a comparison result of "1" is obtained (Step S128).
Next, program information 421 is selected from the program update table 420 by referring to the title and the version information, and a program size included in the selected program information is read (Step S129).

The control unit 407 then transmits the comparison result and the program size to the terminal apparatus 100 (Step S130).
When having received the comparison result and the program size via the communication unit 103, the update control unit 106 judges the received comparison result (Step S138). When the comparison result is "0", it is understood that there is no need for update, and the control is passed to Step S195. When on contrary the comparison result is "1" (Step S138), it is understood that update is necessary, and then the parallel flag is judged (Step S139).

When the parallel flag is "1" (Step S139), the control is passed to Step S145. When the parallel flag is "0" (Step S139), the update control unit 106 outputs the received program size to the time management unit 112, and instructs the time management unit 112 to predict the download time. The time management unit 112 receives a program size, and predicts a download time based on the received program size, compares the predicted download time and the download allowed time, and outputs the comparison result to the update control unit 106 (Step S141).

The update control unit receives the comparison result. When the received comparison result indicates that the predicted download time exceeds the download allowed time (Step S142:NO), the update control unit 106 writes "A" indicating to put on hold the processes from downloading, as the pending information of the main storage unit 110, and outputs, to the main control unit 107, a control signal indicating to put on hold the update (Step S143). Then the control is passed to Step S195.

When the comparison result indicates that the predicted download time is within the download allowed time (Step S142:YES), the update control unit 106 instructs the authentication unit 102 to perform SAC establishment. The authentication unit 102 establishes SAC sharing the session key with the server apparatus 400 (Step S145).
When SAC is established, the title 143 and the version information 144 stored in the hard disk unit 111 are outputted to the communication encryption/decryption unit 101 and the communication encryption/decryption unit 101 is instructedto perform encryption. When having received the title 143 and the version information 144, the communication encryption/decryption unit 101 generates an encrypted title and encrypted version information by performing an encryption algorithm E2 on the title 143 and the version information 144, and outputs the encrypted title and the encrypted version information to the update control unit 106 (Step S146).

The update control unit 106 receives the encrypted title and the encrypted version information, transmits the encrypted title and the encrypted version information to the server apparatus 400 via the Internet 20, and requests downloading (Step S150).
When having received the encrypted title, the encrypted version information, and the download request, the control unit 407 of the server apparatus 400 controls the communication encryption/decryption unit 401 to generate a title and version information by performing a decryption algorithm D2 on the encrypted title and the encrypted version information using the session key (Step S151).

Next, the program information 421 is selected from the program update table 420 by referring to the title and the version information, and the program key is read from the selected program information 421 (Step S152).
Next, an encrypted program key is generated by performing an encryption algorithm E3 to the program key having read, with use of the session key (Step S153). Next, a program file 431 is read based on the program information 421 (Step S154), and the program file 431 and the encrypted program key are transmitted to the terminal apparatus 100 via the Internet 20 (Step S155).

The terminal apparatus 100 receives the program file and the encrypted program key, and the communication encryption/decryption unit 101 generates a program key by performing a decryption algorithm D3 on the encrypted program key with use of the session key (Step S160), and writes the program key and the program file to the main storage unit 110 (Step S161).
Next, the update control unit 106 judges the parallel flag (Step S162). When the parallel flag is judged to be "1", the control is passed to Step S170. When the parallel flag is judged to be "0" (Step S162), the update control unit 106 instructs the time management unit 112 to predict the verification time.

The time management unit 112 predicts the verification time from the program size (StepS163), compares the predicted verification time and the verification allowed time, and outputs the comparison result to the update control unit 106. When the comparison result received from the time management unit 112 indicates that the predicted verification time exceeds the verification allowed time (Step S164:NO), the update control unit 106 writes "B" indicating to put on hold the processes from verification, as the pending information of the main storage unit 110 (Step S165). Next, the update control unit 106 writes the program key and the program file to the hard disk unit 111 (Step S166), and passes control to Step S195.

When the comparison result indicates that the predicted verification time is within the verification allowed time (Step S164:YES), the update control unit 106 reads the encrypted compressed update program from the program file (Step S170). Next, a hash value is calculated by substituting the encrypted compressed update program into the hash function (Step S172). Next, the check data included in the program file is read, and the check data is compared with the hash value (Step S173).

When the hash value matches the check data (Step S173:YES), it is judged as a verification success, and the control is passed to Step S181.
When the hash value does not match the check data (Step S173: NO), it is judged as a verification failure, and the update control unit 106 judges the parallel flag (Step S174). When the parallel flag is "1" (Step S174), the control is returned to Step S145 and processing is redone. When the parallel flag is "0" (Step S174), "A" indicating to put on hold the processes from downloading is written as the pending information of the main storage unit 110, a control signal indicating to put on hold the update is outputted to the main control unit 107 (Step S175), and the control is passed to Step S195.

The update control unit 106 judges the parallel flag (Step S181). When the parallel flag is "1", the update control unit 106 then judges whether the content is being played back by being controlled by the main control unit 107 (Step S182). When the judgment results in the negative, the control is passed to Step S186. When the judgment results in the affirmative (Step S182), the update control unit 106 writes "C" indicating to put on hold decryption and installment, as the pending information of the main storage unit 110 (Step 5183) . Next, the encrypted compressed update program and the program key are written to the hard disk unit 111 (Step S184), and the control is passed to Step S195.

When the parallel flag is "0" (Step S181), the update control unit 106 instructs the time management unit 112 to predict the installment time. The time management unit 112 predicts the installment time from the program size, compares the predicted installment time and the installment allowed time, and outputs the comparison result to the update control unit 106 (Step S186). When the received comparison result indicates that the predicted installment time exceeds the installment allowed time (Step S187), the update control unit 106 passes the control to Step S183.

When the comparison result indicates that the predicted installment time is within the installment allowed time (Step S187), the update control unit 106 generates a compressed update program by performing a decryption algorithm D1 to the encrypted compressed update program using the program key (Step S188), and generates an update program by performing a decompression algorithm Z to the compressed update program (Step S189).

Next, the generated update program is installed (Step S191). Then the update processing is finished and control is passed to the main control unit 107.
The main control unit 107 receives operation instruction information via a button press of a user (Step S195). When the play back button is pressed (Step S196), the content is played back according to the content playback program (Step S197). When any of the other buttons are pressed (Step S195), corresponding processing is performed (Step S198). After this and until the power button is pressed OFF, reception of a button press, content playback, or other processing are repeated.

When the power button is pressed OFF (Step S196), the main control unit 107 reads pending information from the main storage unit 110, confirms whether the read pending information indicates "E" (Step S201). When the pending information is judged to be "E" (Step S201), the control is passed to Step S234.
When the pending information is judged to be other than "E" (Step S201), the pending information is outputted to the update control unit 106, and update re-start is instructed. The update control unit 106 determines the received pending information (Step S202). When the received pending information is "B" indicating to put on hold the processes from verification (Step S202), the update control unit 106 reads the program key and the program file from the hard disk unit 111, and writes the program key and the program file to the main storage unit 110 (Step S205), and passes the control to Step S223.

When the received pending information is "C" indicating to put on hold decryption and installment (Step S202), the update control unit 106 reads the program key and the encrypted compressed update program from the hard disk unit 111, writes the program key and the encrypted compressed update program to the main storage unit 110 (Step S206), and passes the control to Step S230.
When the received pending information is "D" indicating to put on hold installment (Step S202), the update control unit 106 reads the compressed update program from the hard disk unit 111, writes the compressed update program to the main storage unit 110 (Step S207), and passes the control to Step S231.

When the received pending information is "A" indicating to put on hold the processes from downloading (Step S202), the update control unit 106 instructs the authentication unit 102 to establish SAC. In response, the authentication unit 102 establishes SAC sharing a session key with the server apparatus 400 via the Internet 20 (Step S210).
When SAC has been established, the update control unit 106 reads the title 143 and the version information 144 from the hard disk unit 111, outputs the title 143 and the version information 144 to the communication encryption/decryption unit 101 and instructs the communication encryption/decryption unit 101 to perform encryption. The communication encryption/decryption unit 101 receives the title 143 and the version information 144, generates an encrypted title and encrypted version information by performing an encryption algorithm E2 on the title 143 and the version information 144 using the session key, and outputs the encrypted title and the encrypted version information to the update control unit 106 (Step S211).

Next, the update control unit 106 receives the encrypted title and the encrypted version information, transmits the encrypted title and the encrypted version information to the server apparatus 400 via the Internet 20, and requests downloading (Step S212).
When having received the encrypted title, the encrypted version information, and the download request, the control unit 407 of the server apparatus 400 controls the communication encryption/decryption unit 401 to generate a title and version information by performing a decryption algorithm D2 on the encrypted title and encrypted version information with use of the session key (Step S213).

The control unit 407 then selects program information 421 from the program update table 420 based on the title and the version information, reads the program key included in the selected program information 421 (Step S214), and generates an encrypted program key by performing an encryption algorithm E3 on the program key using the session key (Step S215) . Next, a program file 413 is read based on the selected program information 421 (Step S216), and the program file 431 and the encrypted program key are transmitted to the terminal apparatus 100 via the Internet 20 (Step S217).

The terminal apparatus 100 receives the program file and the encrypted program key. The communication encryption/decryption unit 101 generates a program key by performing a decryption algorithm D3 on the encrypted program key with use of the session key (Step S221), and writes the generated program key and the received program file to the main storage unit 110 (Step S222).
Next, the encrypted compressed update program included in a program file is read from the main storage unit 110 (Step S223). Then a hash value is calculated by substituting the encrypted compressed update program into a hash function (Step S226). Then the check data included in the program file is read, and the check data and the calculated hash value are compared (Step S227).

When the calculated hash value and the check data match (Step S227: YES), the verification is considered as a success, and the control is passed to Step S230.
When the calculated hash value and the check data do not match (Step S227:NO), the verification is considered as a failure, and the control is returned to Step S210 to redo the processing therefrom.
When the verification has succeeded, the update control unit 106 generates a compressed update program by performing a decryption algorithm D1 on the encrypted compressed update program with use of the program key (Step S230). Next, the update control unit 106 generates an update program by performing a decompression algorithm Z on the compressed update program (Step S231), and installs the generated update program (Step S232). When the installment completes, a control signal indicating ending for the update processing is outputted to the main control unit 107.

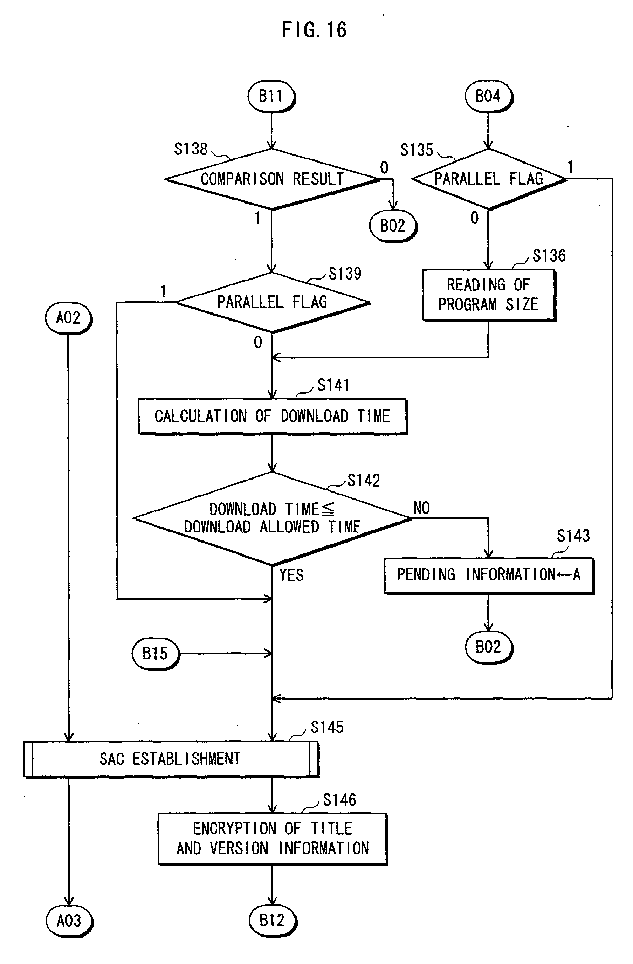

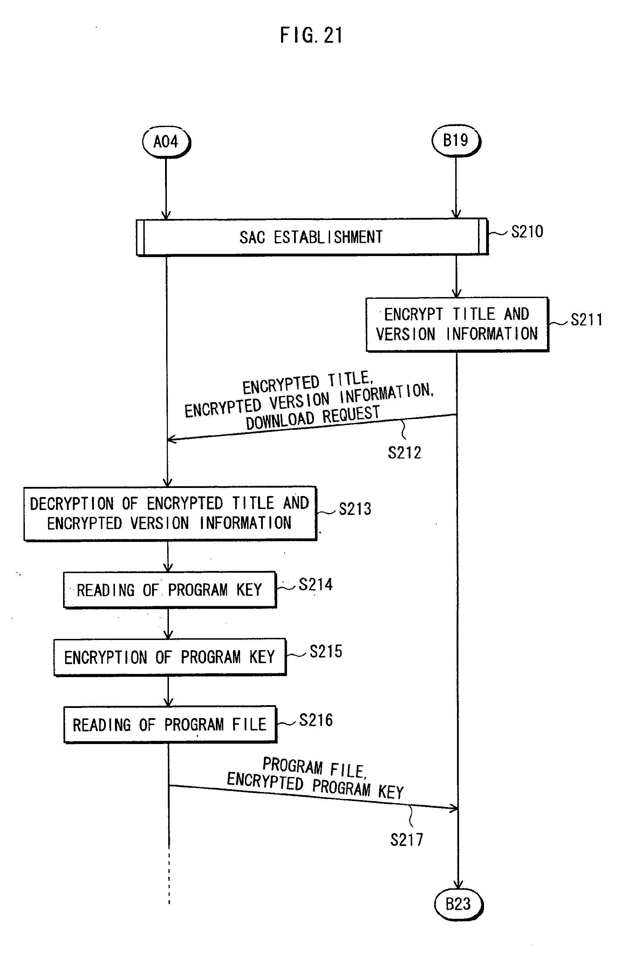

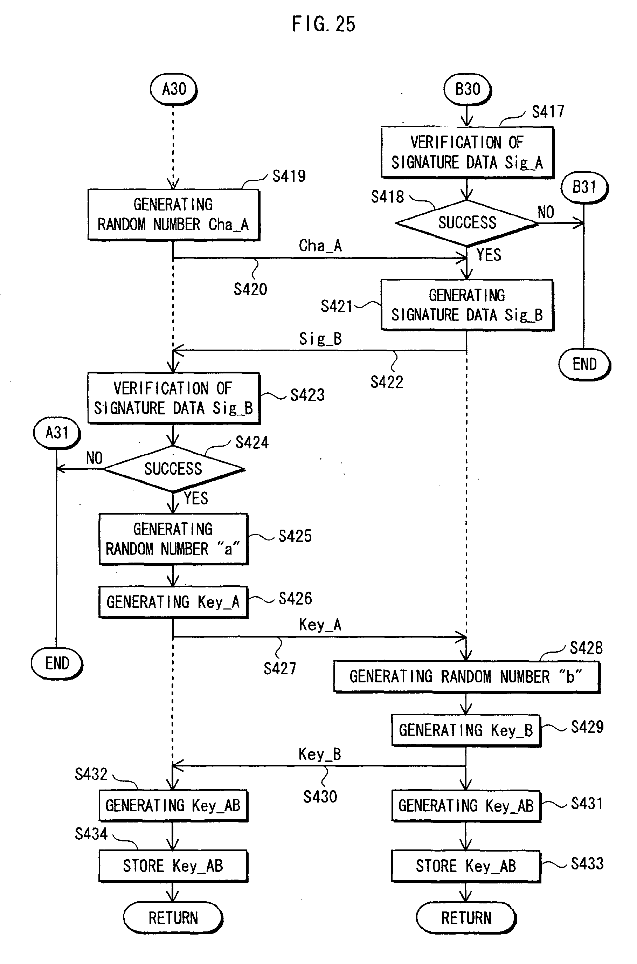

When having received the control signal indicating ending for the update processing, the main control unit 107 stops power supply via the power source control unit 115 and the power supply unit 116 (Step S234).
(2) SAC establishment between the terminal apparatus 100 and the server apparatus 400
The procedure of SAC establishment between the terminal apparatus 100 and the server apparatus 400 is described below using the flowcharts of FIGs.25-26. This corresponds to detailed description of Step S116 of FIG.13, Step S145 of FIG.16, and Step S210 of FIG.21.

Note that the SAC establishment method is only one example, and other authentication method, or other key agreement method may be used. In the following description, suppose that G() indicates a key generating function, Y is a parameter unique to a system, and the relation of G(x, G(z,Y))=G(z,G(x,Y)) is satisfied.
The terminal apparatus 100 reads the public key certificate Cert_A (Step S401), and transmits the public key certificate Cert_A to the server apparatus 400 (Step S402).

The server apparatus 400 performs signature verification by performing a signature verification algorithm Z on the certificate authority signature data Sig_A included in the received public key certificate Cert_A (Step S403). When the verification result indicates a failure (Step S404), the processing is finished.
When the verification result indicates a success (Step S404), CRL is read (Step S405), and it is judged whether the serial number included in the received public key certificate Cert_A has been registered in the read CRL (Step S406). When the registration is confirmed (Step S406), the processing is finished. When no registration is confirmed (Step S406), the public key certificate Cert B of the server apparatus 400 is read (Step S407), and sent to the terminal apparatus 100 (Step S408).

When having received the public key certificate Cert_B, the terminal apparatus 100 performs signature verification by performing a signature verification algorithm V on the signature data Sig_CA of the certificate authority included in the public key certificate Cert_B, using the public key PK_CA of the certificate authority (Step S409) . When the verification result indicates a failure (Step S410), the processing is finished. When the verification result indicates a success (Step S410), CRL is read, and it is judged whether the serial number included in the public key certificate Cert_B is registered in CRL (Step S412). When the registration is confirmed (Step S412), the processing is finished. When no registration is confirmed (Step S412), the processing is continued.

The server apparatus 400 generates a random number Cha_B (Step S413), the server apparatus 400 transmits the random number Cha_B to the terminal apparatus 100 (Step S414).
When having received the random number Cha_B, the terminal apparatus 100 generates signature data Sig_A by performing a signature generating algorithm S to the received random number Cha_B with use of the secret key SK_A of the terminal apparatus 100 (Step S415), and transmits the generated signature data Sig_A to the server apparatus 400 (Step S416).

When having received the signature data Sig_A, the server apparatus 400 performs signature verification by performing a signature verification algorithm V on the signature data Sig_A using a public key PK_A of the terminal apparatus included in the received public key certificate Cert_A (Step S417). When the verification result indicates a failure (Step S418), the processing is finished. When the verification result indicates a success (Step S418), the processing is continued.

The terminal apparatus 100 generates a random number Cha_A (Step S419), and transmits the generated random number Cha_A to the server apparatus 400 (Step S420).
The server apparatus 400 generates signature data Sig_B by performing a signature generating algorithm S using a secret key SK_B of the server apparatus 400 (Step S421), and transmits the generated signature data Sig_B to the terminal apparatus 100 (Step S422).

When having been received the signature data Sig_B, the terminal apparatus 100 performs signature verification by performing a signature verification algorithm V to the received signature data Sig B using the public key PK_B included in the received public key certificate Cert_B (Step S423). When the signature verification indicates a failure, the processing is finished (Step S424). When the signature verification indicates a success (Step S424), the terminal apparatus 100 generates a random number "a" (Step S425), generates Key_A=Gen(a,Y) using the generated random number "a", and transmits the generated Key_A to the server apparatus 400.

When having received the Key_A, the server apparatus 400 generates a random number "b" (Step S429), generates Key_B=Gen (b, Y) using the generated random number "b" (Step S429), and transmits the generated Key_B to the terminal apparatus 100 (Step S430).
When having received the Key_B, the terminal apparatus 100 generates Key_AB=Gen (b, Key_B) =Gen (a, Gen (b, Y)), using the received Key_B and the random number "a" (Step S432). The Key_AB is stored as a session key (Step S434).

The server apparatus 400 generates Key_AB=Gen(b,Gen(a,Y)) using the received Key_A and the generated random number "b" (Step S431). The generated Key_AB is stored as a session key (Step S433).
In the above way, the terminal apparatus 100 and the server apparatus 400 are able to share a session key, and to establish SAC.

1.7 Conclusion
As described so far, according to the present invention, in updating a computer program, it is first judged whether update processing and content playback processing are able to be performed in parallel by referring to the clock frequency of the microprocessor installed in the terminal apparatus 100. If the parallel processing is confirmed as possible, the update processing is immediately started.

Considering the case where the parallel processing is impossible, a user or a manufacturing company of the terminal apparatus 100 sets in advance an allowed time respectively for each of downloading, verification, and installment included in the update processing. The terminal apparatus 100 calculates a time required for downloading, verification, and installment respectively, and judges whether each processing ends within the preset allowed time. When the judgment results in the affirmative, corresponding processing is performed immediately. When the judgment results in the negative, corresponding processing is performed after a user has finished using the terminal apparatus 100.

According to the present embodiment, the processing that takes more time than the preset allowed time is postponed. According to this structure, it becomes possible to perform update without conflicting with a user's usage of the computer program.
1.7 Modification example regarding the first embodiment
So far, the first embodiment of the present invention has been described. However the present invention should not be limited to the described structure, and includes the following example regarding the first embodiment, for example.

(1) In the above-described embodiment, the version information 505b stored in DVD500b and the version information 505c stored in DVD500c are assumed to be identical to the latest version stored in the server apparatus 400.
However in reality, the latest version information stored in the server apparatus 400 is updated as necessary. Therefore the case may happen where the version information 505b and the version information 505c are of an older generation than the latest version information stored in the server apparatus 400, and that the terminal apparatus 100 cannot obtain the latest update program.

Considering such a case, it is possible to arrange to obtain the latest update program in the following way.
(i) When DVD500b has been inserted
DVD500b further stores therein a sale date of DVD500b itself. The terminal apparatus 100 reads the sale date from DVD500b. When it is judged that a predetermined time has passed from the sale date, the latest update program is obtained from the server apparatus 400 unconditionally in the same manner as when DVD500a has been inserted in the above-stated embodiment.

(ii) When DVD500c has been inserted
DVD500c further stores a sale date of DVD500c itself. The terminal apparatus 100 reads the sale data from DVD500c. When it is judged that a predetermined time has passed from the sale date, the latest update program is obtained in the following manner of (a), (b), or (c).
(a) Version information 144 <Version information 505c
The terminal apparatus 100 compares the version information 144 stored in the terminal apparatus 100 with the version information 505c stored in DVD500c. When it is judged that the version information 144 is of an older generation than the generation of the version information 505c, the terminal apparatus 100 transmits the title 143 stored in the hard disk unit 111 and the version information 505c read from DVD500c to the server apparatus 400, after encrypting the title 143 and the version information 505c.

The server apparatus 400 compares the received version information and the latest version information stored in the server apparatus 400, and transmits the comparison result to the terminal apparatus 100.
When the terminal apparatus 100 judges that the received comparison result is 1, meaning that the latest version information stored in the server apparatus 400 is of a newer generation than the generation of the version information 505c stored in DVD500c, the terminal apparatus 100 obtains the latest update program from the server apparatus 400.

When the received comparison result is 0, meaning that the latest version information stored in the server apparatus 400 is of the same generation as the generation of the version information 505c stored in DVD500c, the latest update program is obtained from DVD500c.
(b) Version information 144 = Version information 505c
The terminal apparatus 100 compares the version information 144 stored in the terminal apparatus 100 with the version information 505c stored in DVD500c. When the version information 144 is of the same generation as the generation of the version information 505c, the title 143 is read from the hard disk unit 111, and the title 143 and the version information 144 are transmitted.

The server apparatus 400 compares the received version information 144 and the latest version information stored in the server apparatus 400 to obtain a comparison result, and transmits the obtained comparison result to the terminal apparatus 100.
The terminal apparatus 100 determines the received comparison result. When the comparison result is 1, meaning that the version information 144 is of an older generation than the generation of the latest version information stored in the server apparatus 400, the terminal apparatus 100 obtains the latest update program from the server apparatus 400 and pursues update.

When the received comparison result is 0, meaning that the version information 144 is of the same generation as the generation of the latest version information stored in the server apparatus 400, the update processing is finished.
(c) Version information 144 > version information 505c
The terminal apparatus 100 compares the version information 144 stored in the terminal apparatus 100 with the version information 505c stored in DVD500c. When it is judged that the version information 144 is of a newer generation than the generation of the version information 505c, the terminal apparatus obtains the latest update program from the server apparatus 400 as in the same manner as when DVD500a has been inserted in the above-stated embodiment.

(2) In the first embodiment described above, when DVD500a is inserted to the terminal apparatus 100, the terminal apparatus 100 transmits the version information of the content playback program stored in the terminal apparatus 100 to the server apparatus 400, and the server apparatus 400 compares the version information and the latest version information. However, it is alternatively possible to arrange so that the terminal apparatus 100 receives the latest version information from the server apparatus 400, and the terminal apparatus 100 performs the comparison between the version information stored in the terminal apparatus 100 and the received latest version information.

(3) A structure is also possible in which DVD500a, DVD500b, and DVD500c store therein a future update program development completion date, and the terminal apparatus 100 obtains a new update program from the server apparatus 400 when the completion date has come.
2. Second embodiment
The following describes an update system 11 as one embodiment relating to the present invention.

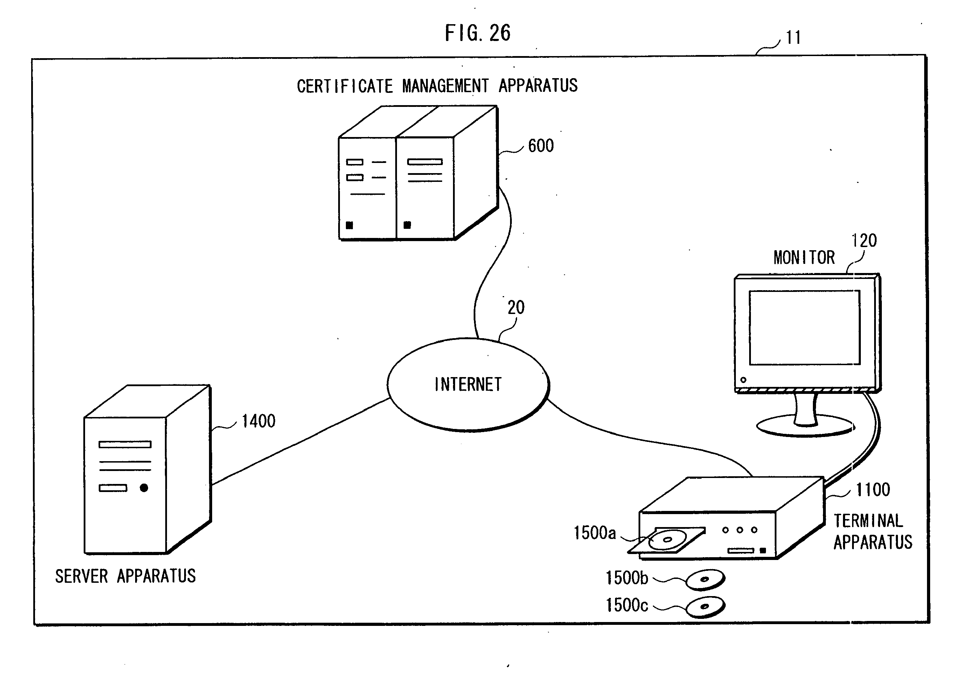

2.1 Structure of update system 11
As FIG. 26 shows, the update system 11 is composed of a terminal apparatus 1100, a server apparatus 1400, and a certificate management apparatus 600, which are connected to each other via the Internet 20. In the following description, the same parts as in the first embodiment are not discussed, and mainly the differences from the first embodiment are discussed.

Just as the terminal apparatus 100 of the first embodiment, the terminal apparatus 1100 stores therein a content playback program including a procedure for playing back a content composed of videos and sounds, and version information indicating a generation of the program. When a DVD is inserted, the terminal apparatus 1100 plays back the content according to the program.
The server apparatus 1400 stores therein an update program used for updating the content playback program to a new generation. Upon request by the terminal apparatus 1100, the server apparatus 1400 transmits an update program to the terminal apparatus 1100.

Prior to performing an update, the terminal apparatus 1100 obtains an importance level of the update. The importance level of the update indicates how important an update of the program stored in the terminal apparatus 1100 to the latest generation is. For example, the importance level will be high if the program of the latest generation contains an important improvement for solving a security problem of the currently stored content playback program. On the contrary, the importance level will be low if there is no particular problem with the currently stored content playback program even if the program of the latest generation contains a new function.

In updating the content playback program currently in storage, the terminal apparatus 1100 determines the update timing of the program depending on the value of content stored in the DVD and the above-described importance level. In the present embodiment, the value of a content is determined by whether the content is new or old. Specifically, a new content has a high value, and an old content has a low value.
Specifically, the following procedure is performed.
A. When the importance level of an update is low, the following procedure is performed regardless of whether the content is new or old. A time required for performing each process regarding the update is calculated, and it is determined whether to immediately perform the process or put it on hold, according to a corresponding required time.

B. When the update level is high but the content is old, the following procedure is performed. A time required for performing each process regarding the update is calculated, and it is determined whether to immediately perform the process or put it on hold, according to a corresponding required time.
C. When the update level is high and the content is new, all the processes regarding the update are immediately performed regardless of the required time for the processes.

2.2 DVD1500a, DVD1500b, and DVD1500c
There are three types of DVD inserted to the terminal apparatus 1100,namely,DVD1500a,DVD1500b,and DVD1500c,which are respectively a portable optical disc medium able to record a large amount of data.
Just as in the first embodiment, according to the type of DVD inserted to the terminal apparatus 1100, an obtaining method of an update program regarding a content playback program stored in the terminal apparatus 1100 changes. The specific obtaining method is the same as the obtaining method used in the first embodiment when each of DVD500a, DVD500b, and DVD500c is inserted, and so the description thereof is omitted.

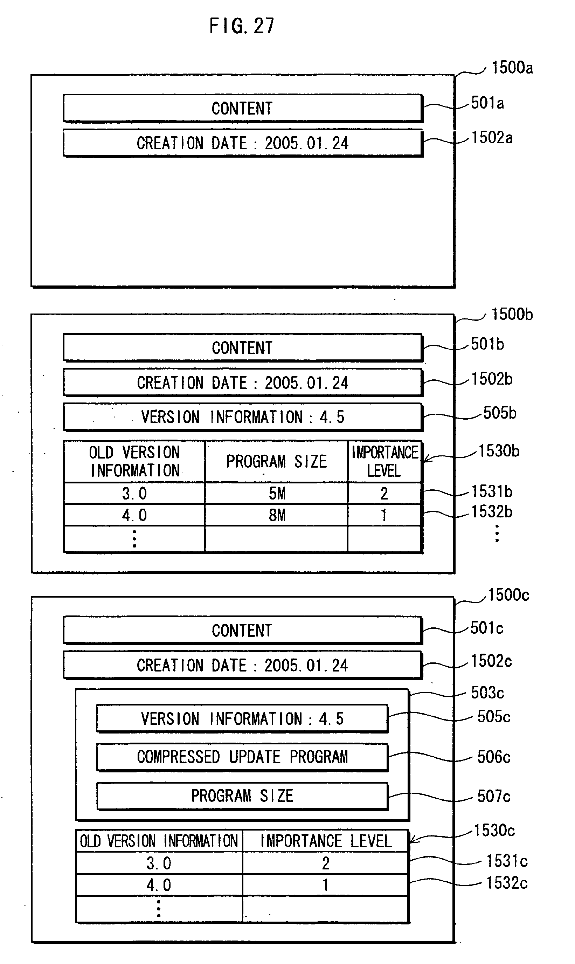

As follows, information stored in DVD1500a, DVD1500b, and DVD1500c is explained below using FIG.27.
DVD1500a stores a content 501a and a created date 1502a. The content 501a is the same as the content 501a stored in DVD500a of the first embodiment. The created date 1502a indicates that the date on which the content 501a was created is "January 24, 2005".

DVD1500b stores a content 501b, a created date 1502b, version information 505b, and an update data table 1530b. The content 501b and the version information 505b are respectively the same as the content 501b and the version information 505b stored in DVD500b of the first embodiment, and so the description is omitted. The created date 1502b indicates that the date on which the content 501b was created is "January 24, 2005".

The update data table 1530b is structured by a plurality of pieces of update information 1531b, 1532b, ..., and each piece of update information is composed of old version information, a program size, and an importance level.
The program size indicates a size of an encrypted compressed update program. The encrypted compressed update program is generated by compressing and encrypting an update program including a procedure of updating the content playback program from a generation indicated by old version information to a generation indicated by the version information 505b.

The importance level indicates how important is an update of the content playback program from the generation indicated by the old version information to the generation indicated by the version information 505b. The importance level is specifically represented by "1" or "2". The importance level of "2" indicates that the importance of an update from the generation indicated by the old version information to the generation indicated by the version information 505b is high, since the content playback program of the generation indicated by the version information 505b contains an important improvement for solving a security problem of the content playback program of the generation indicated by the old version information for example. The importance level of "1" indicates that the importance of an update is low because there is no particular problem with the program of the old version even if the content playback program of the generation indicated by the version information 505b contains a new function that does not exist in the content playback program of the generation indicated by the old version information.

DVD1500c stores therein a content 501c, a created date 1502c, a program file 503c, and an update importance level table 1530c. Since the content 501c and the program file 503c are respectively the same as the content 501c and the program file 503c stored in DVD500c of the first embodiment, and so the explanation is omitted.
The created date 1502c indicates that the date on which the content 501c was created is "January 24, 2005". The update importance level table 1530c is composed of a plurality of pieces of importance level information 1531c, 1532c, ..., and each piece of importance level information includes old version information and an importance level. The importance level indicates how important is an update from the generation indicated by the old version information to the generation indicated by the version information 505c. The importance level is specifically represented by "1" or "2". Here the importance level is the same as the importance level included in the update data table 1530b stored in DVD500b.

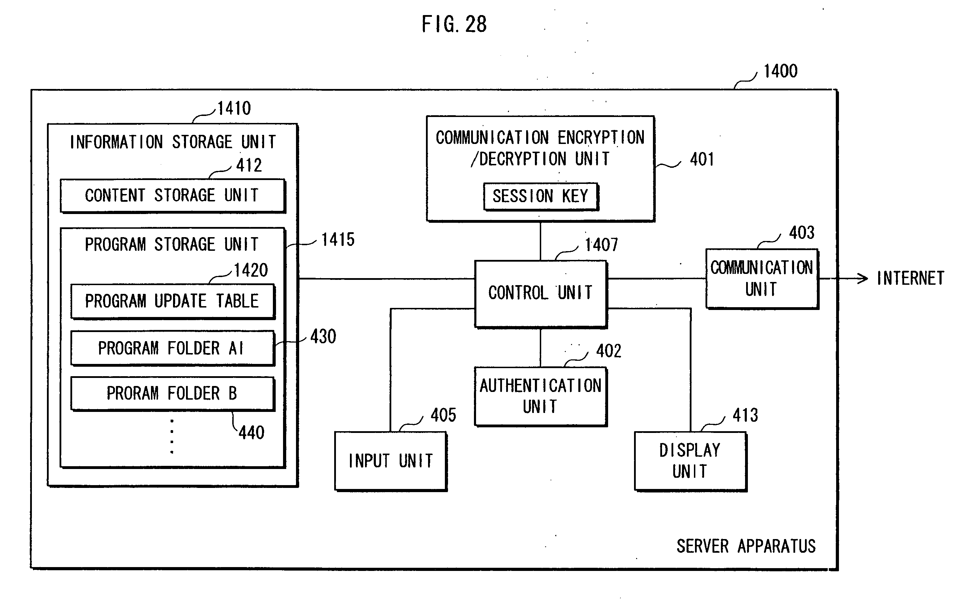

Note that although not illustrated, DVD1500a, DVD1500b, and DVD1500c respectively stores therein a program identifier that identifies a content playback program for playing back the content stored therein.
2.3 Server apparatus 1400
As FIG.28 shows, the server apparatus 1400 is made up of a communication encryption/decryption unit 401, an authentication unit 402, a communication unit 403, an input unit 405, a control unit 1407, an information storage unit 1410, and a display unit 413.

As follows, each unit constituting the server apparatus 1400 is explained. However the structure and the operation regarding the communication encryption/decryption unit 401, the authentication unit 402, the communication unit 403, the input unit 405, and the display unit 413 are not described in the following explanation, since these units are the same as the communication encryption/decryption unit 401, the authentication unit 402, the communication unit 403, the input unit 405, and the display unit 413 of the server apparatus 400 of the first embodiment.

(1) Information storage unit 1410
As FIG.28 shows, the information storage unit 1410 is composed of a content storage unit 412 and a program storage unit 1415. The content storage unit 412 is the same as the content storage unit 412 included in the information storage unit 410 being one component of the server apparatus 400 of the first embodiment.
The program storage unit 1415 stores therein a program update table 1420, a program folder AI430, a program folder B440, .... The program folder AI430 and the program folder B440 are not described in the following since they are the same as the program folder AI430 and the program folder B440 that the server apparatus 400 in the first embodiment owns.

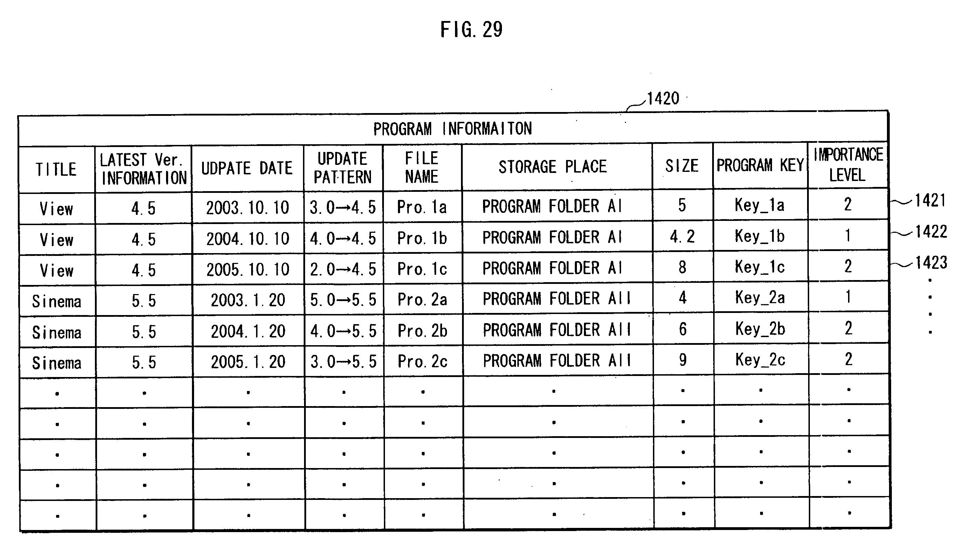

As FIG.29 shows, the program update table 1420 is composed of a plurality of pieces of program information 1421, 1422, 1423, .... Each piece of program information is made of a title, latest version information, an updated date, an update pattern, a file name, a storage place, a program size, a program key, and an importance level. The above items other than the importance level is the same as the title, the latest version information, the updated date, the update pattern, the file name, the storage place, the program size, and the program key, which constitute the program update table 420 of the first embodiment, and so are not described in the following.

The importance level indicates an importance of an update indicated by the update pattern. "2" indicates a high importance, and "1" indicates a low importance. For example, the program information 1421 includes an update pattern "3.0→4.5", and an importance level of "2". This means that an update from the version "3. 0" to the version "4.5" is of a high importance, for example because the version "4.5" complements a security defect.

Here, the importance level included in the program update table 1420 is the same as the importance level included in the update data table 1530b in DVD1500b, and as the importance level included in the update importance level table 1530c in DVD1500c. For example, the update information 1531b in the update data table 1530b stored in DVD1500b indicates that the importance level of an update from the generation indicated by the old version information "3.0" to the generation indicated by the version information "4.5" is "2", which is the same as the importance level "2" included in the program information 1421.

(2) Control unit 1407
The control unit 1407 is structured by a microprocessor, a RAM, and a ROM, which are not specifically illustrated in the drawings. The RAM and the ROM respectively store a computer program therein. The control unit 1407 achieves its function by the microprocessor operating according to the computer program.

When having received a public key certificate Cert_A from the terminal apparatus 1100 via the communication unit 403, the control unit 1407 outputs the received Cert_A to the authentication unit 402, to instruct the authentication unit 402 to establish SAC. The control unit 1407 also receives a control signal reporting a SAC establishment success from the authentication unit 402.
In addition, the control unit 1407 receives an encrypted title and encrypted version information from the terminal apparatus 1100 via the communication unit 403. When having received these pieces of information, the control unit 1407 outputs the encrypted title and encrypted version information to the communication encryption/decryption unit 401, and instructs the communication encryption/decryption unit 401 to perform decryption. The control unit 1407 receives a title and version information from the communication encryption/decryption unit 401.

Then from among the pieces of program information in the program update table 1420, the control unit 1407 selects the piece of program information that includes the received title, reads the latest version information from the selected program information, and compares the latest version information and the received version information.
When the received version information indicates an older generation than the generation of the latest version information, the control unit 1407 selects, from the program update table 1420, program information 1421 that includes the received title and that the receivedversion information is the same as the version information before update in the update pattern, reads the program size and the importance level included in the selected program information 1421, and transmits the importance level and the program size to the terminal apparatus 1100 via the communication unit 403.

When the received version information is of the same generation as the generation of the latest version information, the control unit 1407 generates an importance level of "0". Here, the importance level of "0" indicates that the content playback program is already of the latest generation, and so there is no need of update at all. Next, the control unit 1407 transmits the generated importance level "0" to the terminal apparatus 1100.
In addition, when having received an encrypted title, encrypted version information, and a download request from the terminal apparatus 1100, the control unit 1407 outputs the encrypted title and the encrypted version information, to the communication encryption/decryption unit 401, and instructs the communication encryption/decryption unit 401 to perform decryption. Next, the control unit 1407 receives a title and version information from the communication encryption/decryption unit 401, selects program information 1421 from the program update table 1420 based on the title and the version information, and reads the program key included in the selected program information 1421. The control unit 1407 then outputs the read program key to the communication encryption/decryption unit 401 and instructs the communication encryption/decryption unit 401 to perform encryption.

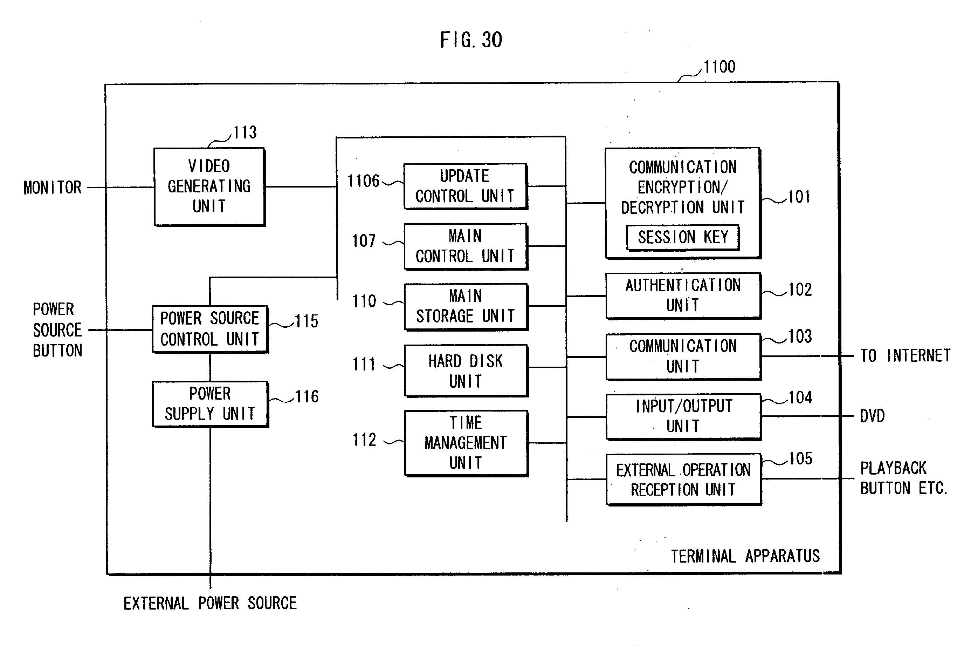

Next, the control unit 1407 receives an encrypted program key from the communication encryption/decryption unit 401, and reads the program file 431 by referring to the file name and the storage place included in the selected program information 1421. Next, the control unit 1407 transmits the program file 431 and the encrypted program key to the terminal apparatus 1100 via the communication unit 403 and the Internet 20.
2.4 Terminal apparatus
As FIG.30 shows, the terminal apparatus 1100 includes a communication encryption/decryption unit 101, an authentication unit 102, a communication unit 103, an input/output unit 104, an external operation reception unit 105, an update control unit 1106, a main control unit 107, a main storage unit 110, a hard disk unit 111, a time management unit 112, a video generating unit 113, a power source control unit 115, and a power supply unit 116.

As follows, each unit constituting the terminal apparatus 1100 is described. Since the units other than the update control unit 1106 are the same as the units constituting the terminal apparatus 100 of the first embodiment, the following description only explains about the update control unit 1106.
(1) Update control unit 1106
The update control unit 1106 stores the update frequency of "Monday every week" and a new content period of "3 months" during which the content stays new. The update frequency is the same as is already described in the first embodiment, and so is not described as follows. The new content period is referred to in judging whether the content stored in a DVD is new or not. If 3 months or less time has passed after its created date, the content is a new content and so has a high protection value. On the contrary, if time above three month has passed after its created date, the content is an old content and so has a low protection value.

When having received setting change information for the update frequency from the main control unit 107, the update control unit 1106 changes the update frequency in current storage. Note that the update frequency may be set by a manufacturing company at the time of manufacturing the terminal apparatus 1100.
(Update start)
The update control unit 1106 receives an instruction to start update from the main control unit 107. When having received an instruction to start update, the update control unit 1106 performs processing to update a content playback program in the following procedure.

In the first embodiment, the update control unit 106 calculates a required time for each process of downloading, verification, installment, and judges whether each process should be immediately performed or put on hold. In addition to this, the update control unit 1106 of the second embodiment judges whether to immediately perform or put on hold each process of the update processing depending on the importance of the update and on whether the content stored in the DVD is new or old. The following details the update procedure performed by the update control unit 1106.

When having received from the main control unit 107 an instruction to start update, the update control unit 1106 writes "E" indicating there is no process put on hold, as the pending information of the main storage unit 110.
Next, the update control unit 1106 reads a clock frequency of a microprocessor installed in the terminal apparatus 1100, the clock frequency having been stored in the update control unit 1106, and judges whether the read clock frequency is 400MHz or above. The update control unit 1106 reads the parallel flag of either "1" or "0" to the main storage unit 110 depending on the judgment result. Here, the parallel flag is the same as described in the first embodiment.

Next, the update control unit 1106 judges, via the input/output unit 104, whether a DVD has been inserted or not. When no DVD has been inserted, the following processing of (1-1) is performed. When a DVD has been inserted, the content of the DVD is checked. Specifically the update control unit 1106 judges which one of DVD1500a, DVD1500b, and DVD1500c has been inserted, and performs one of the processing through (1-2) to (1-4).

(1-1) When no DVD has been inserted
When no DVD has been inserted, the update control unit 1106 reads the parallel flag stored in the main storage unit 110. When the parallel flag is "1", the update control unit 1106 outputs a control signal indicating that parallel processing is possible, to the main control unit 107. When the parallel flag is "0", the update control unit 1106 does not output the control signal.

Next, the update control unit 1106 performs update.processing or puts the update processing on hold, by performing the procedures from (i-a) Judgment as to the necessity of update to (i-g) Installment that are described in the first embodiment. Note that in the present embodiment, in (i-a), an importance level instead of a comparison result is received from the server apparatus 1400. When the received importance level indicates "0", a control signal indicating update ending is outputted to the main control unit 107 just as in the case where the comparison result is "0". When the received importance level is "1" or "2", the parallel flag is determined just as in the case where the comparison result is "1". When the parallel flag is "0", the download time is calculated.

(1-2) When DVD1500a has been inserted
The update control unit 1106 reads the created date 1502a from DVD1500a. Next, the current date/time is obtained, and the created date is subtracted from the obtained current date/time, to calculate the elapsed period passed from the created date. The elapsed period is compared to the new content period of "3 months" stored in the update control unit 1106. When the elapsed period is longer than 3 months, the update control unit 1106 ends the update processing or puts on hold the update processing, as in the processing of (1-1) described above.

When the elapsed period is shorter than 3 months, the update control unit 1106 finishes the update in the procedure of (1-2-a) Obtaining importance level and (1-2-b) Update start described below.
(1-2-a) Obtaining importance level
The update control unit 1106 instructs the authentication unit 102 to establish SAC. When receiving from the authentication unit 102 a control signal indicating a SAC establishment success, the update control unit 1106 reads a title 143 and version information 144 included in a content playback program 142 from the hard disk unit 111, and outputs the title 143 and the version information 144 to the communication encryption/decryption unit 101 and instructs the communication encryption/decryption unit 101 to perform encryption.

The update control unit 1106 receives an encrypted title and an encrypted version information from the communication encryption/decryption unit 101, and transmits the encrypted title and the encrypted version information to the server apparatus 1400 via the communication unit 103.
Next, the update control unit 1106 receives either an importance level, or a combination of an importance level and a program size, from the server apparatus 1400 via the communication unit 103.

Here, the importance level to be received is one of "0", "1", and "2", where "0" indicates that update of the content playback program stored in the terminal apparatus 1100 is not necessary, "1" indicates that the update is necessary but the update is not directed to an important item, and "2" indicates that the update is necessary and the update is directed to an important item.

In this case, if a content playback program is "suitable", it means that the content playback program is of the latest generation.
(1-2-b) Start of update depending on importance level When the received importance level is "0", the update control unit 1106 outputs to the main control unit 107 a control signal indicating ending of the update processing, and ends the update processing.

When the received importance level is "1", the update control unit 1106 reads the parallel flag stored in the main storage unit 110. When the parallel flag is "1", the update control unit 1106 outputs a control signal indicating that the parallel processing is possible, to the main control unit 107. When the parallel flag is "0", the update control unit 1106 does not output the control signal.
Next, the update control unit 1106 performs the procedures from (i-b) to (i-g) describedinthe first embodiment, thereby pursuing prediction of download time, downloading, prediction of verification time, verification, prediction of installment time, and installment processing.

The detail of the processing is already described in the explanation of the update control unit 106 of the first embodiment, and so is not described as follows.
When the received importance level is "2", the update control unit 1106 instructs the authentication unit 102 to establish SAC. After SAC establishment, the update control unit 1106 transmits an encrypted title, encrypted version information, and a download request, to the server apparatus 1400, and obtains a program file and an encrypted program key from the server apparatus 1400.

Next, the update control unit 1106 instructs the communication encryption/decryption unit 101 to decrypt the encrypted program key thereby generating the program key, and writes the generated program key and the received program file to the main storage unit 110.
Next, the update control unit 1106 verifies the check data included in the received program file. When the verification is a success, the update control unit 1106 decrypts and decompresses the encrypted compressed update program to generate an update program, and installs the generated update program. After the installment ends, the update control unit 1106 outputs a control signal indicating installment ending to the main control unit 107.

The series of processing from downloading to installment, described above, is the same as the procedure described in (A-a) to (A-c) in the first embodiment specifically under (9) Update control unit 106. Therefore the following is confined to a brief explanation.
(1-3) When DVD1500b has been inserted
The update control unit 1106 reads the created date 1502b from DVD1500b. Next, the current date/time is obtained, and the created date is subtracted from the obtained current date/time, to calculate the elapsed period passed from the created date. The elapsed period is compared to the new content period of "3 months" stored in the update control unit 1106.

When the elapsed period is longer than 3 months, the update control unit 1106 reads the parallel flag stored in the main storage unit 110. When the parallel flag is "1", the update control unit 1106 outputs a control signal indicating that parallel processing is possible to the main control unit 107. When the parallel flag is "0", the control signal is not outputted.
Next, the update control unit 1106 reads the version information 505b from DVD1500b, and compares the version information 505b and the version information 144 stored in the hard disk unit 111.

In this case, if a content playback program is "suitable", it means that the content playback program is of the same generation as the generation indicated by the version information stored in the DVD, or of a newer generation than the generation indicated by the version information stored in the DVD. In other words, the content playback program is of a generation suitable to content playback.
When the version information 505b indicates the same generation as the generation of the version information 144, the update control unit 1106 outputs a control signal indicating ending of update processing to the main control unit 107, and ends the update processing.

When the version information 505b indicates a newer generation than the generation of the version information 144, the update control unit 1106 performs or puts on hold the processing of program file downloading, check data verification, and update program installment, depending on a time required for each process of the update. Here, the specific procedures from downloading to installment are the same procedures from (ii-b) to (ii-g) of the first embodiment, and so the following is confined to a brief explanation.

When the elapsed period is shorter than 3 months, the update control unit 1106 reads version information 505b from DVD1500b, reads version information 144 from the hard disk unit, and compares the version information 505b and the version information 144. When the version information 505b indicates a newer generation than the generation of the version information 144, the update control unit 1106 selects update information 1531b including the old version information that matches the read version information 144 from among the update information in the update data table 1530b stored in DVD1500b, reads the program size and the importance level from the selected information 1531b, and temporarily stores the program size and the importance level.

When the version information 505b indicates the same generation as the generation of the version information 144, the update control unit 1106 generates an importance level of "0".
Then update is performed according to the generated or read importance level. Specific procedures are the same as described under (1-2-b) Start of update depending on importance level, with replacement of DVD1500a with DVD1500b, and so the explanation is omitted here.
(1-4) When DVD1500c has been inserted
The update control unit 1106 reads the created date 1502c from DVD1500c. Next, the current date/time is obtained, and the created date is subtracted from the obtained current date/time, to calculate the elapsed period passed from the created date. The elapsed period is compared to the new content period of "3 months" stored in the update control unit 1106.

When the elapsed period is longer than 3 months, the update control unit 1106 reads the parallel flag stored in the main storage unit 110. When the parallel flag is "1", the update control unit 1106 outputs a control signal indicating that the parallel processing is possible, to the main control unit 107. When the parallel flag is "0", the control signal is not outputted.
Next, the control unit 1106performs the procedures from (iii-a) to (iii-c) described in the first embodiment, thereby pursuing judgment as to the necessity of update, prediction of installment time, and installment. The procedures are the same as described in the first embodiment, and so the explanation is omitted here.

When the elapsed period is within 3 months, the update control unit 1106 reads the program file 503c and the update importance level table 1530c from DVD1500c. Next, the update control unit 1106 reads the version information 144 included in the content playback program 142 stored in the hard disk unit 111, and compares the version information 505c included in the program file 503c and the version information 144 read from the hard disk unit 111.

In this case, if a content playback program is "suitable", it means that the content playback program is of the same generation as the generation indicated by the version information stored in the DVD, or of a newer generation than the generation indicated by the version information stored in the DVD.
When the version information 505c indicates a newer generation than the generation of the version information 144, the update control unit 1106 selects, from the update importance level table 1530c, importance level information that includes old version information that matches the version information 144 indicating the content playback program stored in the update control unit 1106, and extracts the importance level included in the selected importance level information.

When the version information 505c indicates the same generation as the generation of the version information 144, the update control unit 1106 generates the importance level of "0".
Next, the update control unit 1106 performs the following processing according to the generated or extracted importance level.
When the importance level is "0", the update control unit 1106 outputs a control signal indicating ending of update processing, and ends the update processing.
When the importance level is "1", the update control unit 1106 reads the parallel flag stored in the main storage unit 110. When the parallel flag is "1", the update control unit 1106 outputs a control signal indicating that parallel processing is possible, to the main control unit 107. When the parallel flag is "0", the control signal is not outputted.
Next, whether the content playback is being performed by being controlled by the main control unit 107 is confirmed. When the content playback is being performed, the update control unit 1106 writes "D" indicating to put on hold installment processing, and writes the program file 1503c read from DVD1500c to the hard disk unit 111.

When the content playback is not being performed, the update control unit 1106 outputs the program size included in the program file 503c to the time management unit 112, predicts the installment time, and performs the installment or put on hold the installment according to the predicted installment time.
The specific processing procedures from the prediction of installment time to performance or putting on hold the installment are the same as the description in (iii-b) and (iii-c) regarding the update control unit 106, in the first embodiment. Therefore the following is confined to a brief explanation.

When the importance level is "2", the update control unit 1106 generates an update program by performing a decompression algorithm Z on the compressed update program 506c included in the program file 503c, and installs the generated update program.
After the installment ending, the update control unit 1106 outputs a control signal indicating update ending to the main control unit 107.
(Update re-start)
The update control unit 1106 receives pending information from the main control unit 107 and is thereby instructed to re-start the update. When instructed to re-start the update, the update control unit 1106 re-starts the update processing from the process according to the received pending information, and finishes the update.

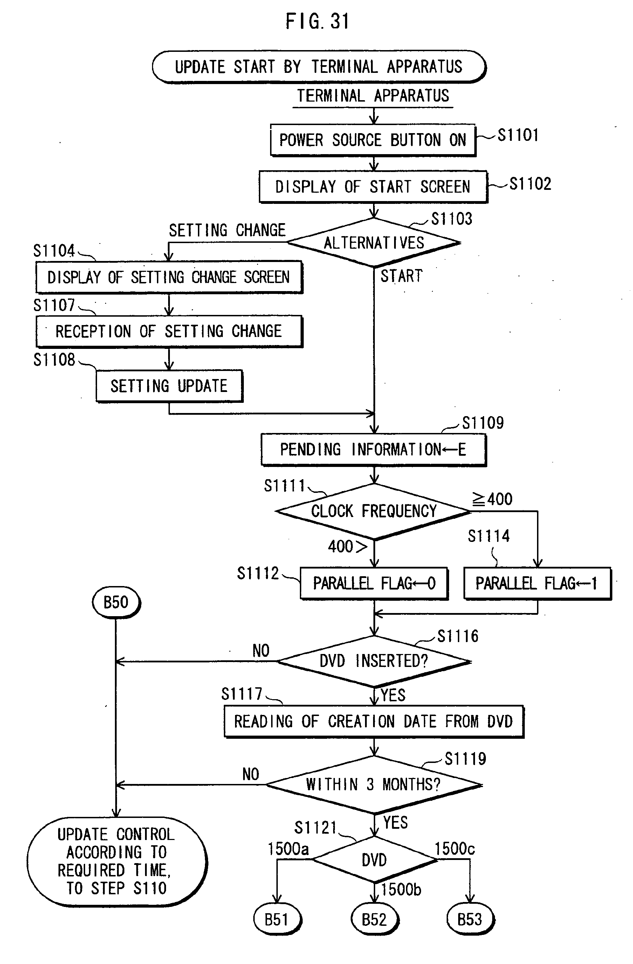

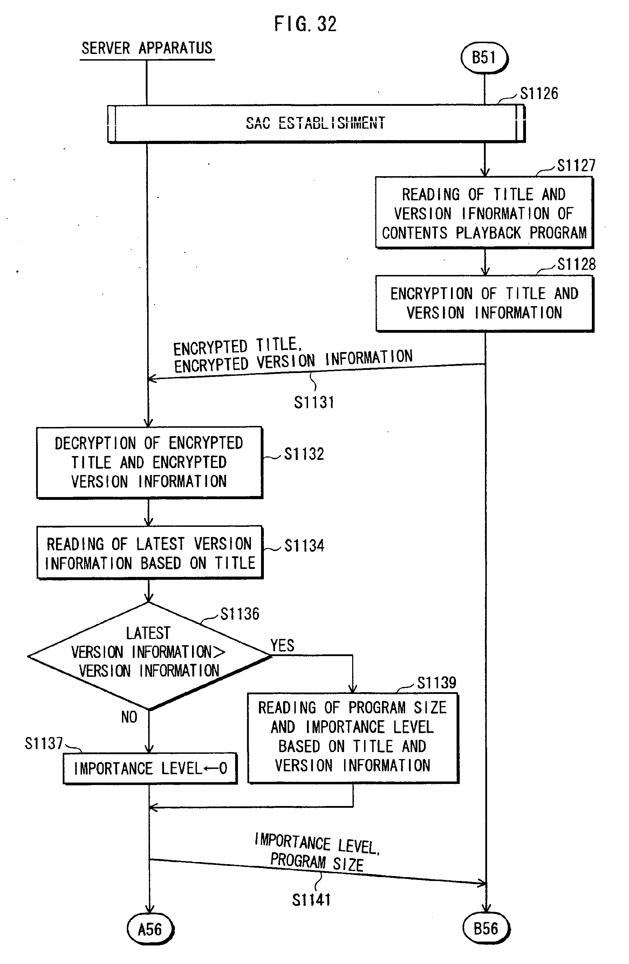

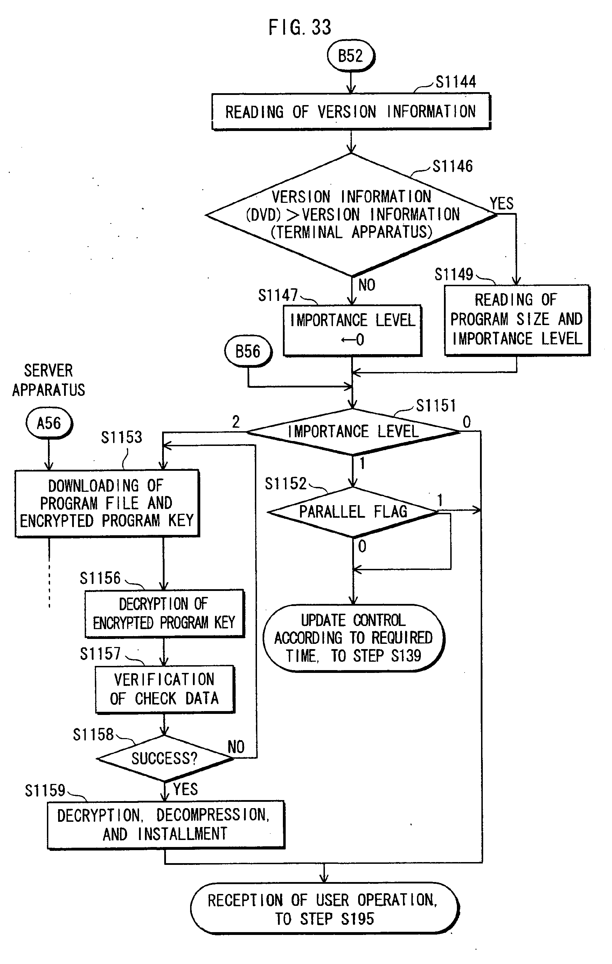

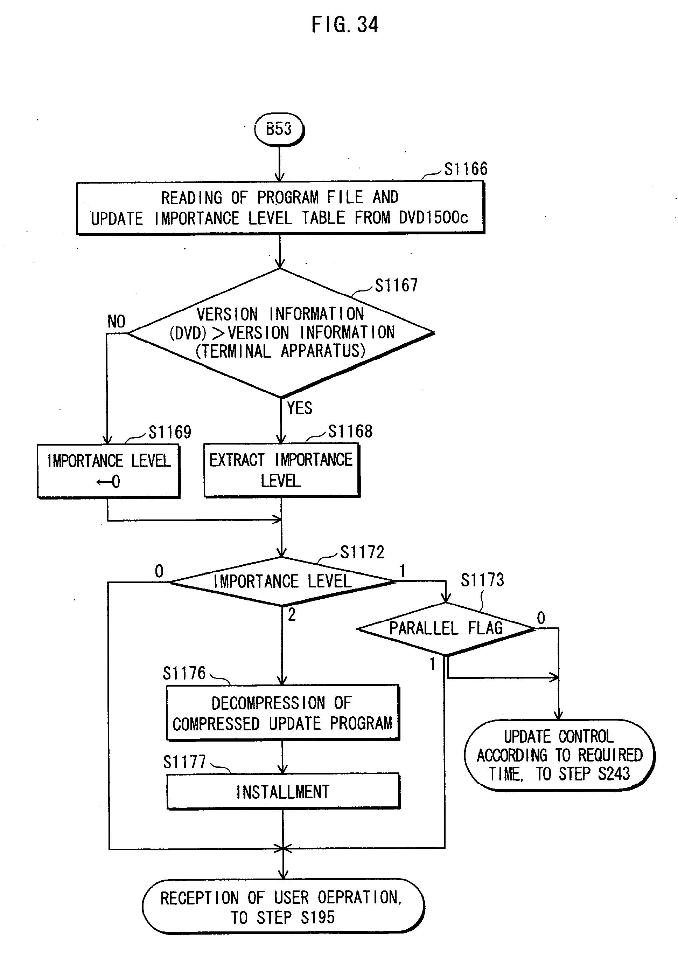

The specific processing procedures are the same as those described in the first embodiment, and so are not described in the following.
2.5 Operation
The operation of the terminal apparatus 1100 is described as follows with use of the flowcharts of FIGs.31-34.
Operation instruction information indicating "Power button ON" is received from a user (Step S1101), and then by being instructed by the main control unit 107, a start screen 310 is displayed on the start screen 310 (Step S1102). If the start 311 is selected from the alternatives displayed on the start screen 310 according to a user's button operation (Step S1103:START), the control is moved to Step S1109. When the setting change 312 is selected (Step S1103: Setting change), The main control unit 107 displays the setting change screen 320 to the monitor 120 (Step S1104), thereby receiving the user's input for setting change as to update frequency, communication speed, and each allowed time (Step S1107). The main control unit 107 outputs the received setting change either to the update control unit 1106 or to the time management unit 112. The update control unit 1106 rewrites the update frequency in current storage, according to the received setting change. The time management unit 112 rewrites the communication speed 220 and the allowed time setting table 215, according to the received setting change (Step S1108).

The main control unit 107 instructs the update control unit 1106 to start update. Upon reception of the instruction to start update, the update control unit 1106 writes, to the main control unit 110, the pending information "E" indicating that no process is being put on hold (Step S1109). Next, it is judged whether the clock frequency of the microprocessor installed in the terminal apparatus 1100 is 400MHz or above (Step S1111). When the clock frequency is 400MHz or above, the parallel flag of "1" is set (Step S1114). When the clock frequency is below 400MHz, the parallel flag of "0" is set (Step S1112).

Next, the update control unit 1106 detects whether DVD has been inserted, via the input/output unit 104. When there is no insertion of DVD (Step S1116:NO), update control is performed according to a required time for each process of the update, just as in the first embodiment. Hereafter, the specific operations of the terminal apparatus are the same as the processing from Step S110 of FIG.13.
When DVD has been inserted (Step S1116 : YES), the update control unit 1106 reads the created date from the DVD via the input/output unit 104 (Step S1117), and judges whether an elapsed period from the created date is within the new content period of "3 months" (Step S1119) .

When the elapsed period exceeds 3 months, the update control unit 1106 passes control to Step S110 of FIG.13, and hereafter performs update control according to each required time.
When the elapsed period is within 3 months (Step S1119:YES), and the inserted DVD is DVD1500a (Step S1121:1500a), the update control unit 1106 instructs the authentication unit 102 to establish SAC.

The authentication unit 102 establishes SAC sharing a session key with the server apparatus 1400, and informs the update control unit 1106 of a SAC establishment success (Step S1126).
Next, the update control unit 1106 reads, from the hard disk unit 111, the title 143 and the version information 144 of the content playback program (Step S1127), and outputs the title 143 and the version information 144 to the communication encryption/decryption unit 101, and instructs the communication encryption/decryption unit 101 to perform encryption. The communication encryption/decryption unit 101 receives the title 143 and the version information 144, and generates an encrypted title and encrypted version information by performing an encryption algorithm E2 on the title 143 and the version information 144 using the session key, and outputs the encrypted title and the encrypted version information to the update control unit 1106 (Step S1128).

Next, the update control unit 1106 transmits the encrypted title and the encrypted version information, which have been received from the communication encryption/decryption unit 101, to the server apparatus 1400 (Step S1131).
The control unit 1407 of the server apparatus 1400 receives the encrypted title and the encrypted version information from the terminal apparatus 1100 via the Internet 20, and instructs the communication encryption/decryption unit 401 to perform decryption of the encrypted title and the encrypted version information. The communication encryption/decryption unit 401 generates a title and version information by performing a decryption algorithm D2 on the encrypted title and the encrypted version information with use of the session key, and outputs the title and the version information to the control unit 1407 (Step S1132). The control unit 1407 reads the latest version information from the program update table 1420 based on the received title (Step S1134), and compares the latest version information and the version information generated by the communication encryption/decryption unit 401 (Step S1136).

When the version information and the latest version information indicate the same generation (Step S1136:NO), the control unit 1407 generates the importance level of "0" (Step S1137) . When the version information indicates an older generation than the generation of the latest version information (Step S1136:YES), the control unit 1407 selects program information from the program update table 1420 based on the title and the version information, and reads the program size and the importance level from the selected program information (Step S1139).

Next, the control unit 1407 transmits either a combination of the program size and the importance level, or only the importance level to the terminal apparatus 1100 via the Internet 20 (Step S1141).
The update control unit 1106 of the terminal apparatus 1100 receives either the combination of the program size and the importance level, or only the importance level, from the server apparatus 1400, via the communication unit 103 and the Internet 20. When the received importance level is "0" (Step S1151: "0"), the update control unit 1106 outputs a control signal indicating update ending to the main control unit 107.

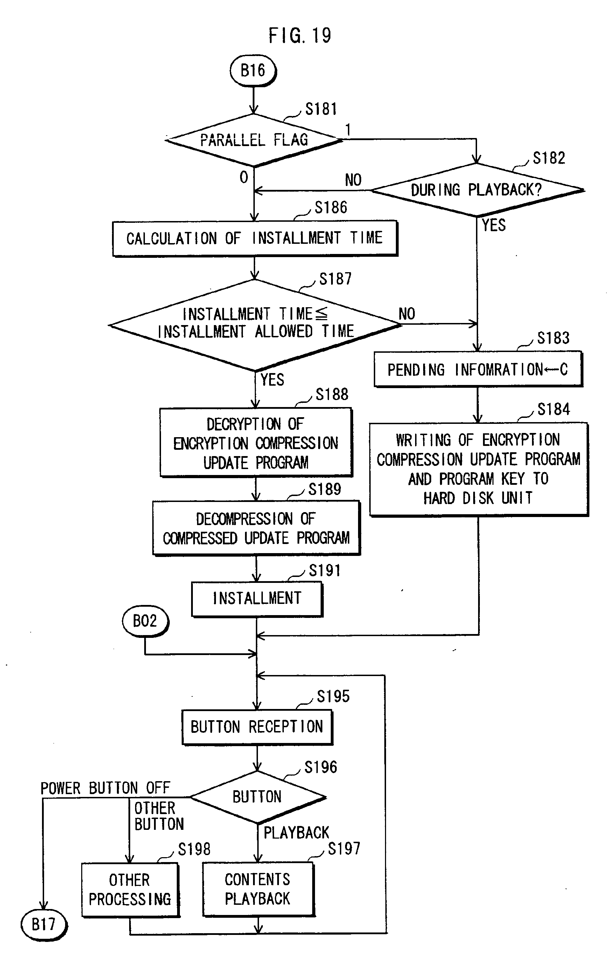

When having received a control signal indicating update ending, the main control unit 107 starts receiving an operation from a user, just as in the first embodiment. Hereafter, the specific operations of the terminal apparatus 1100 are the same as the operations from Step S195 in FIG.19. Therefore the explanation thereof is omitted.
When the received importance level is "1" (Step S1151: "1"), the update control unit 1106 reads the parallel flag from the main storage unit 110. When the parallel flag is "0", the update control unit 1106 performs update control according to a required time for each process of the update. Hereafter, the operations of the terminal apparatus 1100 are the same as the operations from Step S139 of FIG. 16, and so the explanation thereof is omitted.

If the parallel flag is "1", the update control unit 1106 outputs a control signal indicating that parallel processing is possible to the main control unit 107. Receiving the control signal indicating that parallel processing is possible, the main control unit 107 passes control to Step S195 of FIG.19.
After having outputted the control signal indicating that parallel processing is possible, the update control unit 1106 passes control to Step S139 of FIG.16, and performs update control according to a required time.

When the received importance level is "2", the update control unit 1106 transmits the encrypted title, the encrypted version information, and a download request, to the server apparatus 1400 via the Internet 20, and downloads a program file and an encrypted program key from the server apparatus 1400 (Step S1153).
Next, the update control unit 1106 outputs the encryptedprogram key to the communication encryption/decryption unit 101 and instructs the communication encryption/decryption unit 101 to perform decryption, and receives a program key from the communication encryption/decryption unit 101 (Step S1156).

Next, the update control unit 1106 verifies check data included in the downloaded program file (Step S1157) . When the verification is a failure (Step S1158:NO), the control is returned to Step S1153.
When the verification is a success (Step S1158:YES), the update control unit 1106 generates an update program by decrypting and decompressing the encrypted compressed update program included in the downloaded program file, and installs the generated update program (Step S1159). After ending of the installment, the update control unit 1106 outputs a control signal indicating the update ending to the main control unit 107, and ends the update processing.

When having received the control signal indicating the update ending, the main control unit 107 passes control to Step S195 of FIG.19.
In Step S1121, if it is judged that DVD1500b has been inserted, the update control unit 1106 reads the version information 505b from DVD1500b (Step S1144), and compares the version information 505b with the version information 144 stored in the hard disk unit 111 (Step S1146) . When the version information 505b read from DVD1500b indicates a newer generation than the generation of the version information 144 (Step S1146: YES), the update control unit 1106 selects from the update data table 153 stored in DVD1500b, update information that includes old version information that matches the version information 144 read from the hard disk unit 111, reads the program size and the importance level included in the selected update information (Step S1149), and passes control to Step S1151.

When the version information 505b read from DVD1500b indicates the same generation as the generation of the version information 144 read from the hard disk unit 111 (Step S1146:NO), the update control unit 1106 generates the importance level of "0" (Step S1147), and passes control to Step S1151.
In Step S1121, if it is judged that DVD1500c has been inserted, the update control unit 1106 reads the program file 503c and the update importance level table 1530c from DVD1500c via the input/output unit 104 (Step S1166), and compares the version information 505c included in the program file 503c with the version information 144 stored in the hard disk unit 111 (Step S1167). When the version information 505c indicates a newer generation than the generation of the version information 144 (Step S1167:YES), the update control unit 1106 selects, from the update importance level table 1530c, importance level information that includes old version information that matches the version information 144 read from the hard disk unit 111, and extracts the importance level from the selected importance level information (Step S1168).

If the version information 144 indicates the same generation as the generation of the version information 505c (Step S1167:NO), the update control unit 1106 generates the importance level of "0" (Step S1169).
When the importance level having been either generated or extracted is "0" (Step S1172: "0"), the update control unit 1106 outputs a control signal indicating update ending to the main control unit 107, and ends the update processing. When having been received the control signal indicating the update ending, the main control unit 107 starts receiving a user's operation. Hereafter, the operations performed by the terminal apparatus 1100 are the same as the operations from Step S195 of FIG.19.

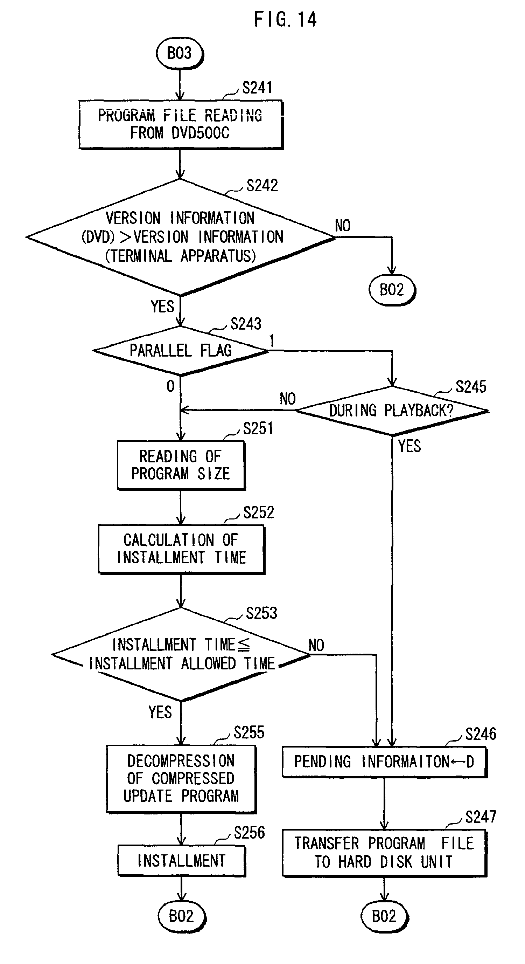

When the importance level is "1" (Step S1172: "1"), the update control unit 1106 reads the parallel flag from the main storage unit 110. When the parallel flag is "0" (Step S1173: "0"), the update control unit 1106 performs update control according to a required time, just as in the first embodiment. Hereafter, the operations performed by the terminal apparatus 1100 are the same as the operations from Step S243 of FIG. 14, and so are not described in the following.

When the parallel flag is "1" (Step S1173: "1"), the update control unit 1106 outputs a control signal indicating that parallel processing is possible, to the main control unit 107, and the main control unit 107 passes control to Step S195.
After having outputted the control signal indicating that parallel processing is possible, the update control unit 1106 passes control to Step S243.

When the importance level is "2" (Step S1172: "2"), the update control unit 1106 generates an update program by decompressing the compressed update program 506c included in the program file 503c (Step S1176), and installs the generated update program (Step S1177)
2.6 Conclusion and advantageous effect
As described so far, the terminal apparatus 1100 being a component of the update system 11 of the second embodiment determines a timing of update according to whether content stored in the inserted DVD is new or old and according to the importance of update to the latest generation of the currently stored content playback program.

When the content is new, and the update importance is high, the update is performed immediately.
When the content is old, whether to perform each process of the update immediately or to put on hold each process of the update is determined according to a required time of each process of the update, regardless of the importance of the update.
It should not be long after a new content started to be sold, and so its sales has a potential of increasing towards the future. Therefore, protection of a new content from invalid use such as invalid copy or invalid alteration is of high value.

Therefore, if the latest generation of the content playback program contains an important additional/modifying items that complement a security problem of the content playback program of the generation currently stored in the terminal apparatus 1100, it is considered that the update importance is high. In view of this, the terminal apparatus 1100 immediately performs the update prior to playback of the content. According to this arrangement, a content having a high protection value is treated securely. That is, the protection of right of the administrator of a content is prioritized for the content having a high protection value.

Conversely, it should be already long after sales of an old content, and so demand thereof is considered to have been already satisfied to some extent. Further sales increase is accordingly expected to be small, and so the protection value of an old content is considered low.
When the protection value of a content is low, or when the update importance is low, the update is put on hold according to a required time of each process of the update. That is, for an old content, a user's convenience is prioritized.

In this way, the update timing is determined taking into consideration whether the content is new or old, and a required time for update. This structure enables to balance between the right protection of the right holder of the content and the convenience of a user.
2.7 Modification example regarding second embodiment
So far, the second embodiment of the present invention has been described. However the present invention should not be limited to the described structure, and includes the following examples regarding the second embodiment, for example.

(1) In the above-described second embodiment, whether to perform update immediately is judged according to whether the content is new or old and according to the importance of update. However, a judgment criterion may be an image quality of the content, instead of whether the content is new or old.
Here, the terminal apparatus 1100 is able to read information from a hybrid disk not only from a DVD.

A hybrid disk is for example an optical disk of a multi-layer structure equipped with a DVD layer having a capacity of 8.5 gigabytes, and a blu-ray layer having a capacity of 25 gigabytes. A content having a low image quality (SD image) is stored in the DVD layer, and a content having a high image quality (HD image) is stored in the blu-ray layer. The content stored in the DVD layer is the same in substance as that of the content stored in the blu-ray layer.

When a hybrid disk is inserted, the main control unit 107 reads content of a high image quality stored in the blu-ray layer, and plays back the content.
Upon receiving an instruction to start update, the update control unit 1106 confirms the content of the inserted disk, via the input/output unit 104, to see whether the HD image content is stored. If only an SD image content is stored, update is completed or put on hold according to a required time for each process of the update, just as in the first embodiment.

If anHDimage content is stored, an importance level is obtained either from an inserted disk or from the server apparatus 1400. When the importance level is "2", the update is completed prior to playback of the content.
(3) Alternatively, a judgment criterion may be a hit level of the content, instead of whether the content is new or old. The hit level indicates a level of popularity of the content. One example of the hit level is sales amount of the DVD storing the content.

In this modification example, a DVD stores a content and a content identifier corresponding to the content.
The server apparatus 1400 stores therein a content identifier in correspondence with a hit level of the content identified by the content identifier.
The update control unit 1106 of the terminal apparatus 1100 stores in advance a hit reference value of "20, 000". Prior to update start, the update control unit 1106 transmits, to the server apparatus 1400, a title and a content identifier of a content, and a transmission request of a hit level of the content.

When having received the title and the content identifier of the content, and the transmission request of the hit level of the content, the server apparatus 1400 transmits the hit level corresponding to the received content identifier to the terminal apparatus 1100 via the Internet 20.
The update control unit 1106 of the terminal apparatus 1100 receives the hit level from the server apparatus 1400. When the received hit level is below the hit reference value of "20,000", the update control unit 1106 performs update control according to a required time of each process regarding the update, just as in the first embodiment.

When the received hit level is the same as the hit reference value of "20,000" or above, the importance level is obtained either from the inserted DVD or from the server apparatus 1400. When the obtained importance level is "2", update is completed prior to the content playback.
(4) The hit level is not limited to sales amount, and may alternatively be the number of request received at radio stations, or the number of broadcasted times. The hit level may further be represented by a synthesized value therebetween.
(5) In the second embodiment, in addition to the necessity of update of the content playback program, the importance of an update is also one of the criteria of judging the necessity of update of a content playback program, however is not an essential criterion.
When DVD1500a has been inserted to the terminal apparatus 1100, the server apparatus 1400 compares the latest version information and the version information received from the terminal apparatus 1100, generates a comparison result based on the comparison, and transmits the comparison result to the terminal apparatus 1100.

The terminal apparatus 1100 receives the comparison result from the server apparatus 1400. When the received comparison result is "1", determines an update timing depending on whether the content stored in the DVD is old or new.
In the case where DVD1500b or DVD1500c has been inserted to the terminal apparatus 1100, too, the version information stored in a corresponding DVD is compared to the version information stored in the terminal apparatus 1100. If the generation indicated by the version information stored in the DVD is newer than the generation of the version information stored in the terminal apparatus 1100, it is judged that an update is necessary, and the update timing is determined depending on whether the content stored in DVD is old or new.

(6) In the above-described second embodiment, it is the server apparatus 1400 that compares the latest version information with the version information indicating the generation of the content playback program stored in the terminal apparatus 1100. However the terminal apparatus 1100 may alternatively perform the comparison.
In this case, the terminal apparatus 1100 is designedto transmit only an encrypted title to the server apparatus 1400.

The server apparatus 1400 generates a title by decrypting the received encrypted title, and transmits the latest version information corresponding to the generated title to the terminal apparatus 1100.
The terminal apparatus 1100 compares the received latest version information with the version information stored in the terminal apparatus 1100. When the latest version information is of a newer generation than the generation of the version information stored in the terminal apparatus 1100 itself, transmits the encrypted title and the encrypted version information to the server apparatus 1400 via the Internet 20, and requests from the server apparatus 1400 an importance level and a program size.

(7) In the second embodiment, a DVD is designed to record thereon a created date of content, and the terminal apparatus 1100 itself determines an update timing according to whether the content is new or old and according to the importance of the update.
Alternatively, however, the server apparatus 1400 may judge the necessity of update, and an update timing, and gives a corresponding instruction to the terminal apparatus 1100.

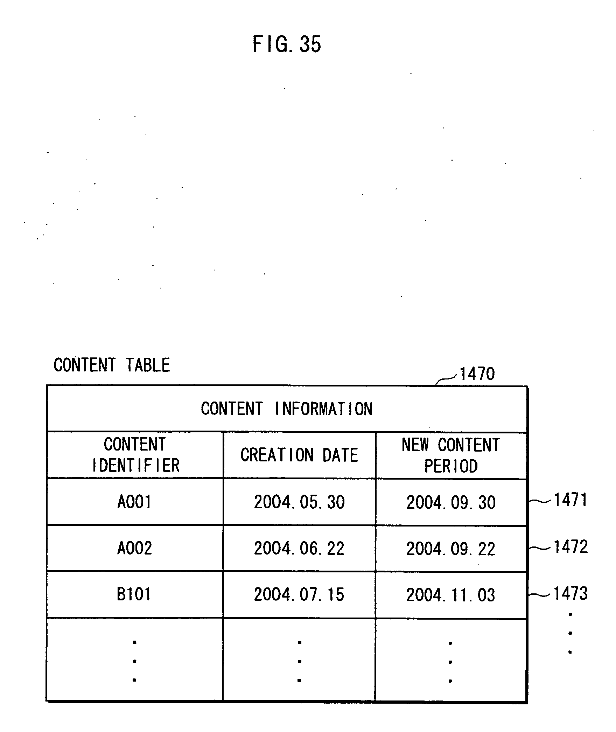

In this case, a DVD is designed to record thereon a content identifier corresponding to the content, instead of its created date. Note that the DVD to be inserted to the terminal apparatus 1100 is such as DVD1500a that only stores a content and a content identifier.
The server apparatus 1400 stores in advance a content table 1470 as shown in FIG. 35. The content table 1470 is made up of a plurality of pieces of content information 1471, 1472, 1473, .... Each piece of content information contains a content identifier, a created date, and a new-content due date. The created date indicates a date on which the content identified by the content identifier was created. The new-content due date is used as a reference date in judging whether the content identified by the content identifier is new or not.

When having been instructed to start update, the update control unit 1106 of the terminal apparatus 1100 reads a content identifier from a DVD, reads, from the hard disk unit 111, a title and version information of the content playback program, and transmits the content identifier, and the title and the version information of the content playback program, to the server apparatus 1400 via the Internet 20.

The control unit 1407 of the server apparatus 1400 receives the content identifier, the title, and the version information from the terminal apparatus 1100 via the Internet 20.
The control unit 1407 then selects content information that includes a content identifier that matches the received content identifier, reads the new-content due date included in the selected content information, and compares the new-content due date and the current date/time.

The control unit 1407 compares the latest version information corresponding to the received title and the received version information. When the received version information and the latest version information indicate the same generation, a judgment result of "0" is generated regardless of a result of comparing between the new-content due date and the current date/time. The judgment result of "0" indicates that the content playback program that the terminal apparatus 1100 currently owns is already the latest, and so does not require any update.

When the received version information is of an older generation than the generation of the latest version information, the control unit 1407 selects, from the program update table 1420, program information whose old version information in the update pattern matches the received version information, and reads the importance level included in the selected program information.
When the importance level indicates "1", a judgment result of "1" is generated regardless of a result of comparing the new-content due date and the current date/time. The judgment result of "1" indicates that update is necessary, but requires the terminal apparatus 1100 to judge, prior to the update, whether to perform immediately or to put on hold each process of the update according to a set allowed time and a required time of each process of the update. Next, the program size included in the selected program information is read out.

When the importance level is "2", and that the new-content due date indicates a date later than the current date/time, a judgment result of "2" is generated. The judgment result of "2" indicates that update is required to be performed immediately.
After generation of the judgment result, the control unit 1407 transmits the generated judgment result to the terminal apparatus 1100 via the Internet 20. Note that when the generated judgment result is "1", the program size is also transmitted with the judgment result of "1".

The update control unit 1106 of the terminal apparatus 1100 receives either the judgment result, or a combination of the judgment result and the program size, from the server apparatus 1400 via the Internet 20.
When the received judgment result is "0", then the update control unit 1106 outputs a control signal indicating update ending to the main control unit 107, and ends the update processing.
When the received judgment result is "1", the update control unit 1106 outputs the program size to the time management unit 112, and instructs the time management unit 112 to predict the download time. Hereafter, whether to complete or put on hold the update processing is judged according to a required time of each process regarding the update, just as in the first embodiment.

When the received judgment result is "2", update is completed prior to the content playback.
In this way, the server apparatus 1400 stores the content table 1470, and judges the update timing. With this construction, it becomes possible to change the new-content due date, and to reflect the content right holder's intention in the content protection.

For example, the new-content due date has been set to be a rental release date, or a sales date of a sequel. Even so, it is possible to change the new-content due date stored in the server apparatus 1400. This is advantageous since the structure enables to cope with the change of situation with flexibility.
3. Other modification examples
The present invention has been described above based on the embodiments. However it is needless to say that the present invention should not be limited to the described embodiments, and may include the following cases.

(1) When the parallel processing is impossible in both of the above-described first and second embodiments, time consideration is performed as to the download time, the verification time, and the installment time. However, it is also possible to consider a reading time required for reading a program file either from DVD500c or from DVD1500c, a decryption time required to decrypt an encrypted compressed program, and a decompressing time required for decompressing a compressed program, by presetting a corresponding allowed time, calculating a corresponding required time, thereby judging whether the calculated required time is within the allowed time.

In the above case, if the reading time, the decryption time, and the decompressing time are judged to exceed corresponding allowed times, then the processing from reading, decryption, and decompression are accordingly put on hold.
(2) In the above-described first and second embodiments, the download allowed time, the verification allowed time, and the installment allowed time are respectively set. However, it is possible to set an update allowed time being an allowed time for completing an update composed of a series of processing from downloading to installment.

Such a case is specifically performed in the following way, for example. The time management unit 112 calculates the download time, the verification time, and the installment time, respectively, using the program size received from the update control unit. Then the summation of the download time, the verification time, and the installment time, is compared with the update allowed time. When the calculated summation is within the update allowed time, update is immediately commenced. On the other hand, the calculated summation exceeds the update allowed time, the update is put on hold.

(3) In the above item (2), it is also possible only to perform processing that can finish within the update allowed time, and to put on hold the remaining processing.
Specific procedures are as follows, for example. First, the download time, the verification time, and the installment time are calculated based on the program size.
Next, the calculated download time is compared to the update allowed time, and when the download time exceeds the update allowed time, all the processing from downloading is put on hold.

When the download time is within the update allowed time, a summation of the download time and the verification time is calculated, and the summation is compared to the update allowed time. When the calculated summation of download time and verification time exceeds the update allowed time, only downloading is immediately performed, and the processing from verification is put on hold.
When the calculated summation is within the update allowed time, a summation of download time, verification time, and installment time is calculated, and the summation is compared to the update allowed time. When the calculated summation of download time, verification time, and installment time exceeds the update allowed time, downloading and verification are immediately performed, and installment is put on hold. When the calculated summation is within the update allowed time, all of downloading, verification, and installment are performed.

(4) In the above modification example (2), when the calculated summation exceeds the update allowed time, the update may be cancelled. This is for example realized by equipping the update control unit with a counter for counting the number of cancelled times, and adds 1 to the counter every time an update is cancelled. In addition, the update control unit is made to store the allowed number of times of "3".
When the value indicated by the counter is equal to "3", the calculation of the summation and the comparison between the calculated summation and the update allowed time are omitted, and update is immediately performed.

(5) A DVD to be inserted to the terminal apparatus may store therein a content and a computer program including a procedure of playing back the content. Hereinafter, the DVD storing therein a content and the computer program is referred to as DVD500d.
In this case, the terminal apparatus 100 reads and installs the computer program stored in the DVD500d, regardless of the version information 144 of the content playback program 142 stored in the terminal apparatus 100.

Incident to the above, an installment time is calculated, and if the calculated installment time is within the installment allowed time, installment is performed immediately. On the other hand, when the calculated installment time exceeds the installment allowed time, installment is put on hold.
(6) The present invention may be any of methods described above. In addition, the present invention may be a computer program realizing any of the methods by using a computer. The present invention may also be a digital signal made up of the computer program.

(7) In the above-described first and second embodiments, the update control unit sets a parallel flag according to the clock frequency of the microprocessor. However, it is alternatively possible to calculate in advance the operating ratio of the microprocessor during playback processing, and to set the parallel flag of "1" indicating that parallel processing is possible, if the operating ratio is within a predetermined value.
(7) The present invention may be a combination of any of the embodiments and the modification examples.

(8) The present invention may also be as follows. A terminal apparatus that updates a computer program by undergoing a program introduction that at least includes an obtaining process of an update program in which a content with which the computer program is updated is defined and an updating process of the computer program, the terminal apparatus including: a processing unit operable to process user data according to the computer program; a disturbance judgment unit operable to judge whether execution of each process constituting the program introduction disturbs an operation according to the computer program; and a normal execution unit operable to a) put on hold the process execution when the disturbance judgment unit judges that there is disturbance, and b) execute the process when the disturbance judgment unit judges that there is not disturbance.

(9) The terminal apparatus further includes an update judgment unit operable to judge whether to perform update according to the update program, where the disturbance judgment unit judges whether the execution of each process constituting the program introduction disturbs the operation according to the computer program.
(10) The terminal apparatus either includes both of a verification process regarding validity of the update program and a decompression process of the update program, or includes one of the verification process and the decompression process.

(11) A server apparatus connected to the terminal apparatus via a network stores therein the update program, and the normal execution unit obtains the update program from the server apparatus via the network for executing the obtaining process.
(12) The terminal apparatus stores therein a terminal-side program version number that indicates a generation of the computer program, and the server apparatus stores therein a server-side version number that indicates a generation of the computer program of a new generation that results after the update performed using the update program, the update judgment unit compares the terminal-side program version number and the server-side program version number, and judges not to perform the update performed using the update program, when the generation indicated by the terminal-side program version number is the same as the generation indicated by the server-side program version number, and judges to perform the update performed using the update program, when the generation indicated by the terminal-side program version number is older than the generation indicated by the server-side program version number.

(13) The update judgment unit performs the comparison on a regular basis.
(14) The terminal apparatus further includes: a detection unit operable to detect insertion of a recording medium recording therein a content being a digital work; and a reading unit operable to read the content from the recording medium, where the computer program includes a procedure for playing back the content, the processing unit plays back the content having read, by operating according to the computer program, and the update judgment unit performs the comparison when insertion of the recording medium is detected by the detection unit.

(15) The recording medium further records therein a medium version number that indicates a generation of the computer program according to which the processing unit operations to play back the content, the reading unit further reads the medium version number from the recording medium, the update judgment unit, instead of the comparison, compares the terminal-side program version number and the medium version information, and a) when the generation indicated by the terminal-side program version number is the same as the generation indicated by the medium version number, judges not to perform the update by using the update program, and b) when the generation indicated by the terminal-side program version number is older than the generation indicated by the medium version number, judges to perform the update by using the update program.

(16) The recording medium pre-stores the update program, and the normal execution unit obtains the update program from the recording medium for executing the obtaining process.
(17) The terminal apparatus stores therein a terminal-side program version number that indicates a generation of the computer program, the recording medium stores a medium version number that indicates a generation of the computer program of a new generation that results after the update performed using the update program, the update judgment unit compares the terminal-side program version number and the medium version number, and judges not to perform the update performed using the update program, when the generation indicated by the terminal-side program version number is the same as the generation indicated by the medium version number, and judges to perform the update performed using the update program, when the generation indicated by the terminal-side program version number is older than the generation indicated by the medium version number.

(18) The update judgment unit performs the comparison on a regular basis.
(19) The terminal apparatus further includes a detection unit operable to detect insertion of the recording medium, where the update judgment unit performs the comparison when the detection unit has detected insertion of the recording medium.
(20) The disturbance judgment unit compares a predicted time predicted to require for executing the process and a predetermined time, and judges that there is disturbance when the predicted time exceeds the predetermined time.

(21) The disturbance judgment unit compares the predicted time predicted to require for executing the process and the predetermined time.
(22) The server apparatus connected to the terminal apparatus via a network pre-stores the update program, the normal execution unit obtains the update program from the server apparatus via the network for executing the obtaining process, and the disturbance judgment unit compares the predicted time predicted to require for executing the process and the predetermined time.

(23) The disturbance judgment unit pre-stores a communication speed regarding communication with the server apparatus, and calculates the predicted time with use of the communication speed.
(24) The recording medium pre-stores the update program, the normal execution unit obtains the update program from the recording medium for executing the obtaining process, and the disturbance judgment unit compares the predicted time predicted to required for reading the update program from the recording medium and the predetermined time.

(25) The disturbance judgment unit pre-stores a reading speed regarding reading from the recording medium, and calculates the predicted time with use of the reading speed.
(26) The disturbance judgment unit compares the predicted time predicted to require for reading the update program from the recording medium and the predetermined time.
(27) The terminal apparatus is equipped with a microprocessor, stores a speed performance of the microprocessor, each unit operates according to the microprocessor, and the disturbance judgment unit calculates the predicted time with use of the speed performance.

(28) The disturbance judgment unit receives input of the predetermined time from a user.
(29) The terminal apparatus is equipped with a microprocessor, stores a speed performance of the microprocessor, each unit operates according to the microprocessor, the terminal apparatus calculates an operating ratio of the microprocessor, and the disturbance judgment unit judges that there is disturbance when the operating ratio is the same as a predetermined value or above.

(30) The terminal apparatus further includes an ending judgment unit operable to judge whether the processing according to the computer program has ended; and a pending execution unit operable to execute a process on hold if any when the ending judgment unit judges that the processing according to the computer program has ended.
(31) The server apparatus connected to the terminal apparatus via a network pre-stores the update program, and the pending execution unit obtains the update program from the server apparatus via the network for executing the obtaining process.

(32) The recording medium pre-stores the update program, and the pending execution unit obtains the update program from the recording medium for executing the obtaining process.
(33) The ending judgment unit detects processing ending of the computer program, and judges that the processing according to the computer program has ended when having detected the completion.

(34) The ending judgment unit detects a user operation to bring the power OFF of the terminal apparatus, and judges that the processing according to the computer program has ended when having detected the user operation.
(35) A terminal apparatus that updates, as necessary, a computer program by undergoing a program introduction that at least includes an obtaining process of an update program in which a content with which the computer program is updated is defined and an updating process of the computer program, the terminal apparatus including: a processing unit operable to process user data according to the computer program; an update judgment unit operable to judge whether to perform update by using the update program; a disturbance judgment unit operable to judge whether execution of each process constituting the program introduction disturbs an operation according to the computer program; a normal execution unit operable to a) put on hold the process execution when the disturbance judgment unit judges that there is disturbance, and b) execute the process when the disturbance judgment unit judges that there is not disturbance; an ending judgment unit operable to judge whether the processing according to the computer program has ended; and a pending executing unit operable to execute a process on hold if any when the ending judgment unit judges that the processing according to the computer program has ended.

(36) A server apparatus that transmits an update program to a terminal apparatus, the update program being in which a content with which the computer program is updated is defined, the server apparatus including a storage unit storing the update program; a reading unit operable to read the update program from the storage unit, and a transmitting unit operable to transmit the update program to the terminal apparatus connected to the server apparatus via a network.

(37) A computer-readable recording medium storing therein computer data and a computer identifier identifying a computer program, where the computer program is suitable for processing the computer data.
(38) The program identifier stored in the recording medium includes a program version number that indicates a generation of the computer program, and the computer program whose generation is indicated by the program version number is suitable for processing the computer data.

(39) A computer-readable recording medium storing therein computer data and an update program, the update program being in which a content with which an old computer program is updated to a new computer program suitable for processing the computer data is defined.
(40) A control method used by a terminal apparatus that updates a computer program by undergoing a program introduction that at least includes an obtaining process of an update program in which a content with which the computer program is updated is defined and an update process of the computer program, the control method including: a processing step of processing user data according to the computer program; a disturbance judgment step of judging whether execution of each process constituting the program introduction disturbs an operation according to the computer program; and a normal execution step of a) putting on hold the process execution when the disturbance judgment unit judges that there is disturbance, and b) executing the process when the disturbance judgment unit judges that there is not disturbance.

(41) A control program used by a terminal apparatus that updates a computer program by undergoing a program introduction that at least includes an obtaining process of an update program in which a content with which the computer program is updated is defined and an update process of the computer program, the control method including: a processing step of processing user data according to the computer program; a disturbance judgment step of judging whether execution of each process constituting the program introduction disturbs an operation according to the computer program; and a normal execution step of a) putting on hold the process execution when the disturbance judgment unit judges that there is disturbance, and b) executing the process when the disturbance judgment unit judges that there is not disturbance.

(42) The computer program is recorded in a computer-readable program recording medium.

### Industrial Applicability

The present invention is applied managerially, continuously, and repeatedly in an industry for providing a user with a computer program, or in an industry for manufacturing and selling a computer system for executing the computer program.

## Claims

1. A content usage apparatus (100, 1100, 120) that uses a content, comprising:
a storage unit (110) operable to store therein a computer program (132) that controls usage of the content,
**characterized by**
a value judgment unit (471) operable to obtain a value of the content, and to judge whether the obtained value satisfies a predefined criterion;
a suitability judgment unit operable to judge whether the computer program (132) stored in the storage unit (110) is suitable for the content based on a comparison between a version information of the computer program and a predefined version information (505b, 505c); and
an update unit (106) operable to:
update the computer program stored in the storage unit to a suitable computer program before the content usage, when the suitability judgment unit judges in the negative but the value judgment unit judges in the affirmative; or
update the computer program stored in the storage unit to a suitable computer program after the content usage or at a idle time, when the suitability judgment unit judges in the negative and the value judgment unit judges in the negative.

2. The content usage apparatus (100, 1100, 120) of Claim 1, wherein
the value judgment unit (471) obtains a created time at which the content was created, as information representing the value, and judges in the affirmative when the created time is within a predetermined period from a current time, and in the negative when the created time is more than a predetermined period from the current time.

3. The content usage apparatus (100, 1100, 120) of Claim 2, wherein
the value judgment unit (471) obtains the created time by reading the created time from a content recording medium storing therein the content.

4. The content usage apparatus (100, 1100, 120) of Claim 1, wherein
the value judgment unit (471) obtains a sales amount of the content in a market of the content, as information representing the value, and judges in the affirmative when the obtained sales amount is a predetermined value or above, and in the negative when the obtained sales amount is less than the predetermined value.

5. The content usage apparatus (100, 1100, 120) of Claim 1, wherein
the value judgment unit (471) obtains a quality of the content, as information representing the value, and judges in the affirmative when the obtained quality indicates a predetermined value or above, and in the negative when the obtained quality indicates less than the predetermined value.

6. The content usage apparatus (100, 1100, 120) of Claim 5, wherein
the value judgment unit (471) obtains the quality by reading the quality from a content recording medium storing therein the content.

7. The content usage apparatus (100, 1100, 120) of any one of Claims 1 to 6, wherein
the update unit (106) obtains an update program including an updating procedure for the computer program (132), and updates the computer program (132) using the obtained update program.

8. The content usage apparatus (100, 1100, 120) of Claim 7, wherein
a server apparatus (400, 1400) connected to the content usage apparatus via a network pre-stores therein the update program, and
the update unit (106) obtains the update program from the server apparatus via the network.

9. The content usage apparatus (100, 1100, 120) of Claim 7, wherein
a content recording medium storing therein the content pre-stores the update program, and
the update unit (106) obtains the update program by reading the update program from the content recording medium.

10. The content usage apparatus (100, 1100, 120) of any one of Claims 1 to 9, wherein the suitability judgment unit judges in the affirmative when the computer program suitably corresponds to the content.

11. The content usage apparatus (100, 1100, 120) of any one of Claims 1 to 10, further comprising:
a detection unit operable to detect insertion of a content recording medium storing therein the content, wherein
the value judgment unit and the suitability judgment unit respectively perform judgment when the detection unit has detected the insertion.

12. The content usage apparatus (100, 1100, 120) of any one of Claims 1 to 11, wherein the update unit (106) updates the computer program (132) by undergoing a program introduction that at least includes an obtaining process of the update program and an update process of the computer program (132), and
the update unit (106) includes:
a disturbance judgment subunit operable to, when the suitability judgment unit judges in the negative and the value judgment unit judges in the negative, judge whether execution of each process constituting the program introduction disturbs an operation of the content usage according to the computer program;
a first execution subunit operable to put on hold the process when the disturbance judgment subunit judges in the affirmative, and to execute the process when the disturbance judgment subunit judges in the negative;
an ending judgment subunit operable to judge whether the operation of the content usage according to the computer program has ended; and
a second execution subunit operable to execute, when the ending judgment subunit judges in the affirmative, one or more processes put on hold if any.

13. The content usage apparatus (100, 1100, 120) of Claim 12, wherein
the program introduction includes either both or one of a verification process of verifying the update program and a decompressing process of decompressing the update program.

14. The content usage apparatus (100, 1100, 120) of Claim 12 or 13, wherein
the disturbance judgment subunit compares a predicted time predicted to be required for the process execution and a predetermined time, and judges in the affirmative when the predicted time is longer than the predetermined time.

15. The content usage apparatus (100, 1100, 120) of Claim 14, wherein
the disturbance judgment subunit compares the predetermined time and the predicted time predicted to be required for execution of the obtaining process.

16. The content usage apparatus (100, 1100, 120) of Claim 14, wherein
the disturbance judgment subunit compares the predetermined time and the predicted time predicted to be required for execution of the update process.

17. The content usage apparatus (100, 1100, 120) of Claim 12, being equipped with a microprocessor according to which each of the units operates, and calculating an operating ratio of the microprocessor, wherein
the disturbance judgment subunit judges in the affirmative when the operating ratio is a predetermined value or above.

18. The content usage apparatus (100, 1100, 120) of Claim 12, wherein
the ending judgment subunit detects ending of processing according to the computer program, and judges in the affirmative when having detected the ending.

19. The content usage apparatus (100, 1100, 120) of Claim 12, wherein the ending judgment subunit detects an operation for turning off power supply to the content usage apparatus performed by a user, and judges in the affirmative when having detected the operation.

20. An update control method used by a content usage apparatus that uses a content,
the content usage apparatus including a storage unit storing therein a computer program that controls usage of the content,
**characterized by**
a value judgment step of obtaining a value of the content, and judging whether the obtained value satisfies a predefined criterion;
a suitability judgment step of judging whether the computer program stored in the storage unit is suitable for the content based on a comparison between a version information of the computer program and a predefined version information (505b, 505c); and
an update step of:
updating the computer program (132) stored in the storage unit (106) to a suitable computer program (132) prior to the content usage, when the suitability judgment unit judges in the negative but the value judgment unit judges in the affirmative; or
updating the computer program (106) stored in the storage unit (106) to a suitable computer program (132) after the content usage or at a idle time, when the suitability judgment unit judges in the negative and the value judgment unit judges in the negative.

21. An update control program loaded into a content usage apparatus that uses a content, said update control program making a computer perform the steps of claim 20.

22. The update control program of Claim 21, being stored in a computer-readable program recording medium.

## Patentansprüche

1. Inhalt-Nutzungsvorrichtung (100, 1100, 120), die einen Inhalt nutzt, wobei sie umfasst:
eine Speichereinheit (110), die so betrieben werden kann, dass darin ein Computerprogramm (132) gespeichert wird, das Nutzung des Inhaltes steuert,
**gekennzeichnet durch**
eine Wert-Beurteilungseinheit (471), die so betrieben werden kann, dass sie einen Wert des Inhaltes ermittelt und beurteilt, ob der ermittelte Wert ein vordefiniertes Kriterium erfüllt;
eine Eignungs-Beurteilungseinheit, die so betrieben werden kann, dass sie auf Basis eines Vergleichs zwischen einer Versionsinformation des Computerprogramms und einer vordefinierten Versionsinformation (505b, 505c) beurteilt, ob das in der Speichereinheit (110) gespeicherte Computerprogramm (132) für den Inhalt geeignet ist; und
eine Aktualisierungseinheit (106), die so betrieben werden kann, dass sie:
das in der Speichereinheit gespeicherte Computerprogramm vor der Nutzung des Inhalts auf ein geeignetes Computerprogramm aktualisiert, wenn die Eignungs-Beurteilungseinheit zu einem negativen Urteil kommt, die Wert-Beurteilungseinheit jedoch zu einem positiven Urteil kommt; oder
das in der Speichereinheit gespeicherte Computerprogramm nach der Nutzung des Inhalts oder in einer Leerlaufzeit auf ein geeignetes Computerprogramm aktualisiert, wenn die Eignungs-Beurteilungseinheit zu einem negativen Urteil kommt und die Wert-Beurteilungseinheit zu einem negativen Urteil kommt.

2. Inhalt-Nutzungsvorrichtung (100, 1100, 120) nach Anspruch 1, wobei
die Wert-Beurteilungseinheit (471) eine Erzeugungszeit, zu der der Inhalt erzeugt wurde, als Information ermittelt, die den Wert repräsentiert, und zu einem positiven Urteil kommt, wenn die Erzeugungszeit innerhalb eines vorgegebenen Zeitraums von einer aktuellen Zeit aus liegt, und zu einem negativen Urteil kommt, wenn die Erzeugungszeit um mehr als einen vorgegebener Zeitraum von der aktuellen Zeit entfernt ist.

3. Inhalt-Nutzungsvorrichtung (100, 1100, 120) nach Anspruch 2, wobei die Wert-Beurteilungseinheit (471) die Erzeugungszeit ermittelt, indem sie die Erzeugungszeit von einem Inhalt-Aufzeichnungsmedium liest, auf dem der Inhalt gespeichert ist.

4. Inhalt-Nutzungsvorrichtung (100, 1100, 120) nach Anspruch 1, wobei die Wert-Beurteilungseinheit (471) eine Verkaufsmenge des Inhalts auf einem Markt des Inhalts als Information ermittelt, die den Wert repräsentiert, und zu einem positiven Urteil kommt, wenn die ermittelte Verkaufsmenge ein vorgegebener oder ein höherer Wert ist, und zu einem negativen Urteil kommt, wenn die ermittelte Verkaufsmenge niedriger ist als der vorgegebene Wert.

5. Inhalt-Nutzungsvorrichtung (100, 1100, 120) nach Anspruch 1, wobei die Wert-Beurteilungseinheit (471) eine Qualität des Inhaltes als Information ermittelt, die den Wert repräsentiert, und zu einem positiven Urteil kommt, wenn die ermittelte Qualität einen vorgegebenen oder einen höheren Wert anzeigt, und zu einem negativen Urteil kommt, wenn die ermittelte Qualität einen niedrigeren als den vorgegebenen Wert anzeigt.

6. Inhalt-Nutzungsvorrichtung (100, 1100, 120) nach Anspruch 5, wobei die Wert-Beurteilungseinheit (471) die Qualität ermittelt, indem sie die Qualität von einem Inhalt-Aufzeichnungsmedium liest, auf dem der Inhalt gespeichert ist.

7. Inhalt-Nutzungsvorrichtung (100, 1100, 120) nach einem der Ansprüche 1 bis 6, wobei
die Aktualisierungseinheit (106) ein Aktualisierungsprogramm bezieht, das eine Aktualisierungsprozedur für das Computerprogramm (132) einschließt, und das Computerprogramm (132) unter Verwendung des bezogenen Aktualisierungsprogramms aktualisiert.

8. Inhalt-Nutzungsvorrichtung (100, 1100, 120) nach Anspruch 7, wobei
in einer Server-Vorrichtung (400, 1400), die mit der Inhalt-Nutzungsvorrichtung über ein Netzwerk verbunden ist, das Aktualisierungsprogramm im Voraus gespeichert wird, und
die Aktualisierungseinheit (106) das Aktualisierungsprogramm von der Server-Vorrichtung über das Netzwerk bezieht.

9. Inhalt-Nutzungsvorrichtung (100, 1100, 120) nach Anspruch 7, wobei
auf einem Inhalt-Aufzeichnungsmedium, auf dem der Inhalt gespeichert ist, das Aktualisierungsprogramm im Voraus gespeichert wird, und
die Aktualisierungseinheit (106) das Aktualisierungsprogramm bezieht, indem sie das Aktualisierungsprogramm von dem Inhalt-Aufzeichnungsmedium liest.

10. Inhalt-Nutzungsvorrichtung (100, 1100, 120) nach einem der Ansprüche 1 bis 9, wobei
die Eignungs-Beurteilungseinheit zu einem positivem Urteil kommt, wenn das Computerprogramm dem Inhalt in geeigneter Weise entspricht.

11. Inhalt-Nutzungsvorrichtung (100, 1100, 120) nach einem der Ansprüche 1 bis 10, die des Weiteren umfasst:
eine Erfassungseinheit, die so betrieben werden kann, dass sie Einführen eines Inhalt-Speichermediums erfasst, auf dem der Inhalt gespeichert ist, wobei
die Wert-Beurteilungseinheit und die Eignungs-Beurteilungseinheit jeweils Beurteilungen durchführen, wenn die Erfassungseinheit das Einführen erfasst hat.

12. Inhalt-Nutzungsvorrichtung (100, 1100, 120) nach einem der Ansprüche 1 bis 11, wobei
die Aktualisierungseinheit (106) das Computerprogramm (132) aktualisiert, indem sie eine Programm-Einführung durchläuft, die wenigstens einen Prozess des Beziehens des Aktualisierungsprogramms und einen Prozess der Aktualisierung des Computerprogramms (132) einschließt, und
die Aktualisierungseinheit (106) enthält:
eine Teileinheit zum Beurteilen von Störung, die so betrieben werden kann, dass sie, wenn die Eignungs-Beurteilungseinheit zu einem negativen Urteil kommt und die Wert-Beurteilungseinheit zu einem negativen Urteil kommt, beurteilt, ob Ausführung aller Prozesse, die die Programm-Einführung bilden, einen Vorgang der Nutzung des Inhalts entsprechend dem Computerprogramm stört;
eine erste Ausführungs-Teileinheit, die so betrieben werden kann, dass sie den Prozess anhält, wenn die Teileinheit zum Beurteilen von Störung zu einem positiven Urteil kommt, und den Prozess ausführt, wenn die Teileinheit zum Beurteilen von Störung zu einem negativen Urteil kommt;
eine Teileinheit zum Beurteilen von Beendigung, die so betrieben werden kann, dass sie beurteilt, ob der Vorgang der Nutzung des Inhalts entsprechend dem Computerprogramm beendet worden ist; und
eine zweite Ausführungs-Teileinheit, die so betrieben werden kann, dass sie, wenn die Teileinheit zum Beurteilen von Beendigung zu einem positiven Urteil kommt, einen oder gegebenenfalls mehrere Prozesse aussetzt.

13. Inhalt-Nutzungsvorrichtung (100, 1100, 120) nach Anspruch 12, wobei die Programm-Einführung einen Verifizierungsprozess zum Verifizieren des Aktualisierungsprogramms und/oder einen Dekomprimierungsprozess zum Dekomprimieren des Aktualisierungsprogramms einschließt.

14. Inhalt-Nutzungsvorrichtung (100, 1100, 120) nach Anspruch 12 oder 13, wobei die Teileinheit zum Beurteilen von Störung eine vorhergesagte Zeit, die für die Prozessausführung als erforderlich vorhergesagt wurde und eine vorgegebene Zeit vergleicht, und zu einem positiven Urteil kommt, wenn die vorhergesagte Zeit länger ist als die vorgegebene Zeit.

15. Inhalt-Nutzungsvorrichtung (100, 1100, 120) nach Anspruch 14, wobei die Teileinheit zum Beurteilen von Störung die vorgegebene Zeit und die für die Ausführung des Prozesses des Beziehens als erforderlich vorhergesagte Zeit vergleicht.

16. Inhalt-Nutzungsvorrichtung (100, 1100, 120) nach Anspruch 14, wobei die Teileinheit zum Beurteilen von Störung die vorgegebene Zeit und die als für die Ausführung des Aktualisierungsprozesses erforderlich vorhergesagte Zeit vergleicht.

17. Inhalt-Nutzungsvorrichtung (100, 1100, 120) nach Anspruch 12, die mit einem Mikroprozessor ausgestattet ist, demgemäß jede der Einheiten arbeitet, und die einen Verfügbarkeitsgrad des Mikroprozessors berechnet, wobei
die Teileinheit zum Beurteilen von Störung zu einem positiven Urteil kommt, wenn der Verfügbarkeitsgrad ein vorgegebener oder höherer Wert ist.

18. Inhalt-Nutzungsvorrichtung (100, 1100, 120) nach Anspruch 12, wobei die Teileinheit zum Beurteilen von Beendigungen Beendigung von Verarbeitung entsprechend dem Computerprogramm erfasst und zu einem positiven Urteil kommt, wenn sie die Beendigung erfasst hat.

19. Inhalt-Nutzungsvorrichtung (100, 1100, 120) nach Anspruch 12, wobei die Teileinheit zum Beurteilen von Beendigung einen Vorgang des Abschaltens von Stromversorgung der Inhalt-Nutzungsvorrichtung erfasst, der von einem Benutzer durchgeführt wird, und zu einem positiven Urteil kommt, wenn sie den Vorgang erfasst hat.

20. Aktualisierungs-Steuerverfahren, das von einer Inhalt-Nutzungsvorrichtung verwendet wird, die einen Inhalt nutzt, wobei die Inhalt-Nutzungsvorrichtung eine Speichereinheit enthält, in der ein Computerprogramm gespeichert ist, das Nutzung des Inhalts steuert,
**gekennzeichnet durch**
eine Wert-Beurteilungsschritt, in dem ein Wert des Inhaltes ermittelt und beurteilt wird, ob der ermittelte Wert ein vordefiniertes Kriterium erfüllt;
eine Eignungs-Beurteilungsschritt, in dem auf Basis eines Vergleichs zwischen einer Versionsinformation des Computerprogramms und einer vordefinierten Versionsinformation (505b, 505c) beurteilt wird, ob das in der Speichereinheit gespeicherte Computerprogramm für den Inhalt geeignet ist; und
einen Aktualisierungsschritt, in dem:
das in der Speichereinheit (106) gespeicherte Computerprogramm (132) vor der Nutzung des Inhalts auf ein geeignetes Computerprogramm (132) aktualisiert wird, wenn die Eignungs-Beurteilungseinheit zu einem negativen Urteil kommt, die Wert-Beurteilungseinheit jedoch zu einem positiven Urteil kommt; oder
das in der Speichereinheit (106) gespeicherte Computerprogramm (132) nach der Nutzung des Inhalts oder zu einer Leerlaufzeit auf ein geeignetes Computerprogramm (132) aktualisiert wird, wenn die Eignungs-Beurteilungseinheit zu einem negativen Urteil kommt und die Wert-Beurteilungseinheit zu einem negativen Urteil kommt.

21. Aktualisierungs-Steuerprogramm, das in eine Inhalt-Nutzungsvorrichtung geladen wird, die einen Inhalt nutzt, wobei das Aktualisierungs-Steuerprogramm einen Computer veranlasst, die Schritte nach Anspruch 20 durchzuführen.

22. Aktualisierungs-Steuerprogramm nach Anspruch 21, das in einem computerlesbaren Programmaufzeichnungsmedium gespeichert ist.

## Revendications

1. Appareil d'utilisation de contenu (100, 1100, 120) qui utilise un contenu, comprenant:
une unité de stockage (110) pouvant fonctionner pour stocker en elle un programme d'ordinateur (132) qui commande l'utilisation du contenu,
**caractérisé par**
une unité d'estimation de valeur (471) pouvant fonctionner pour obtenir une valeur du contenu, et pour estimer si la valeur obtenue satisfait un critère prédéfini;
une unité d'estimation de convenance pouvant fonctionner pour estimer si le programme d'ordinateur (132) stocké dans l'unité de stockage (110) est convenable pour le contenu sur la base d'une comparaison entre une information de version du programme d'ordinateur et une information de version prédéfinie (505b, 505c); et
une unité de mise à jour (106) pouvant fonctionner pour:
mettre à jour le programme d'ordinateur stocké dans l'unité de stockage en un programme d'ordinateur convenable avant l'utilisation du contenu, lorsque l'unité d'estimation de convenance fait une estimation négative mais que l'unité d'estimation de valeur fait une estimation affirmative; ou
mettre à jour le programme d'ordinateur stocké dans l'unité de stockage en un programme d'ordinateur convenable après l'utilisation du contenu ou à un temps mort, lorsque l'unité d'estimation de convenance fait une estimation négative et que l'unité d'estimation de valeur fait une estimation négative.

2. Appareil d'utilisation de contenu (100, 1100, 120) de la revendication 1, dans lequel
l'unité d'estimation de valeur (471) obtient un temps de création auquel le contenu a été créé, comme information représentant la valeur, et fait une estimation affirmative lorsque le temps de création se trouve dans une période prédéterminée depuis un temps actuel, et fait une estimation négative lorsque le temps de création est supérieur à une période prédéterminée à partir du temps actuel.

3. Appareil d'utilisation de contenu (100, 1100, 120) de la revendication 2, dans lequel
l'unité d'estimation de valeur (471) obtient le temps de création en lisant le temps de création à partir d'un support d'enregistrement de contenu dans lequel est stocké le contenu.

4. Appareil d'utilisation de contenu (100, 1100, 120) de la revendication 1, dans lequel
l'unité d'estimation de valeur (471) obtient un volume des ventes du contenu dans un marché du contenu, comme information représentant la valeur, et fait une estimation affirmative lorsque le volume des ventes obtenu est une valeur prédéterminée ou plus, et fait une estimation négative lorsque le volume des ventes obtenu est inférieur à la valeur prédéterminée.

5. Appareil d'utilisation de contenu (100, 1100, 120) de la revendication 1, dans lequel
l'unité d'estimation de valeur (471) obtient une qualité du contenu, comme information représentant la valeur, et fait une estimation affirmative lorsque la qualité obtenue indique une valeur prédéterminée ou plus, et fait une estimation négative lorsque la qualité obtenue indique moins que la valeur prédéterminée.

6. Appareil d'utilisation de contenu (100, 1100, 120) de la revendication 5, dans lequel
l'unité d'estimation de valeur (471) obtient la qualité en lisant la qualité à partir d'un support d'enregistrement de contenu dans lequel est stocké le contenu.

7. Appareil d'utilisation de contenu (100, 1100, 120) de l'une quelconque des revendications 1 à 6, dans lequel
l'unité de mise à jour (106) obtient un programme de mise à jour comportant une procédure de mise à jour pour le programme d'ordinateur (132), et met à jour le programme d'ordinateur (132) en utilisant le programme d'ordinateur obtenu.

8. Appareil d'utilisation de contenu (100, 1100, 120) de la revendication 7, dans lequel
un appareil serveur (400, 1400) connecté à l'appareil d'utilisation de contenu à travers un réseau pré-stocke en lui le programme de mise à jour, et
l'unité de mise à jour (106) obtient le programme de mise à jour depuis l'appareil serveur à travers le réseau.

9. Appareil d'utilisation de contenu (100, 1100, 120) de la revendication 7, dans lequel
un support d'enregistrement de contenu dans lequel est stocké le contenu pré-stocke le programme de mise à jour, et
l'unité de mise à jour (106) obtient le programme de mise à jour en lisant le programme de mise à jour à partir du support d'enregistrement de contenu.

10. Appareil d'utilisation de contenu (100, 1100, 120) de l'une quelconque des revendications 1 à 9, dans lequel
l'unité d'estimation de convenance fait une estimation affirmative lorsque le programme d'ordinateur correspond de manière convenable au contenu.

11. Appareil d'utilisation de contenu (100, 1100, 120) de l'une quelconque des revendications 1 à 10, comprenant en outre
une unité de détection pouvant fonctionner pour détecter l'insertion d'un support d'enregistrement de contenu dans lequel est stocké le contenu, dans lequel
l'unité d'estimation de valeur et l'unité d'estimation de convenance effectuent respectivement une estimation lorsque l'unité de détection détecte l'insertion.

12. Appareil d'utilisation de contenu (100, 1100, 120) de l'une quelconque des revendications 1 à 11, dans lequel
l'unité de mise à jour (106) met à jour le programme d'ordinateur (132) en subissant une introduction de programme qui comporte au moins un processus d'obtention du programme de mise à jour et un processus de mise à jour du programme d'ordinateur (132), et
l'unité de mise à jour (106) comporte:
une sous-unité d'estimation de dérangement pouvant fonctionner pour estimer, lorsque l'unité d'estimation de convenance fait une estimation négative et l'unité d'estimation de valeur fait une estimation négative, si l'exécution de chaque processus constituant l'introduction de programme dérange une opération de l'utilisation de contenu selon le programme d'ordinateur;
une première sous-unité d'exécution pouvant fonctionner pour mettre en attente le processus lorsque la sous-unité d'estimation de dérangement fait une estimation affirmative, et pour exécuter le processus lorsque la sous-unité d'estimation de dérangement fait une estimation négative;
une sous-unité d'estimation de fin pouvant fonctionner pour estimer si l'opération d'utilisation du contenu selon le programme d'ordinateur a pris fin ou non; et
une seconde sous-unité d'exécution pouvant fonctionner pour exécuter un ou plusieurs processus, s'il y en a, mis en attente, lorsque la sous-unité d'estimation de fin fait une estimation affirmative.

13. Appareil d'utilisation de contenu (100, 1100, 120) de la revendication 12, dans lequel
l'introduction de programme comporte les deux ou l'un parmi un processus de vérification consistant à vérifier le programme de mise à jour et un processus de décompression consistant à décompresser le programme de mise à jour.

14. Appareil d'utilisation de contenu (100, 1100, 120) de la revendication 12 ou 13, dans lequel
la sous-unité d'estimation de dérangement compare un temps prédit que l'on prédit comme étant nécessaire pour l'exécution de processus et un temps prédéterminé, et fait une estimation affirmative lorsque le temps prédit est plus long que le temps prédéterminé.

15. Appareil d'utilisation de contenu (100, 1100, 120) de la revendication 14, dans lequel
la sous-unité d'estimation de dérangement compare le temps prédéterminé et le temps prédit que l'on prédit comme étant nécessaire pour l'exécution du processus d'obtention.

16. Appareil d'utilisation de contenu (100, 1100, 120) de la revendication 14, dans lequel
la sous-unité d'estimation de dérangement compare le temps prédéterminé et le temps prédit que l'on prédit comme étant nécessaire pour l'exécution du processus de mise à jour.

17. Appareil d'utilisation de contenu (100, 1100, 120) de la revendication 12, étant équipé d'un microprocesseur selon lequel chacune des unités fonctionne, et calculant un rapport de fonctionnement du microprocesseur, dans lequel
la sous-unité d'estimation de dérangement fait une estimation affirmative lorsque le rapport de fonctionnement est une valeur prédéterminée ou plus.

18. Appareil d'utilisation de contenu (100, 1100, 120) de la revendication 12, dans lequel
la sous-unité d'estimation de fin détecte la fin d'un traitement selon le programme d'ordinateur, et fait une estimation affirmative lorsqu'elle détecte la fin.

19. Appareil d'utilisation de contenu (100, 1100, 120) de la revendication 12, dans lequel
la sous-unité d'estimation de fin détecte une opération d'extinction de l'alimentation électrique à l'appareil d'utilisation de contenu exécutée par un utilisateur, et fait une estimation affirmative lorsqu'elle détecte l'opération.

20. Procédé de commande de mise à jour utilisé par un appareil d'utilisation de contenu qui utilise un contenu, l'appareil d'utilisation de contenu comportant une unité de stockage qui stocke en elle un programme d'ordinateur qui commande l'utilisation du contenu
**caractérisé par**
une étape d'estimation de valeur qui consiste à obtenir une valeur du contenu, et estimer si la valeur obtenue satisfait un critère prédéfini;
une étape d'estimation de convenance qui consiste à estimer si le programme d'ordinateur stocké dans l'unité de stockage est convenable pour le contenu sur la base d'une comparaison entre une information de version du programme d'ordinateur et une information de version prédéfinie (505b, 505c); et
une étape de mise à jour qui consiste à:
mettre à jour le programme d'ordinateur (132) stocké dans l'unité de stockage (106) en un programme d'ordinateur convenable (132) avant l'utilisation du contenu, lorsque l'unité d'estimation de convenance fait une estimation négative mais que l'unité d'estimation de valeur fait une estimation affirmative; ou
mettre à jour le programme d'ordinateur (106) stocké dans l'unité de stockage (106) en un programme d'ordinateur convenable (132) après l'utilisation du contenu ou à un temps mort, lorsque l'unité d'estimation de convenance fait une estimation négative et que l'unité d'estimation de valeur fait une estimation négative.

21. Programme de commande de mise à jour chargé dans un appareil d'utilisation de contenu qui utilise un contenu, ledit programme de commande de mise à jour amenant un ordinateur à exécuter les étapes de la revendication 20.

22. Programme de commande de mise à jour de la revendication 21, qui est stocké dans un support d'enregistrement de programme lisible par ordinateur.
